# EUROPÄISCHE PATENTSCHRIFT

(11) **EP 2 456 973 B1**
(45) Veröffentlichungstag und Bekanntmachung des Hinweises auf die Patenterteilung: **22.11.2017**
(21) Anmeldenummer: 10741899.8
(22) Anmeldetag: 09.07.2010
(51) Int. Cl.: F03D 1/00

(54) **VERFAHREN UND VORRICHTUNG ZUM TRANSPORT UND ZUR MONTAGE VON WINDKRAFTANLAGEN**
METHOD AND DEVICE FOR TRANSPORTING AND FOR ASSEMBLING WIND TURBINES
PROCÉDÉ ET DISPOSITIF PERMETTANT LE TRANSPORT ET LE MONTAGE D'ÉOLIENNES

(30) Priorität: 20.07.2009 DE 102009034114; 04.03.2010 DE 102010010297
(43) Veröffentlichungstag der Anmeldung: 30.05.2012
(73) Patentinhaber: Wader-Wittis GmbH, 42477 Radevormwald (DE)
(72) Erfinder: BEHR, Peter, 22339 Hamburg (DE); WADER, Jochen, 42477 Radevormwald (DE)
(74) Vertreter: Wetzel, Philipp
(86) Internationale Anmeldenummer: PCT/EP2010/004192
(87) Internationale Veröffentlichungsnummer: WO 2011/009538

(56) Entgegenhaltungen:
- EP-A1- 1 849 719
- EP-A2- 1 813 473
- WO-A1-2006/000230
- WO-A2-02/04321
- WO-A2-2007/093854

## Beschreibung

Die Erfindung betrifft eine Verbindungsvorrichtung, einen Tragbalken, einen Transportrahmen, ein Transportsystem und ein Montagesystem, ein Befestigungssystem sowie ein Verfahren für den Transport und die Montage von Komponenten einer Windkraftanlage.

Bedingt durch die steigende Nutzung erneuerbarer Energien wird eine Vielzahl von immer größer werdenden Windkraftanlagen errichtet. Dieses geschieht sowohl Onshore als auch Offshore. Anlagen mit einer Leistung von mehr als 5 MW und Nabenhöhen von über 100 Metern sind heutzutage möglich. Ausschlaggebend für die wirtschaftliche Nutzung von Windenergie sind unter anderem die Kosten, die bei der Errichtung der Anlage sowie bei dem Transport der einzelnen Anlagenkomponenten entstehen. Eine Vielzahl von Herstellern von Windkraftanlagen bezieht seine Komponenten teilweise aus eigener Herstellung und teilweise von Zulieferbetrieben, die weltweit angesiedelt sind. Hierbei ist ein kostengünstiger und sicherer Transport zu gewährleisten.

Aufgrund der großen Anzahl von Herstellern und Zulieferbetrieben, die häufig als kleine Betriebe begonnen haben, sind individuelle Transportsysteme teilweise herstellerspezifisch entwickelt worden. Beispiele für verschiedene Transportsysteme sind in der WO2007/093854 oder in der EP-A-1 813 473 offenbart. Bei der Montage der einzelnen Komponenten, hier insbesondere der Rotorflügel und der Turmsegmente des Turms der Windkraftanlage, treten zusätzlich Schwierigkeiten bei der Montage aufgrund der Größe der einzelnen Komponenten auf. Um eine dauerhafte Verbindung zwischen den einzelnen Komponenten erzeugen zu können, sind diese mit Gewindestiften versehen, die in Öffnungen der darunter liegenden Elemente und Komponenten eingesetzt werden und dann mittels Schraubverbindungen dauerhaft befestigt werden. Durch die immer weiter zunehmende Nabenhöhe steigen die Durchmesser der einzelnen Turmsegmente und auch die Länge der Turmsegmente vergrößert sich teilweise. Dadurch wird es bei der Montage notwendig, immer größere Kräne einzusetzen. Aufgrund der zuvor beschriebenen Gewindestifte ist es komplex, diese Gewindestifte in die darunter liegenden Öffnungen einzusetzen, ohne dass die Gewindestifte beschädigt werden, da die Elemente bedingt durch die Umweltbedingungen, insbesondere Wind, in Bewegung geraten. Es muss daher entweder ein besonders windstilles Zeitfenster zur Montage abgepasst werden, was die Montage gegebenenfalls verlängert, und das Montieren selbst ist Präzisionsarbeit und damit aufwendig, was ebenfalls zur längeren Montagezeiten führt. Die Montagekosten sind dabei durch die Krankosten besonders beeinflusst, da bei Nabenhöhen von 100 und mehr Metern riesige Spezialkräne eingesetzt werden müssen, die hohe Stundeneinsatzpreise haben.

Probleme treten bei dem Transport und der Montage von Rotorblättern für die Windkraftanlagen auf. Das Anschließen erfolgt wie bei den Turmsegmenten ebenfalls über am Ende des Rotors vorgesehene Gewindestifte, die verschraubt werden. Auch hierbei tritt die zuvor beschriebene Einführproblematik auf. Des Weiteren sind die Rotorblätter aus Kunststoffen in einer Hochpräzisionsweise hergestellt. Leider werden die Rotorblätter beim Transport häufig beschädigt, da die verwendeten Lagersysteme nicht optimal auf die Rotorblätter abgestimmt sind, da sich hier häufig an Standardsysteme zum Transport von Containern angelehnt wird.

Eine weitere Schwierigkeit tritt bei der Demontage von Komponenten einer Windkraftanlage auf. Die Demontage ist aufwendig und zeitintensiv und damit teuer. Unter anderem werden Kräne benötigt, die an die Komponente Angeschlagen werden. Erst dann kann ein Lösen der Verbindungselemente vorgenommen werden, was Zeit kostet. Dieses Problem tritt unter anderem dann auf, wenn beispielsweise Rotorblätter von Blitzschlag beschädigt wurden oder die gesamte Gondel oder der gesamte Rotor gewechselt werden müssen. Hierbei soll die Stillstandszeit minimiert werden, damit der Verlust an Einsatzzeit der Windkraftanlage niedrig gehalten wird.

Bekannt war des Weiteren bisher, dass nicht fest am Bauteil angeordnete Gewindestifte verwendet werden. Die Bauteile sind mit Flanschen versehen, die Bohrungen aufweisen, in die, nachdem die Bauteile fluchtend übereinander angeordnet sind, die Gewindestifte von Hand eingesetzt werden. Anschließend wird jeder Gewindestift mit einer Mutter verschraubt. Die Gewindestifte, die bis zu 12 kg und mehr pro Stück wiegen, werden mit dem Mutterkopf oben in die Bohrungen eingesetzt, damit sie, für den Fall, dass sich die Mutter löst, nicht aus der Bohrung herausfallen können. Das Verschrauben der Muttern muss somit über Kopf von Hand erfolgen. Des Weiteren müssen pro Bauteil 100 und mehr Gewindestifte eingesetzt werden. Es ist also eine entsprechende Logistik notwendig, die Gewindestifte pro Bauteil bereit zu stellen. Die Gewindestifte müssen in Gebinde vorbereitet, zum Errichtungsort geliefert und mit Kran zum Errichtungsort (evtl. Zusammen mit dem Bauteil) angehoben werden. Die Gebinde müssen dann vom Kran getrennt und zwischengelagert werden. Aus den Gebinden werden dann die Schrauben einzeln entnommen und in die Bohrungen eingesetzt und per Hand mit Schlagschrauber verschraubt.

Der Erfindung liegt somit die Aufgabe zugrunde, ein Verfahren, ein System und Vorrichtungen bereit zu stellen, mit denen die Komponenten von Windkraftanlagen kostengünstig und sicher vom Herstellungsort zum Montageort transportiert werden können und, ohne einen Systemwechsel vornehmen zu müssen, auch zur Montage der Komponenten verwendet werden können. Dabei ist es wünschenswert, dass die Montage der Komponenten sicher, schnell und kostengünstig durchgeführt wird. Gleiches soll auch für eine evtl. Demontage gelten. Des weiteren liegt der Erfindung die Aufgabe zugrunde, ein Befestigungssystem und Verfahren bereit zu stellen, bei dem der logistische Aufwand für das Verbinden der Bauteile der Windkraftanlage reduziert wird, und der Zeitaufwand sowie der Arbeitsaufwand für das Verbinden der Bauteile der Windkraftanlage reduziert wird.

Die erfindungsgemäße Aufgabe wird gelöst durch ein Transportsystem und ein Montagesystem, das eine erfindungsgemäße Verbindungsvorrichtung, mit den Merkmalen des Anspruchs 1 aufweist, einen erfindungsgemäßen Tragbalken und einen erfindungsgemäßen Tragrahmen aufweist und ein Transport- bzw. Montagesystem mit den Merkmalen der entsprechenden abhängigen Ansprüche. Des Weiteren wird ein entsprechendes Verfahren mit den Merkmalen des Anspruchs 13 dargestellt. Bei der Verbindungsvorrichtung sieht die Erfindung vor, dass die Verbindungsvorrichtung für den Transport und die Montage und für die Demontage von Komponenten von Windkraftanlagen derart ausgeführt ist, dass ein männliches Element und ein korrespondierendes weibliches Element vorgesehen sind, die miteinander verbindbar sind, dass ein Führungselement und ein Aufnahmekörper vorgesehen sind, wobei das Führungselement einen Führungsstift aufweist, der in eine Öffnung des Aufnahmekörpers einsetzbar ist, der Führungsstift ein Zentrierungselement aufweist, über das beim Einsetzen des männlichen Elements in das weibliche Element die Elemente fluchtend verbunden werden, und dass eine Verriegelung vorgesehen ist, durch die eine haltende Wirkung zwischen den Elementen erzeugbar ist. Durch das Führungselement und das Aufnahmeelement ist es möglich, auf einfache Weise eine direkte fluchtende Anordnung der beiden Elemente übereinander zu erzielen, so dass Komponenten, die mit dieser Verbindungsvorrichtung ausgestattet sind, ohne großartigen dirigierenden Aufwand, sei es durch Seilwinden oder menschlichen Einsatz, miteinander verbunden werden können. Gleichzeitig können Verbindungsmittel, die an diesen Elementen vorgesehen sind, wie beispielsweise Gewindestifte, oder Bohrungen, in die Gewindestifte oder Schrauben eingesetzt werden, entweder fluchtend übereinander zum Liegen kommen oder ohne Beschädigungen ineinander eingesetzt werden. Dieses erfolgt dabei gleichzeitig schnell und sicher, so dass Kraneinsatzzeiten durch das Dirigieren der Komponenten vermieden werden.

Eine vorteilhafte Lehre der Erfindung sieht vor, dass das Zentrierungselement des Führungsstiftes ein Konus ist, der bevorzugt auf einem Grundkörper angeordnet ist. Durch die konische Spitze des Führungsstiftes ist es auch bei beispielsweise durch Windeinwirkung herbeigeführtem Versatz der Komponenten zueinander möglich, das weibliche und das männliche Element passend miteinander zusammenzuführen, da lediglich die Spitze des Konus, der mit seiner gesamten Höhe über ebenfalls angeordnete Gewindestifte hinaussteht, in den Aufnahmekörper bzw. dessen Öffnung einzugreifen, und damit die Position der zu montierenden Komponenten auszugleichen und passend zu korrigieren.

Eine weitere Lehre der Erfindung sieht vor, dass die Verriegelung einen beweglichen Stift aufweist, der an seinem einen Ende eine Nase aufweist, und/oder der über eine Feder mit einer Federkraft beaufschlagbar ist, die der Bewegung des Stiftes entgegenwirkt. Weiterhin ist vorteilhaft, dass die Nase in eine Vertiefung im Führungsstift haltend eingreift. Tritt der Konus bzw. der Führungsstift in den Aufnahmekörper ein, an dem die Verriegelung vorgesehen ist, so wird der Stift zusammen mit der Nase gegen die Federkraft nach außen geschoben, bis die Vertiefung am Führungsstift erreicht ist und die Federkraft die Nase des Stiftes in die Vertiefung hineindrückt. Durch die Spitze und die von der Feder erzeugte Federkraft tritt eine haltende, form- und kraftschlüssige Verbindung zwischen den Komponenten auf, die einen vorläufigen Charakter aufweist, allerdings hinreichend stark ist, dass das auf diese Weise montierte Element von dem Kran gelöst werden kann und es sicher in seiner montierten Position verbleibt, so dass der Kran, obwohl noch keine Verschraubung der Komponenten herbeigeführt worden ist, bereits vorbereitet werden kann, um die nächste Komponente aufzunehmen. Auf diese Weise wird die Kraneinsatzzeit reduziert. Gleiches gilt für die Demontage von Komponenten. Durch ein vorab mögliches Lösen der Verbindungen zwischen der zu wechselnden Komponente und dem restlichen Turm, während der die Komponente noch sicher durch die Verriegelung gehalten wird, kann sowohl Kranzeit gespart werden, als auch Stillstandszeit reduziert werde, bis die Windkraftanlage wieder einsetzbar ist.

Eine weitere Lehre der Erfindung sieht vor, dass die Elemente Bohrungen und/oder Gewindestifte aufweisen, über die eine haltende Verbindung zwischen den Elementen erzeugbar ist. Mittels Aufsteckmuffen und Muttern werden die Gewindestifte bzw. die in die Bohrungen eingesetzten Gewindestifte verspannt, so dass eine permanente, haltende Verbindung zwischen den Komponenten erzeugt wird.

Eine weitere Komponente des erfindungsgemäßen Transport- bzw. Montagesystems ist ein Tragbalken zum Transport und zur Montage von Komponenten von Windkraftanlagen mit einem Auflageelement, an dem wenigstens eine Führung angeordnet ist, mit einem Endstück, das mit dem Aufnahmeelement verbunden ist, wobei das Endstück ein Verbindungselement aufweist, das mit dem Führungselement und/oder dem Aufnahmekörper der zuvor beschriebenen Verbindungsvorrichtung korrespondiert.

Durch das Einsetzen des Transportbalkens in eines der Elemente des Verbindungssystems wird es auf einfache Weise möglich, eine haltende und sichere Verbindung der Komponente der Windkraftanlage mit einem Transportrahmen, der auf einem Transportmittel, wie einem LKW oder Schiff, vorgesehen ist, herbeizuführen. Vorteilhaft bei dem Transportbalken ist, dass das Endstück mit dem Aufnahmeelement über ein gegenüber dem Aufnahmeelement verschiebbaren Element verbunden ist, so dass die Länge des Tragbalkens einstellbar ist in Abhängigkeit des Durchmessers der Komponente der Windkraftanlage. Hierdurch wird auf einfache Weise eine Flexibilität im Hinblick auf die unterschiedlichen Größen der Windkraftanlagenkomponenten der einzelnen Hersteller bereitgestellt.

Weiterhin ist vorteilhaft, dass am Endstück ein Verbindungselement vorgesehen ist, an dem ein Hebemittei, beispielsweise ein Kranseil, anschlagbar ist, wobei das Endstück bevorzugt so ausgeführt ist, dass das Hebemittel gegenüber dem Verbindungselement über eine Drehbewegung beweglich ist. Auf diese Weise wird es möglich, die Komponenten sicher anzuheben und rotierend aus einer liegenden Position in eine aufrechte Position zu verschwenken. Die Komponente kann dabei zwischen den Hebemitteln hindurch gedreht werden. Dieses erleichtert auch die Montage der Komponente.

Als weitere Komponente des erfindungsgemäßen Transportsystems sieht die Erfindung einen Transportrahmen zur Aufnahme einer Komponente einer Windkraftanlage mit einem männlichen oder weiblichen Element der zuvor beschriebenen Verbindungsvorrichtung vor, oder mit einer im Aufnahmeelement zur Aufnahme eines zuvor beschriebenen Transportbalkens vor, wobei bevorzugt das Auflageelement des Transportbalkens in ein Aufnahmeelement des Transportrahmens einsetzbar ist und/oder besonders bevorzugt das Aufnahmeelement einen Abschnitt zur haltenden Aufnahme einer Führung, die unter anderem am Aufnahmeelement vorgesehen sein kann, aufweist. Ein solcher Transportrahmen, der insbesondere so ausgelegt ist, dass er die bei einem Schiffstransport auftretenden Belastungen durch das Fahren des Schiffes im Seegang so aufnimmt und ableitet, dass die Komponente nicht beschädigt wird, ermöglicht ein schnelles Anordnen der Komponenten im Transportrahmen und damit auch ein schnelles Stauen der Komponenten an Bord eines Schiffes oder auf einem LKW. Eine vorteilhafte Lehre der Erfindung sieht vor, dass der Transportrahmen ein Basiselement aufweist, das über ein Verbindungsmittel, bevorzugt ein Twistlock, mit einer Aufnahme eines darunter liegenden Elements lösbar verbindbar ist. Bei einem darunter liegenden Element kann es sich beispielsweise um einen Ladeboden eines Schiffes oder LKWs mit den dazugehörigen Aufnahmeelementen handeln, oder auch um ein darunter angeordnetes weiteres Aufnahmeelement, da eine bevorzugte Ausführungsform der Erfindung vorsieht, dass die Transportrahmen aufeinander über Verbindungsmittel, wie beispielsweise Twistlocks, verbindbar sind. Eine weitere Lehre der Erfindung sieht vor, dass die Aufnahme am Transportrahmen vertikal und/oder horizontal verschiebbar ist und dass die Basis aus einem beispielsweise an Bord eines Schiffes oder eines LKWs angeordnetes Grundelements verschiebbar anordbar ist. Das Grundelement, bei dem es sich beispielsweise um einen 20-Fuß-Containergrundrahmen handelt, kann dabei entweder bereits an Bord angeordnet sein oder Bestandteil des Transportrahmens werden. Die Verschiebbarkeit der Aufnahmeelemente und die Verschiebbarkeit des Transportrahmens gegenüber einem Grundkörper ermöglicht ein Anpassen des Transportsystems auf unterschiedliche Durchmesser und Längen bzw. Größen der Komponenten.

Eine weitere Lehre der Erfindung sieht vor, dass der Transportrahmen ein Auflager und/oder ein Lagerelement zur lösbaren Aufnahme eines Rotorelements aufweist und/oder dass der Transportrahmen wenigstens zweiteilig aufgebaut ist, wobei die Teile voneinander lösbar sind und die lösbare Verbindung über Verbindungsmittel, bevorzugt Twistlocks, herstellbar ist. Ein derartiger Aufbau erleichtert das Stauen von Rotorflügeln, da der Rotorflügel direkt von oben in den unteren Teil des Transportrahmens auf das Auflager aufgelegt werden kann, anschließend das Lagerelement darüber angeordnet werden kann, so dass eine haltende Verbindung des Rotors zwischen Lagerelement und Auflager erzeugt wird, und danach der Transportrahmen durch ein oberes Teil geschlossen wird, so dass der Rahmen eine stabile Verbindung darstellt und auf diesem ein weiterer Transportrahmen angeordnet werden kann. Lagerelement und Auflager sind dabei aus Stoffen wie beispielsweise Kunststoff oder anderen elastischen Stoffen bevorzugt hergestellt, damit eine Beschädigung des Rotorflügels durch Transportbewegungen vermieden wird. Durch das Vorsehen von weiteren Erhöhungskomponenten kann der Transportrahmen für unterschiedlich große Rotorblätter durch dann unterschiedliche Auflageelemente und Lagerelemente angepasst werden.

Eine vorteilhafte Ausführungsform der Erfindung sieht vor, dass zum Transport von Rotorblättern ein vorderer und ein hinterer Transportrahmen vorgesehen sind, wobei es sich bei dem vorderen Transportrahmen, wobei vorne hier in Fahrtrichtung bedeutet, um einen Doppelrahmen und bei dem hinteren Transportrahmen um einen Einzelrahmen handelt. Der hintere Einzelrahmen, bei dem es sich bevorzugt um den zuvor beschriebenen nach oben zu öffnenden Transportrahmen handelt, wird ungefähr bei einem Verhältnis von 1/3 zur Rotorblattspitze und 2/3 zum unteren Ende des Rotorblatts angeordnet. Bisher wurden in Fahrtrichtung Einzelrahmen und auf Rotorblattseite Doppelrahmen verwendet, was aber zu Beschädigungen geführt hat, da der Einzelrahmen nicht in der Lage war, abrupte Geschwindigkeitsänderungen bei Abbremsungen aufzunehmen, wodurch dieser sich verformte und die Kraftaufnahme im Doppelrahmen erfolgte. Dadurch kam es zu Verkantungen des Rotorblattes im Doppelrahmen und zu Beschädigungen des Rotorrahmens. Dieses wird durch den erfindungsgemäßen vorderen und hinteren Transportrahmen vermieden.

Mit dem erfindungsgemäßen Transportsystem und dem erfindungsgemäßen Montagesystem, die auf die zuvor beschriebenen Komponenten zurückgreifen, wird es möglich, den Transport und die Montage von Komponenten einer Windkraftanlage insbesondere Turmsegmente, Rotorflügel, Gondeln oder Naben der Gondeln kostengünstig, schnell und sicher durchzuführen.

Bei einem beispielhaften, nicht zur Erfindung gehörenden Befestigungssystem handelt es sich um ein Befestigungssystem zum Verbinden zweier Bauteile einer Windkraftanlage mit einem Gewindestift zum Einsetzen in eine in den Bauteilen vorgesehene Bohrung und mit einer mit dem Gewindestift in Verbindung zu bringenden Mutter, die so ausgelegt sind, dass über sie ein Anteil der Verbindungskraft zwischen den beiden Bauteilen in verbundenem Zustand bereit gestellt wird. Dabei ist ein Arretiermittel zum Anbringen an dem Gewindestift vorgesehen, dessen

Innendurchmesser so ausgeführt ist, dass der Gewindestift in dem Arretiermittel arretiert ist, und der Innendurchmesser des Arretiermittels in Verbindung mit der Höhe des Arretiermittels und dem Außendurchmesser des Arretiermittels so dimensioniert ist, dass das Arretiermittel den Gewindestift wenigstens gegen die Schwerkraft in der Öffnung hält. Bevorzugt wird eine höhere Auslegung gegen Stoßbelastung auf den Gewindestift vorgesehen.

Durch diese Befestigungsvorrichtung wird auf einfache Weise eine Trennung von Montage der Bauteile der Windkraftanlage und Vorbereitung zur Montage bewirkt. Gleichzeitig wird der logistische Aufwand bei der Montage reduziert, weil lediglich die Muttern der Befestigungsvorrichtung zum Montageort im Turm befördert werden müssen und nicht mehr zusätzlich auch noch die Gewindestifte. Gleichzeitig müssen am Montageort auch nur noch die Muttern zur Montage angefasst werden. Dieses reduziert die Montagezeit, weil die Gewindestifte nicht mehr in die Bohrungen eingesetzt werden müssen, erheblich. Eine weitere Lehre der Erfindung sieht vor, dass das Arretiermittel aus Kunststoff oder Gummi besteht und/oder kompressierbar und/oder elastisch ist. Dadurch lässt sich das Arretiermittel besser auf den Gewindestift aufbringen und es kann eine höhere haltende Kraft erzeugt werden. Eine weitere Lehre der Erfindung sieht vor, dass der Gewindestift eine radial umlaufende Vertiefung zur Aufnahme des Arretiermittels aufweist. Hierdurch kann neben dem Kraftschluss auch noch eine Erhöhung der haltenden Kraft durch Formschluss erreicht werden.

Eine weitere Lehre der Erfindung sieht vor, dass das Arretiermittel ein Zentriermittel ist, das als eine Hülse ausgeführt ist, deren Innendurchmesser so ausgeführt ist, dass der Gewindestift in dem Zentriermittel arretiert ist, und deren Außendurchmesser so ausgeführt ist, dass die Hülse in einer korrespondierenden Öffnung der Komponente arretiert ist, und die Höhe des Zentriermittels in Verbindung mit dem Innen- und/oder Außendurchmesser der Hülse so dimensioniert ist, dass das Zentriermittel und der Gewindestift wenigstens gegen die Schwerkraft in der Öffnung gehalten wird.

Eine weitere Lehre der Erfindung sieht vor, dass die äußere und/oder innere Oberfläche der Hülse eine gewellte und/oder gezackte Oberfläche aufweist. Dieses bewirkt eine Krafterhöhung durch die Verzahnung der Oberflächen. Gleichzeitig wird eine Verformbarkeit erreicht, wodurch ein leichteres Einführen bei gleicher oder sogar höherer haltender Kraft bewirkt wird.

Des Weiteren wird die erfindungsgemäße Aufgabe durch ein Verfahren zum Transport und zur Montage von Komponenten einer Windkraftanlage gelöst. Dieses Verfahren sieht die Schritte vor: Vorsehen von Elemente einer Verbindungsvorrichtung an einer der Komponenten, Verbinden der Elemente mit einem korrespondierenden Tragbalken und Anordnen des Tragbalkens an einem korrespondierenden Tragrahmen oder Verbinden der Komponente mit einem korrespondierenden Tragrahmen, Verladen der Komponente mit dem entsprechenden Tragrahmen auf ein Transportmittel (beispielsweise Lkw oder Schiff), Transport der verladenen Komponenten mit Hilfe des Transportmittels zum Errichtungsort, Aufnehmen der Komponenten mit einer Hebevorrichtung, bevorzugt einem Kran, durch Anschlagen eines Hebemittels, bevorzugt eines Kranseils, an dem Transportbalken und/oder einem Befestigungselement an der Komponente, Anordnen der Komponente im Montagebereich, so dass das Element an der Komponente einem korrespondierenden Element an einem bereits montierten Bestandteil der Windkraftanlage gegenübersteht, Zentrieren des zu montierenden Elements gegenüber dem bereits montierten Element durch Einführen des Führungsstifts des Führungselements in einen Aufnahmekörper des Elements am bereits montierten Element (oder bei umgekehrt vorgesehenen Elementen entsprechend), bis die Elemente zum Aufliegen kommen, und Verbinden der Elemente mit geeigneten Verbindungselementen, wie beispielsweise Schrauben, Muttern, Gewindestifte, Aufsteckhülsen.

Eine vorteilhafte Lehre der Erfindung sieht vor, dass eine Verriegelung an einem der Elemente vorgesehen ist, die mit dem korrespondierenden Element eine wenigstens vorläufig haltende Verbindung erzeugt. Vorteilhaft dabei ist, dass die Verbindung zwischen dem Führungsstift des Führungselements und einer Vertiefung im Führungsstift des Führungselements entsteht. Eine weitere vorteilhafte Ausführungsform der Erfindung sieht vor, dass das Haltemittel und/oder der Transportbalken nach Erfolg der vorläufigen haltenden Verbindung durch die Verriegelung von der gerade montierten Komponente der Windkraftanlage gelöst wird, bevor oder während die Komponenten mit Verbindungsmitteln mit der bereits montierten Komponente dauerhaft verbunden werden.

Durch die zuvor beschriebenen Verbindungsschritte wird es insbesondere durch die vorläufige Verriegelung möglich, die Kraneinsatzzeit zu minimieren und eine sichere Montage und sichere Verbindung der Elemente sowie einen sicheren Transport der Komponenten bereitzustellen.

Des Weiteren wird die erfindungsgemäße Aufgabe durch ein Verfahren zur Montage von Bauteilen einer Windkraftanlage, bei dem an einer Seite eines ersten zu verbindenden Bauteils ein erster Teil einer Verbindungsvorrichtung vorgesehen wird, und an einer Seite eines zweiten zu verbindenden Bauteils ein zweiter Teil der Verbindungsvorrichtung vorgesehen wird, wobei ein Teil der Verbindungsvorrichtung einen Führungskörper und der andere Teil der Verbindungsvorrichtung einen Aufnahmekörper aufweist, wobei wenigstens einer der Teile einen Flansch aufweist, der Bohrungen zum Einsetzen von Gewindestiften aufweist, und bei dem das Zusammenfügen der Bauteile derart erfolgt, dass die Bauteile in Flucht gebracht werden, indem der Führungskörper in den korrespondierenden Aufnahmekörper eingeführt wird, und die Verbindung der Komponenten über ein Befestigungssystem, bevorzugt nach dem zuvor beschriebenen Befestigungssystem, aufweisend wenigstens einen Gewindestift, eine Mutter und ein Arretiermittel, erzeugt wird, wobei der Gewindestift in das Arretiermittel eingesetzt wird und das Arretiermittel in die Bohrung des Flansches eingesetzt wird, bevor die Komponenten in Flucht gebracht werden.

Durch die Verbindungsvorrichtung werden die Bauteile auf einfache Weise fluchtend zusammengeführt und gehalten. Anschließend kann in Ruhe die Befestigung der Bauteile vorgenommen werden. Dieses erfolgt besonders einfach und schnell, da die erfindungsgemäße Befestigungsvorrichtung eingesetzt wird. Dafür wird der Gewindestift mit dem Arretiermittel in das Bauteil eingesetzt zu einem Zeitpunkt, an dem dieses ohne Schwierigkeiten vor dem fluchtenden Zusammenführen erfolgt.

Eine weitere Lehre der Erfindung sieht vor, dass das Arretiermittel vor dem Transport der Komponente zum Errichtungsort der Windkraftanlage oder vor dem Anheben der Komponente am Errichtungsort der Windkraftanlage in die Bohrung eingesetzt wird. Hierdurch wird Montagezeit eingespart, da diese Arbeiten dezentral vor der Montage ausgeführt werden können. Gleichzeitig entfällt der notwendige Logistische Aufwand, die Gewindestifte mit dem Bauteil zusammen zum Montageort auf den entstehenden Turm der Windkraftanlage zu befördern. Eine weitere bevorzugte Lehre der Erfindung sieht vor, dass der Gewindestift vor dem Transport der Bauteile zum Errichtungsort der Windkraftanlage oder vor dem Anheben der Bauteile am Errichtungsort der Windkraftanlage in das Arretiermittel eingesetzt wird, oder dass das Arretiermittel mit dem in das Arretiermittel eingesetzten Gewindestift vor dem Transport der Bauteile zum Errichtungsort der Windkraftanlage oder vor dem Anheben der Komponente am Errichtungsort der Windkraftanlage in die Bohrung eingesetzt wird. Das Einsetzen kann dadurch orts- und auch klima-/wetterunabhängig erfolgen.

Eine weitere Lehre der Erfindung sieht vor, dass das Arretiermittel so in den Flansch der Bauteile eingesetzt wird, dass das Arretiermittel den Gewindestift gegen die Schwerkraft in der Bohrung arretiert und/oder dass das Arretiermittel in die Bohrung des Flansches in den Teil der Verbindungsvorrichtung eingesetzt wird, die den Führungskörper aufweist, und/oder dass das Arretiermittel den Gewindestift in der Öffnung zentriert. Durch das Einsetzen von unten wird es möglich, das Überkopfarbeiten beim Zusammenschrauben zu vermeiden. Dieses ist bisher im Stahlbau nicht zugelassen, da die Gefahr des Herausfallens der Gewindestifte beseitigt werden soll, wenn sich die Muttern durch dynamische Belastungen von den Gewindestiften lösen. Diese Gefahr wird durch die Arretiermittel beseitigt.

Nachfolgend wird die Erfindung an Hand einer Zeichnung näher erläutert. Dabei zeigen:
Fig. 1: eine räumliche Ansicht einer ersten Ausführungsform einer erfindungsgemäßen Verbindungsvorrichtung,
Fig. 2: eine weitere räumliche Perspektive zu Fig. 1,
Fig. 3: eine räumliche Darstellung einer zweiten Ausführungsform zu Fig. 1,
Fig. 4: eine weitere räumliche Perspektive zu Fig. 3,
Fig. 5 bis 7c: räumliche Ansichten der Zusammenführung der erfindungsgemäßen Verbindungsvorrichtung.

Des Weiteren zeigen:
Fig. 7d bis Fig. 7g eine alternative Ausführungsform einer erfindungsgemäßen Ausführungsform. Dabei zeigen:

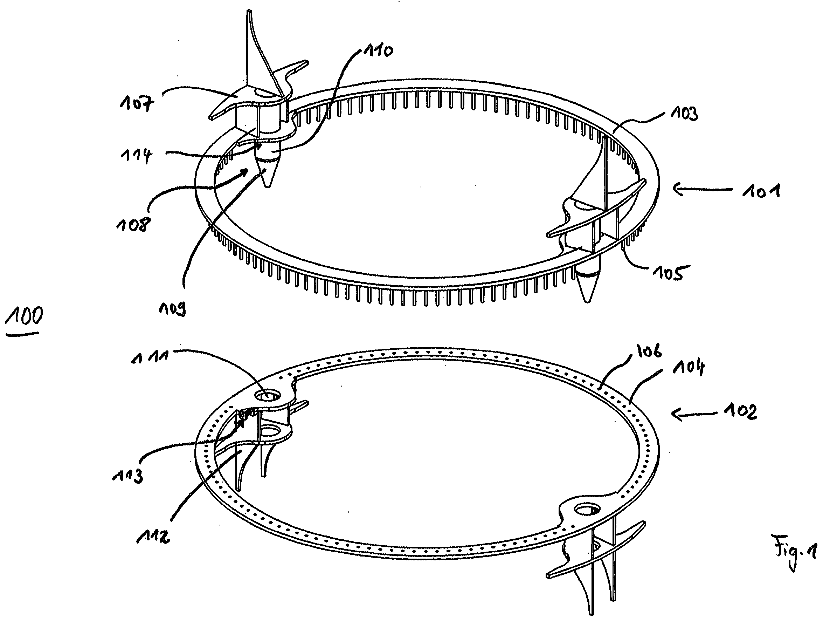

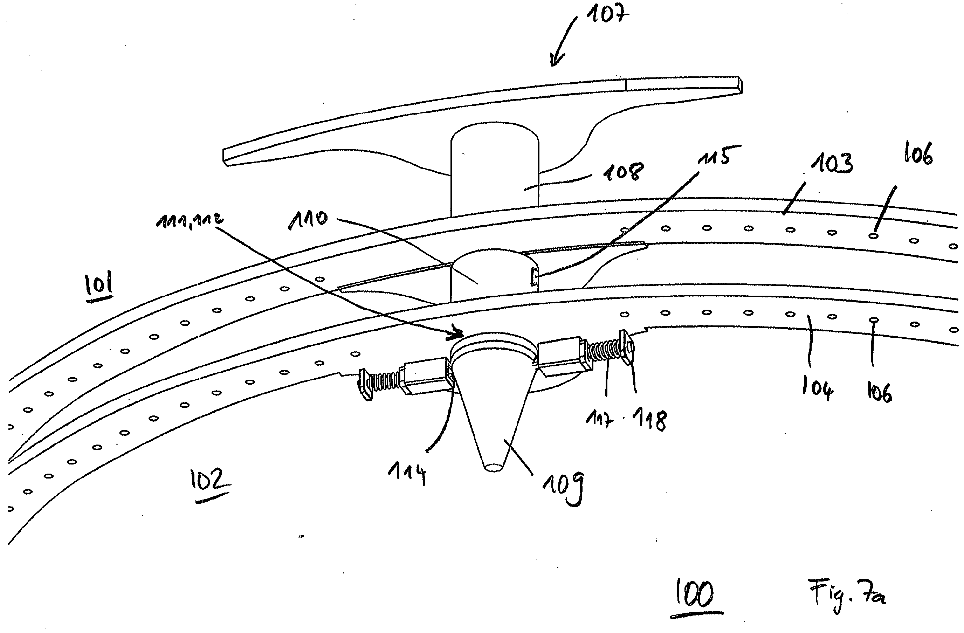

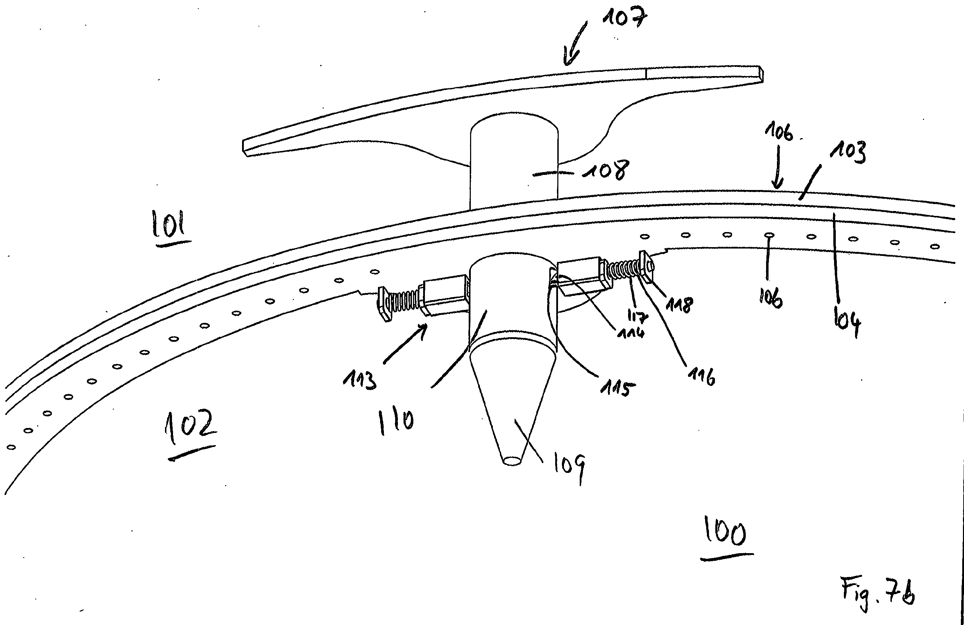

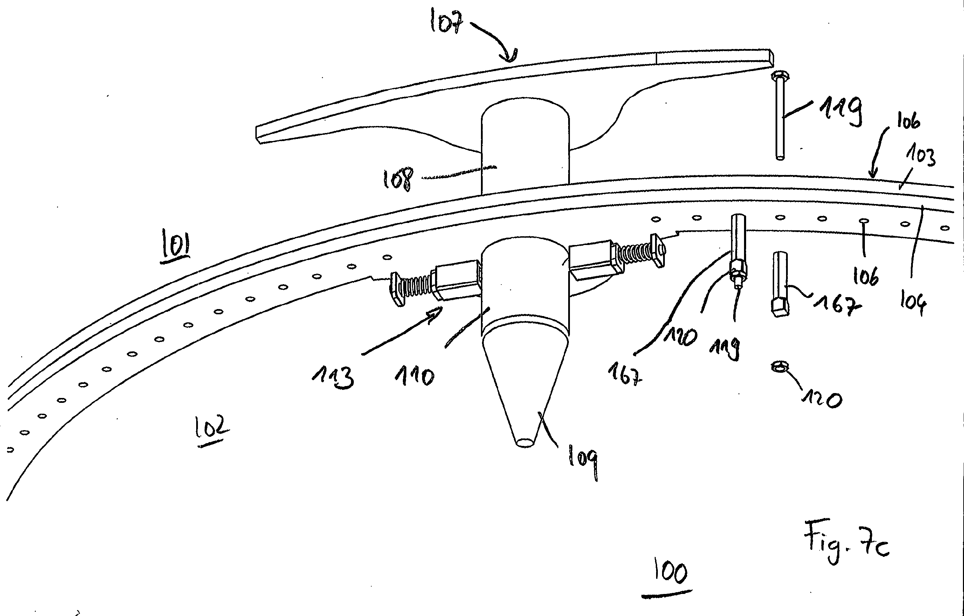

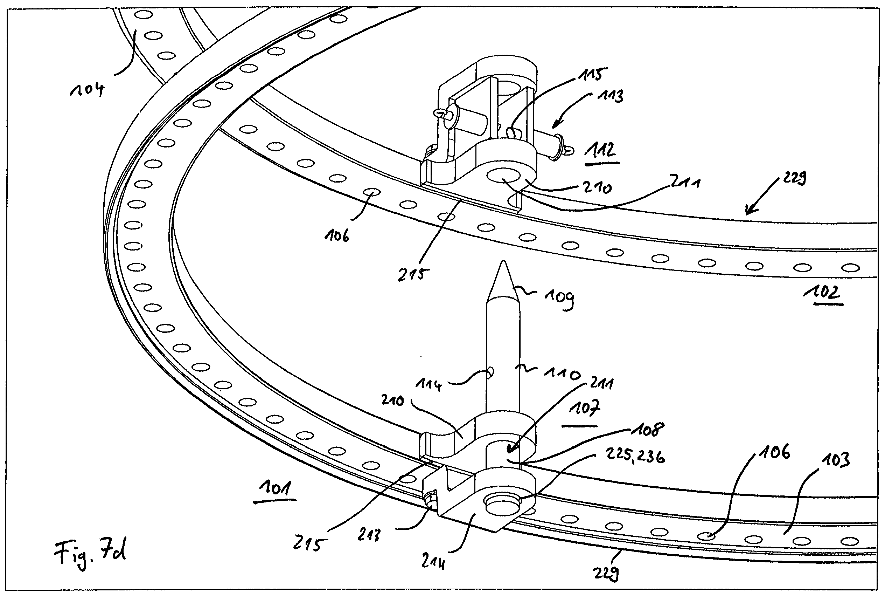

   Fig. 7d: eine weitere Ausführungsform zu Fig. 1

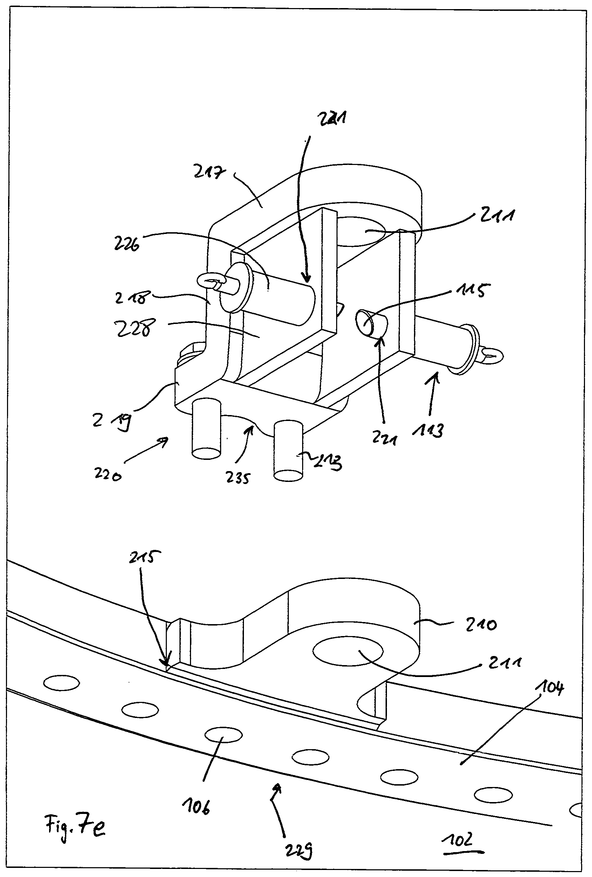

   Fig. 7e: eine vergrößerte Detailansicht zu Fig. 7d,

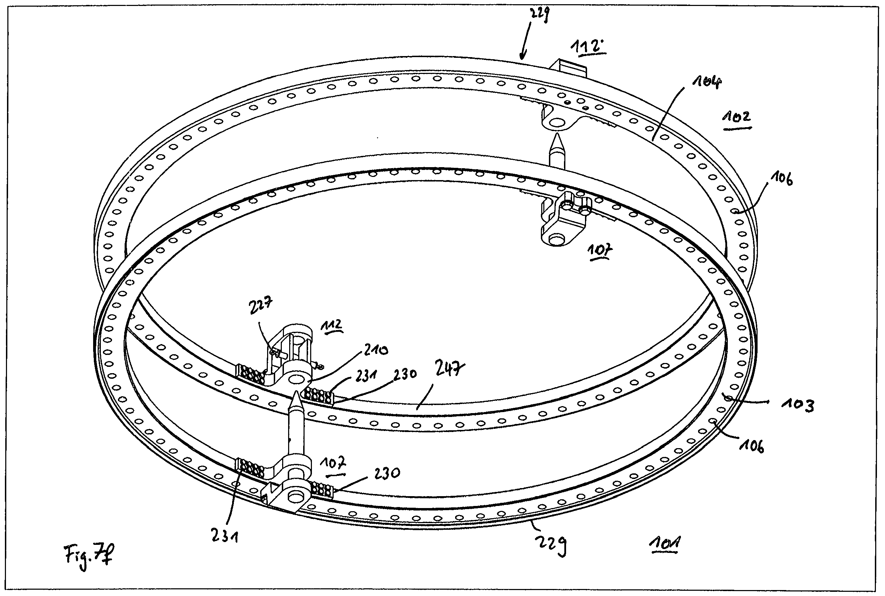

   Fig. 7f eine weitere Ausführungsform zu Fig. 1

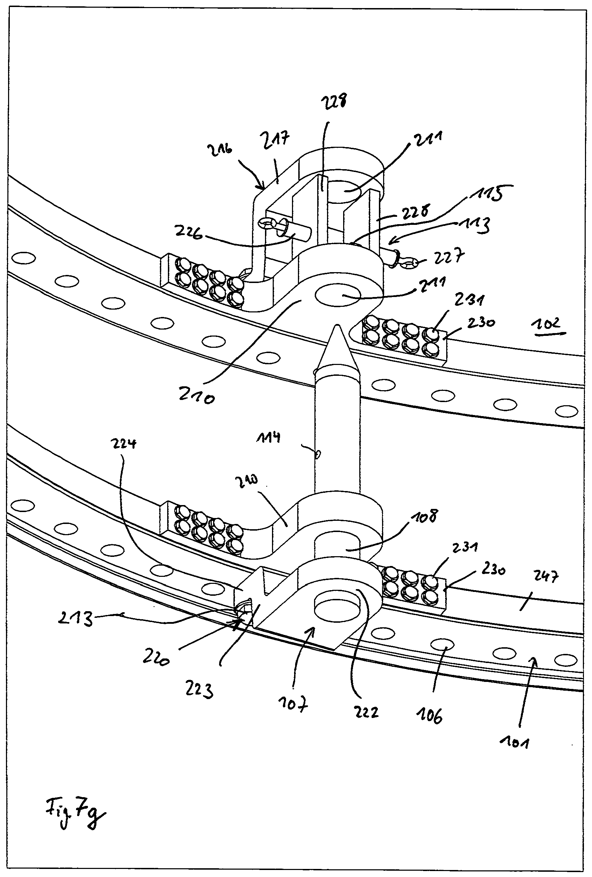

   Fig. 7g: eine vergrößerte Ausführungsansicht zu Fig. 7f,

Des Weiteren zeigen:

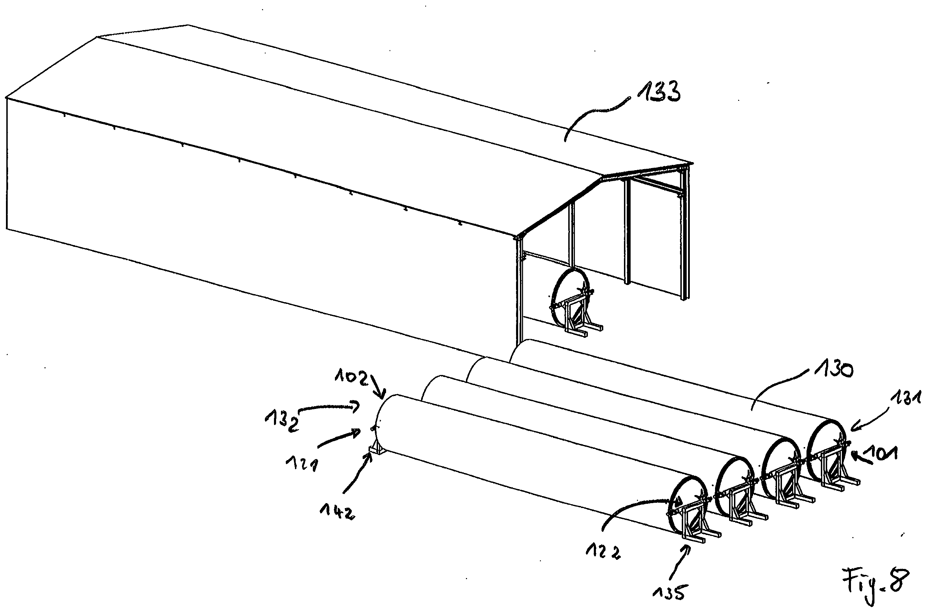

Fig. 8 - 24: räumliche Darstellungen des erfindungsgemäßen Transports von Turmsegmenten einer Windkraftanlage vom Herstellungsort zum Montageort. Dabei zeigt
Fig. 8: eine räumliche Darstellung der Turmsegmente,

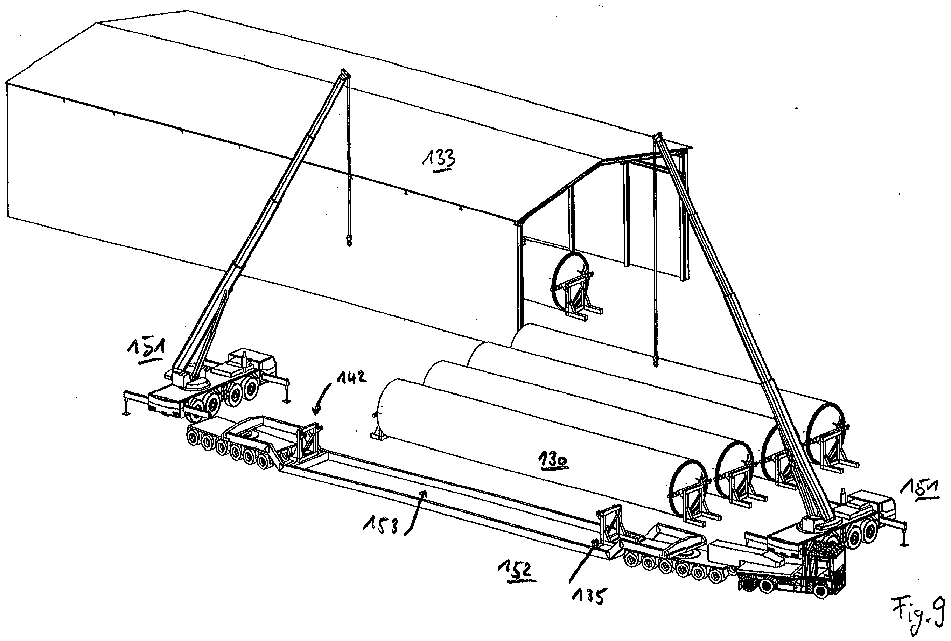

Fig. 9: eine räumliche Darstellung der Verladung der Turmsegmente auf einem LKW,

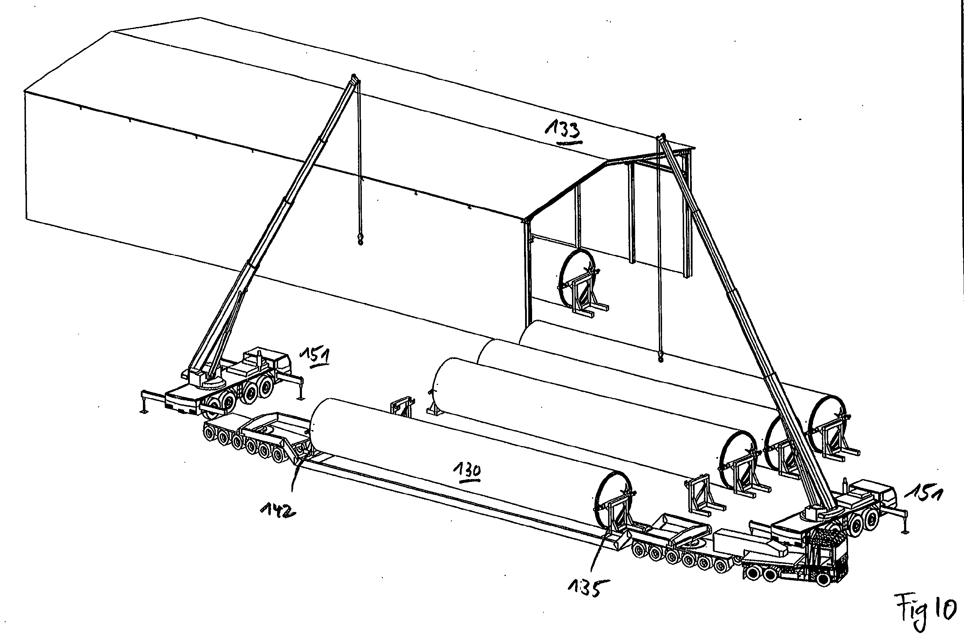

Fig. 10: eine räumliche Darstellung des Zustands nach dem Verladen des Turmsegments auf den LKW,

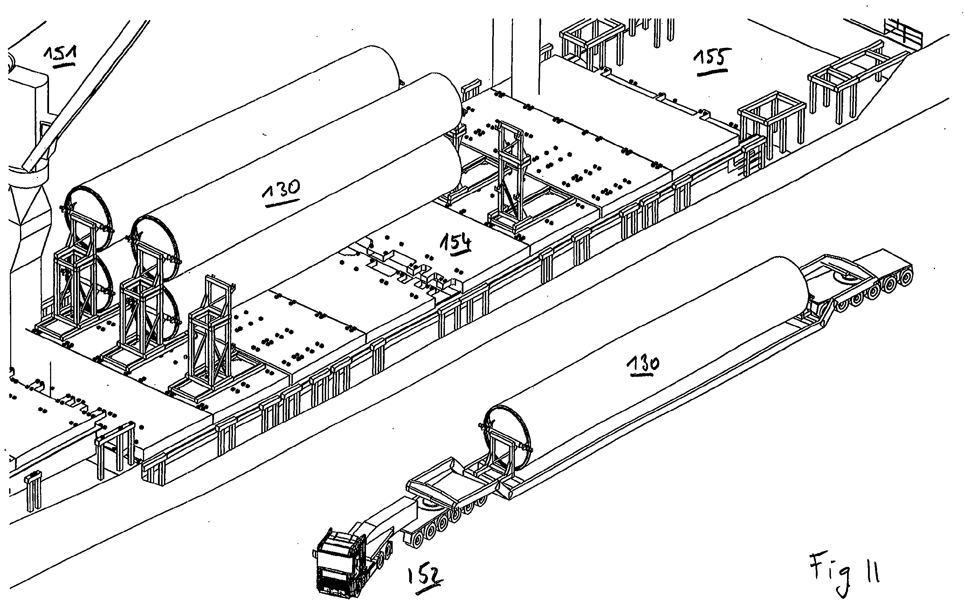

Fig. 11: eine räumliche Ansicht vor dem Verladen des Turmsegments auf ein Schiff,

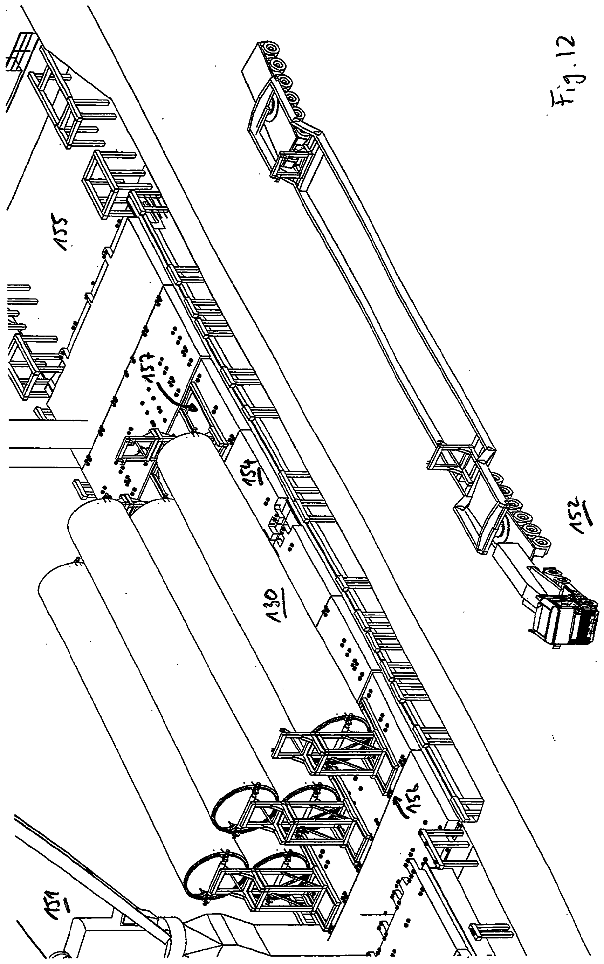

Fig. 12: das räumliche Verladen des Turmsegments auf eine erste Lagerebene des Schiffs,

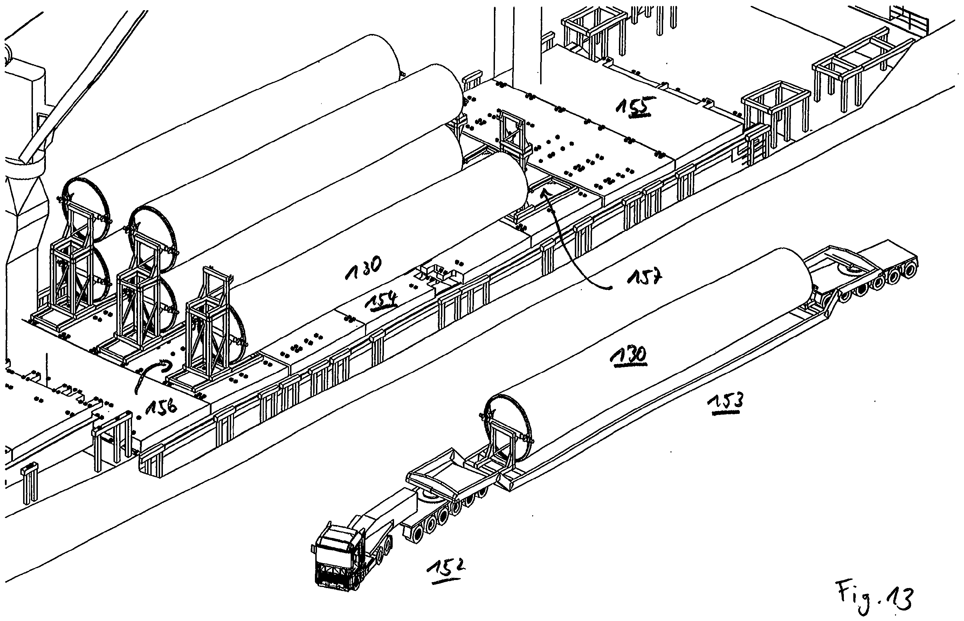

Fig. 13: eine räumliche Darstellung des Antransports eines weiteren Turmsegments zur Verladung auf die zweite Ladeebene des Schiffs,

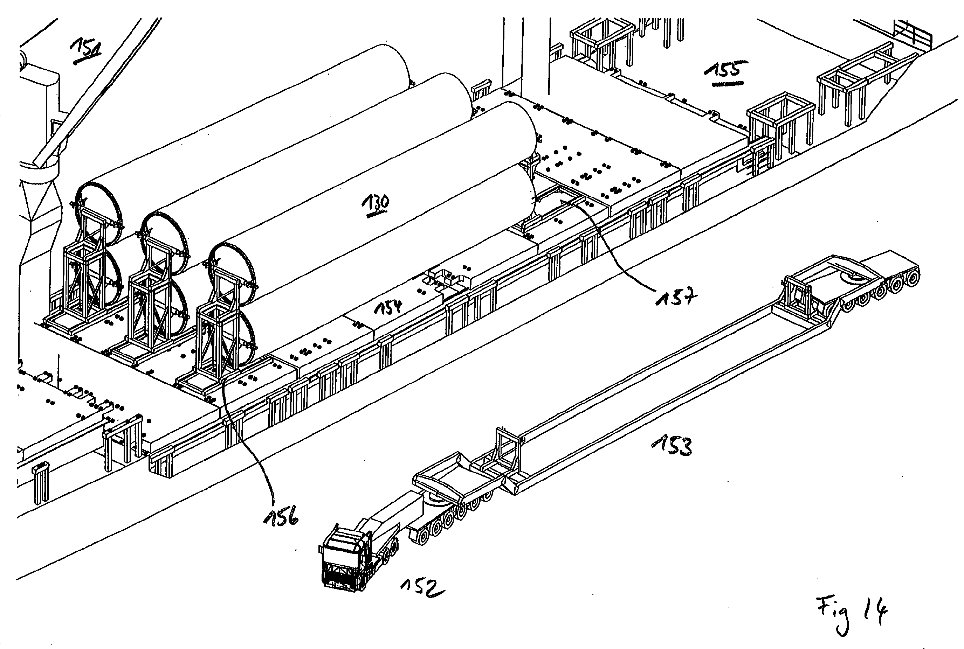

Fig. 14: eine räumliche Ansicht der Verladung des Turmsegments auf die zweite Ladeebene des Schiffs,

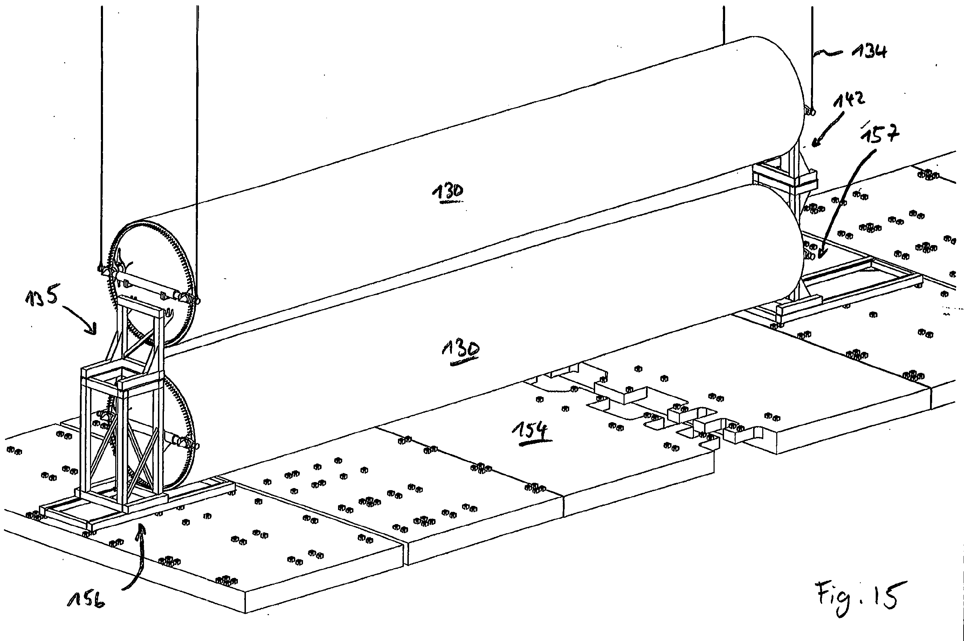

Fig. 15: eine vergrößerte räumliche Ansicht der Verladung eines Turmsegments auf eine zweite Ladeebene an Bord des Schiffes,

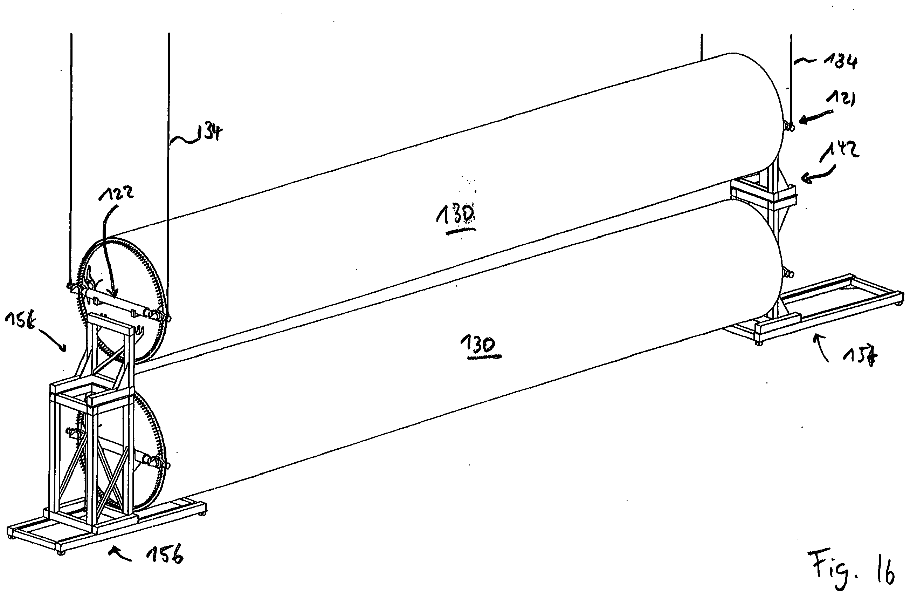

Fig. 16: eine Darstellung der Verladung zu Fig. 15,

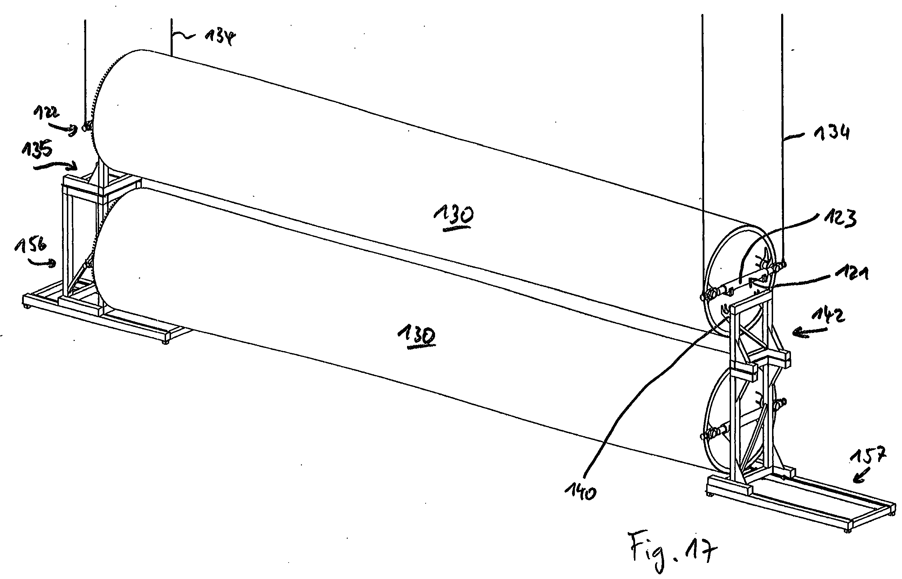

Fig. 17: eine weitere Perspektive zu Fig. 15,

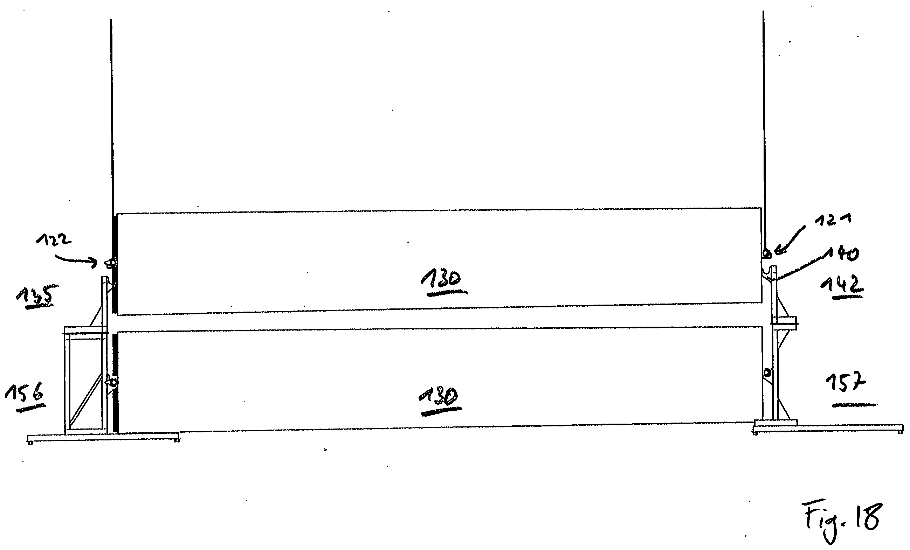

Fig. 18: eine seitliche Perspektive zu Fig. 15,

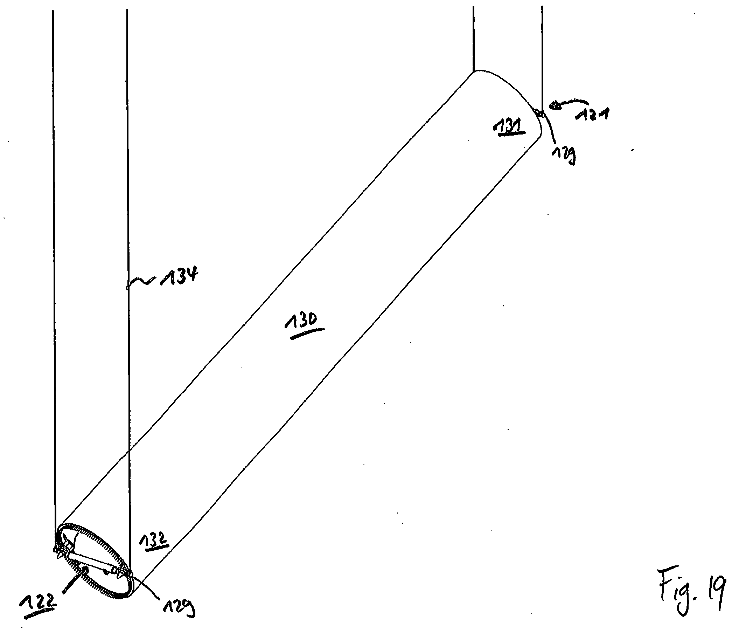

Fig. 19: eine räumliche Darstellung des Krantransports des erfindungsgemäßen Turmsegments,

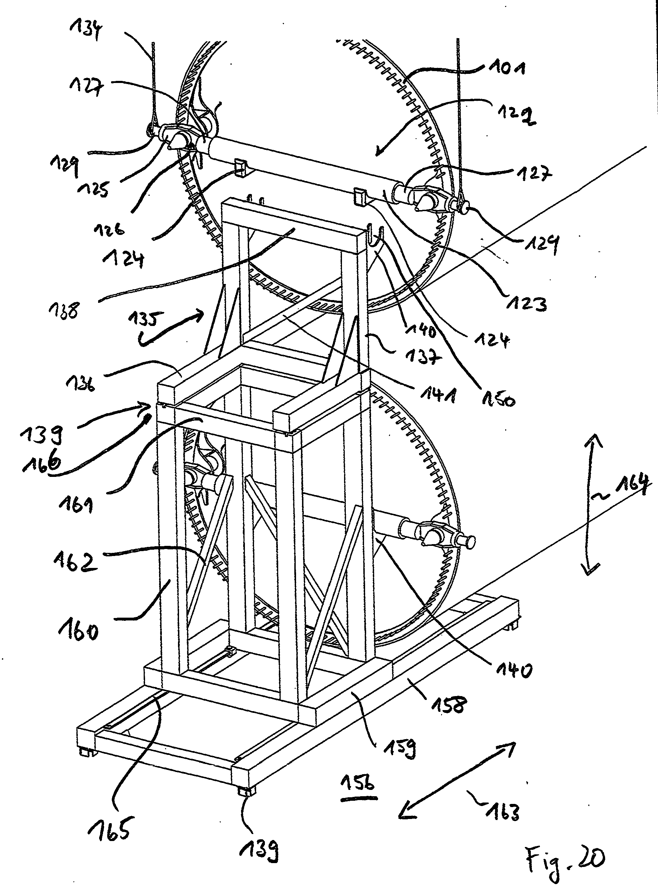

Fig. 20: eine vergrößerte räumliche Darstellung eines ersten Lagerelements für den Seetransport,

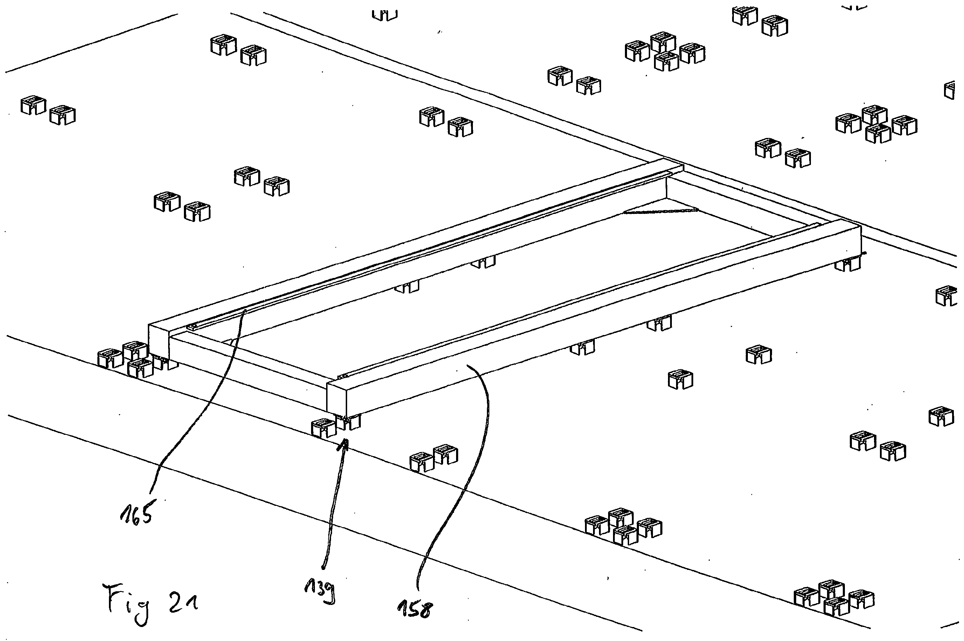

Fig. 21: eine räumliche Darstellung der Basis des Lagerelements,

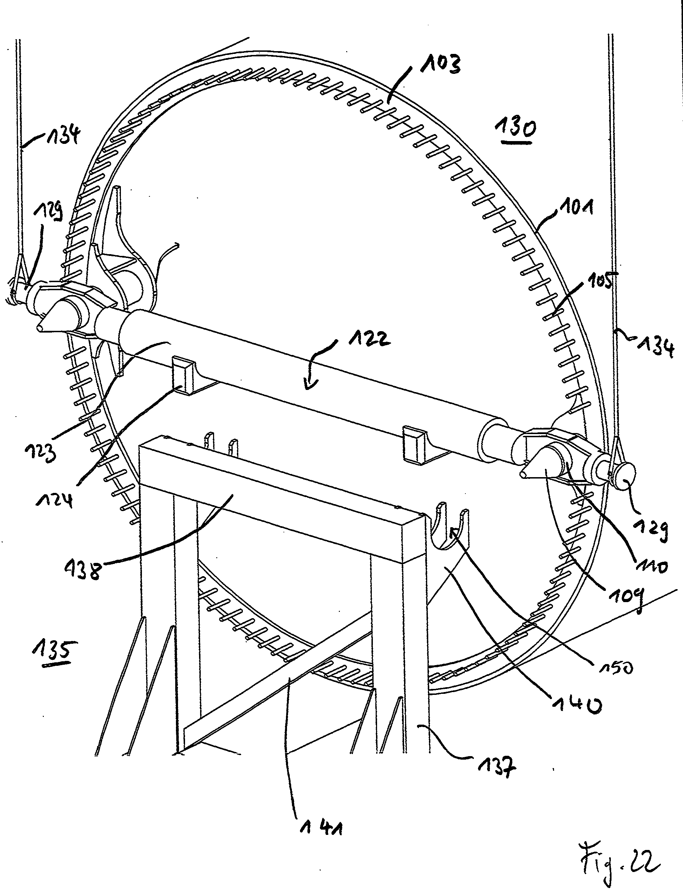

Fig. 22: eine vergrößerte räumliche Darstellung des Ladens des Turmsegments auf ein erfindungsgemäßes Lagerelement,

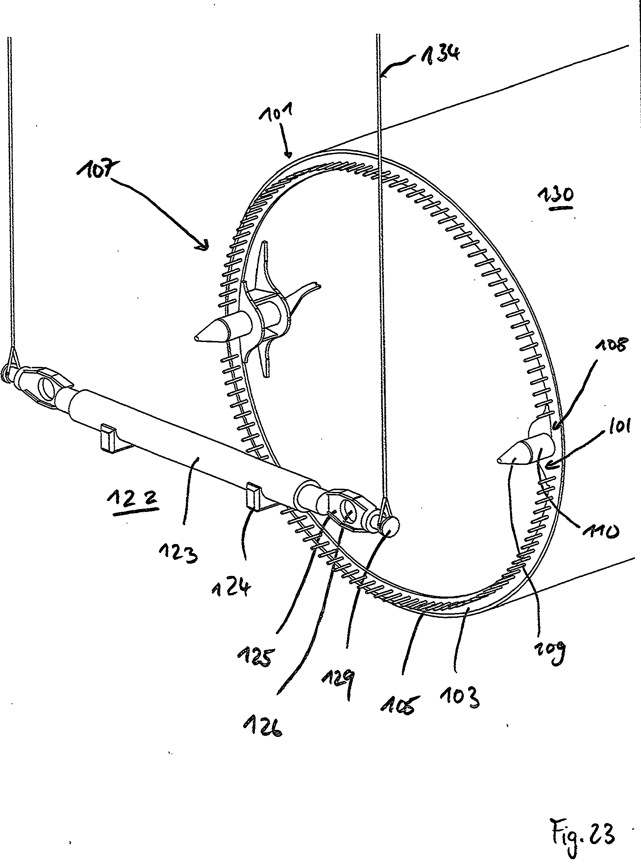

Fig. 23: eine räumliche Darstellung eines erfindungsgemäßen Turmsegments mit gelöster Hebevorrichtung,

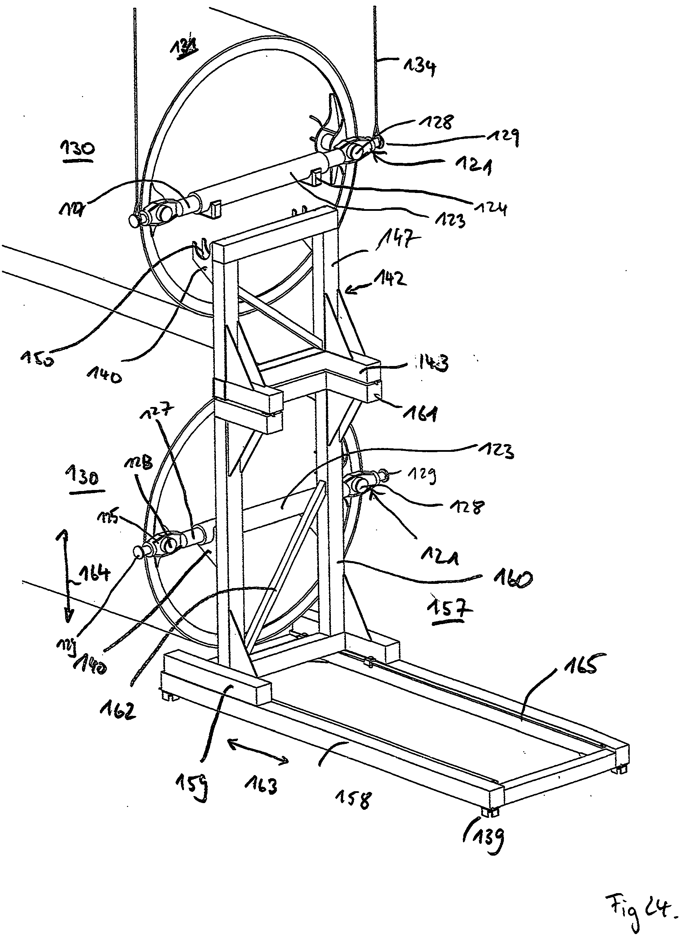

Fig. 24: eine räumliche Darstellung einer zweiten Transportvorrichtung zum Transport von erfindungsgemäßen Turmsegmenten.

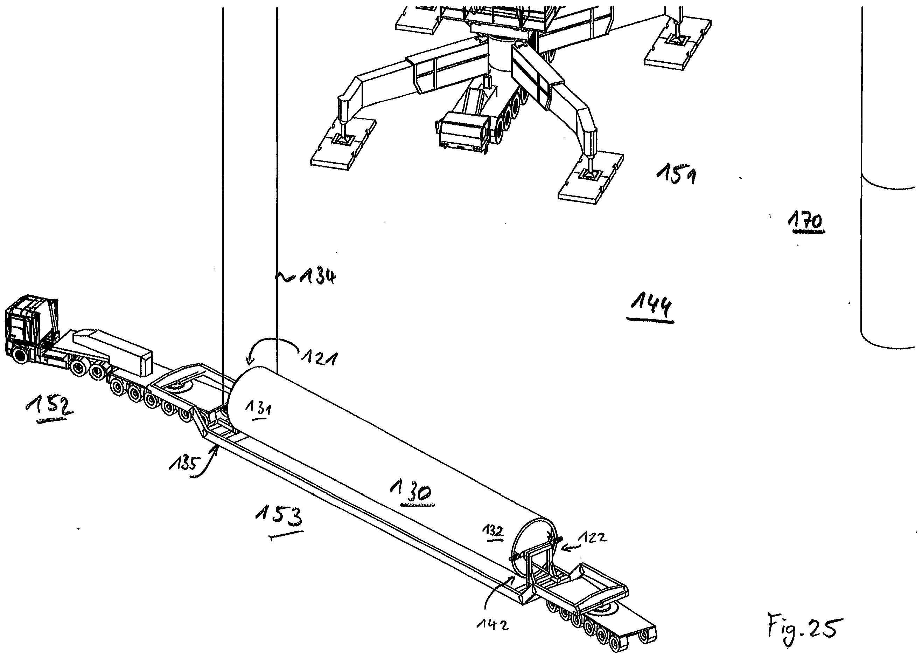

Die Fig. 25 - Fig. 40 zeigen die einzelnen Schritte der erfindungsgemäßen Montage der Turmsegmente. Dabei zeigen:
Fig. 25: eine räumliche Ansicht des Turmsegments mit am oberen Ende angeschlagenem Kranseil,

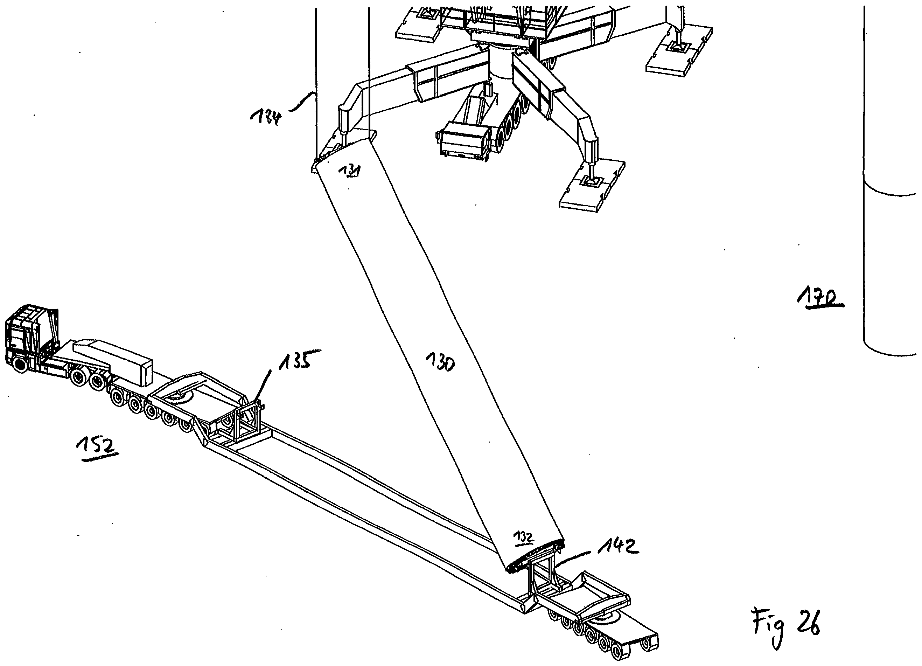

Fig. 26: eine weitere räumliche Ansicht zu Fig. 25 mit einseitig angehobenem Turmsegment,

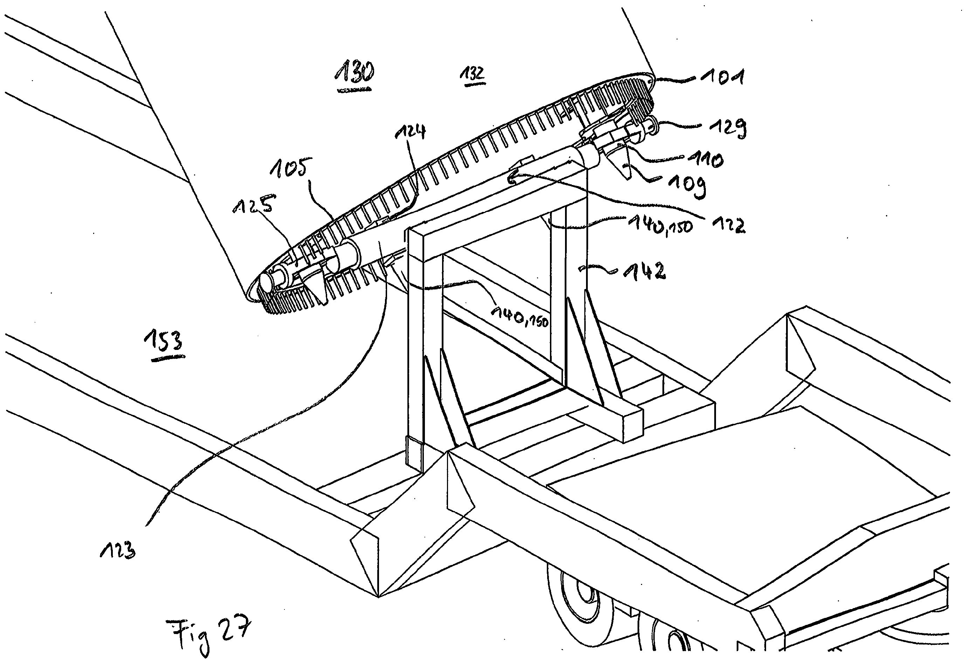

Fig. 27: eine räumliche vergrößerte Darstellung zu Fig. 26,

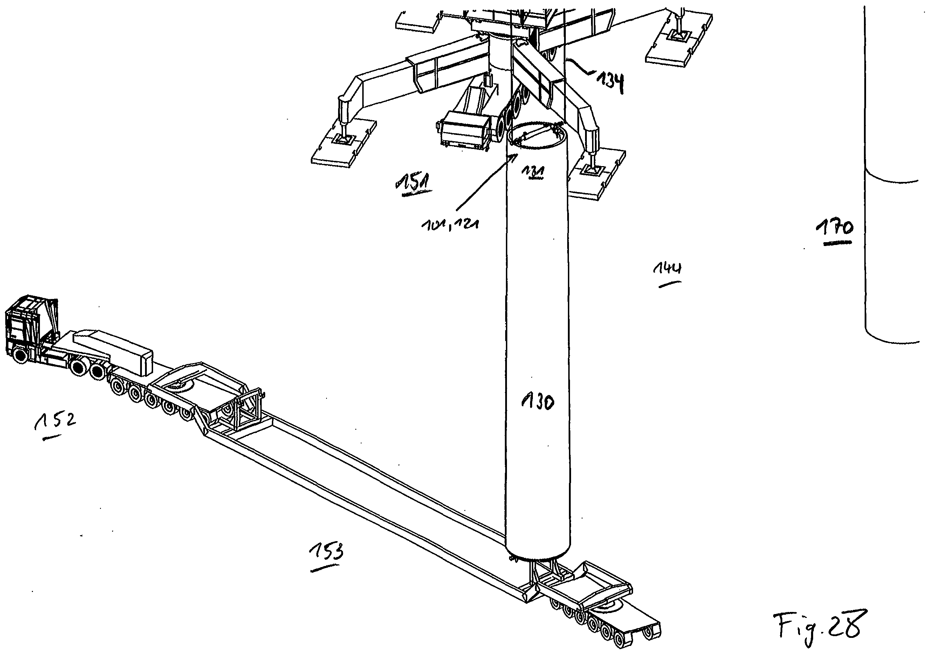

Fig. 28: eine räumliche Darstellung des in die Senkrechte gebrachten Turmsegments,

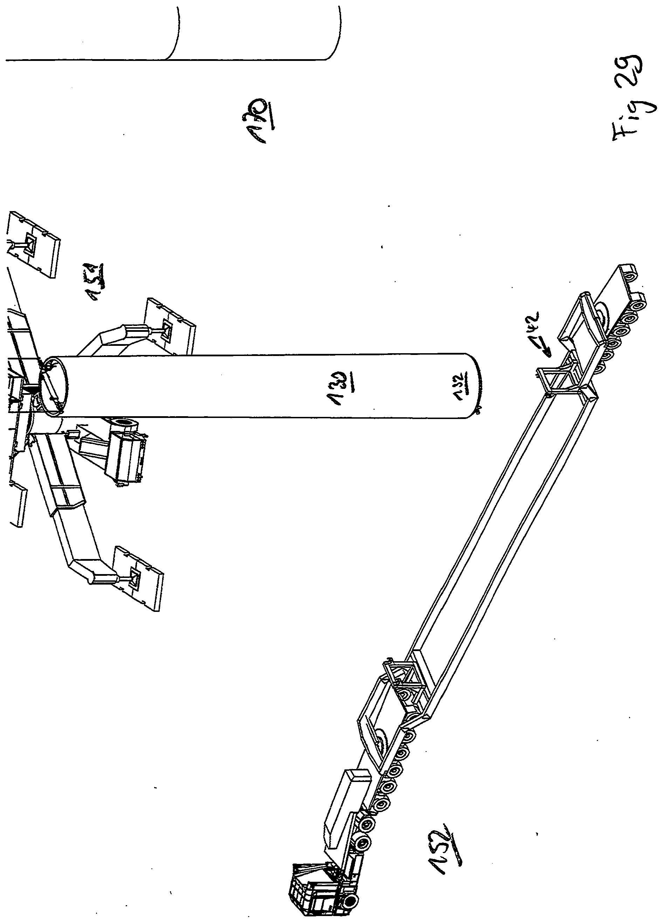

Fig. 29: ein angehobenes Turmsegment,

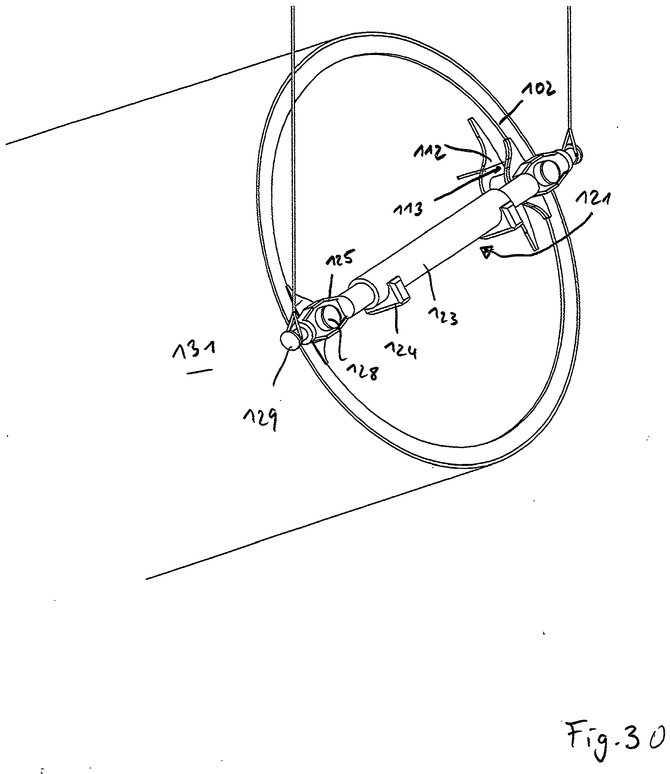

Fig. 30: eine räumliche Darstellung des oberen Endes des Turmsegments in vergrößerter Ansicht mit angeschlagenem Kranseil,

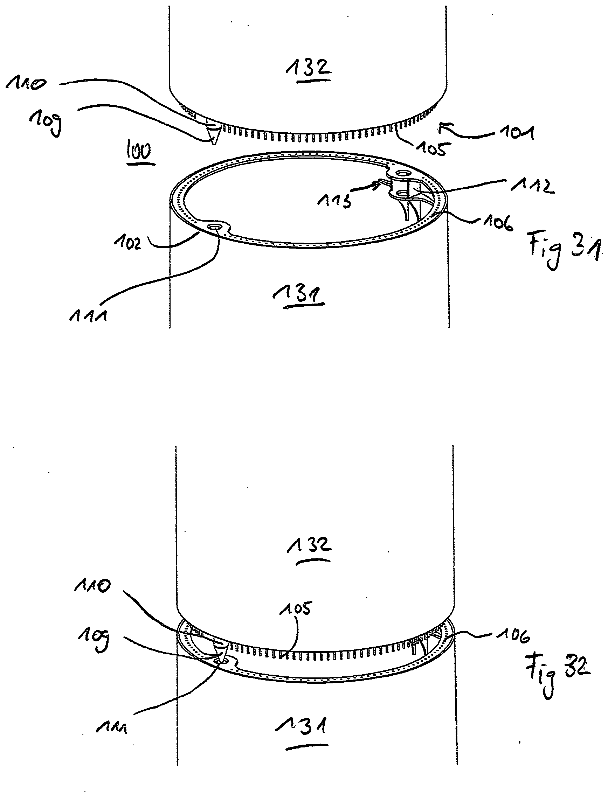

Fig. 31: eine räumliche Darstellung des angehobenen Turmsegments vor dem Aufsetzen des darunter liegenden bereits montierten Turmsegments,
Fig. 32: eine räumliche Darstellung des direkten Aufsetzens und Einführens des oberen Turmsegments auf das darunter liegende Turmsegment,

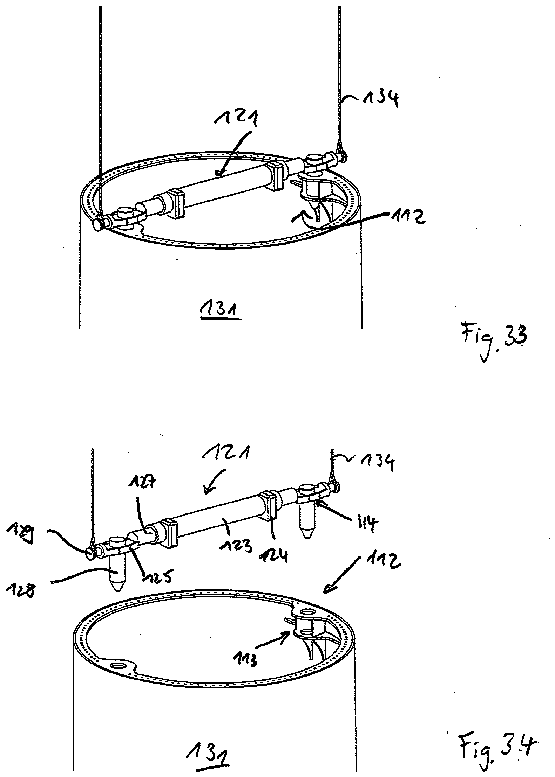

Fig. 33: eine räumliche Darstellung des oberen Endes des montierten Turmsegments mit noch angeschlagenem Kranseil und Montageelements,
Fig. 34: eine räumliche Darstellung des oberen Endes des Turmsegments mit gelöstem Montageelement,

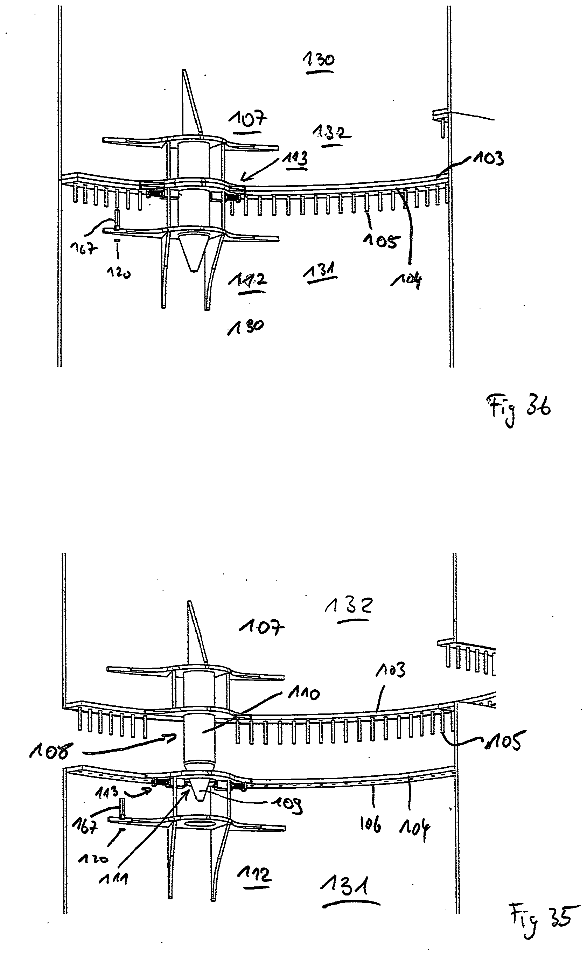

Fig. 35: eine aufgeschnittene räumliche Innenansicht der zu verbindenden Turmsegmente beim Montieren analog Fig. 32,
Fig. 36: eine aufgeschnittene räumliche Ansicht der beiden Turmsegmente im zusammengesetzten Zustand,

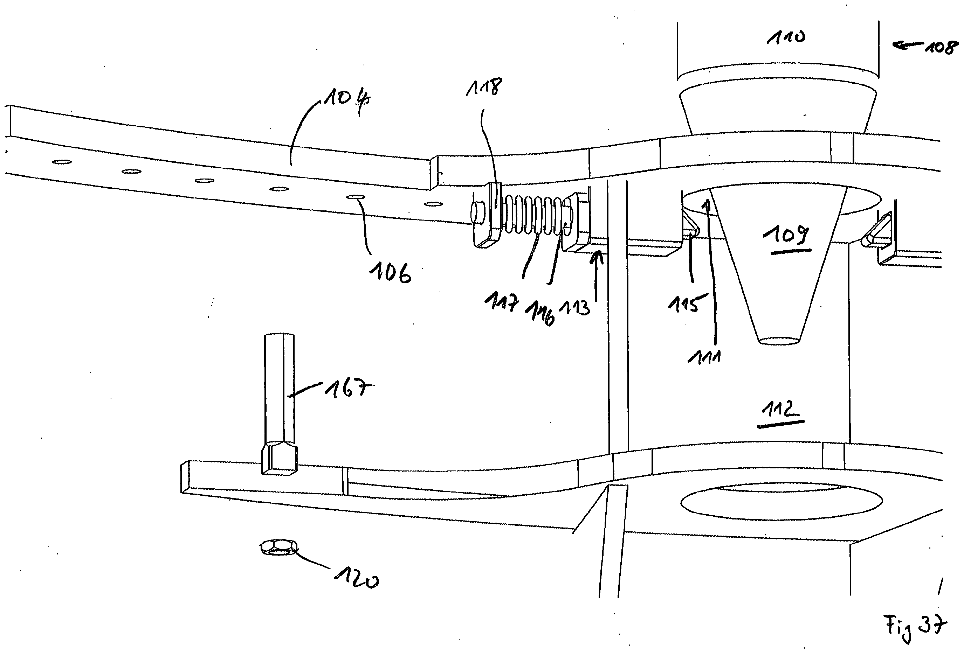

Fig. 37: eine vergrößerte Ansicht zu Fig. 35,

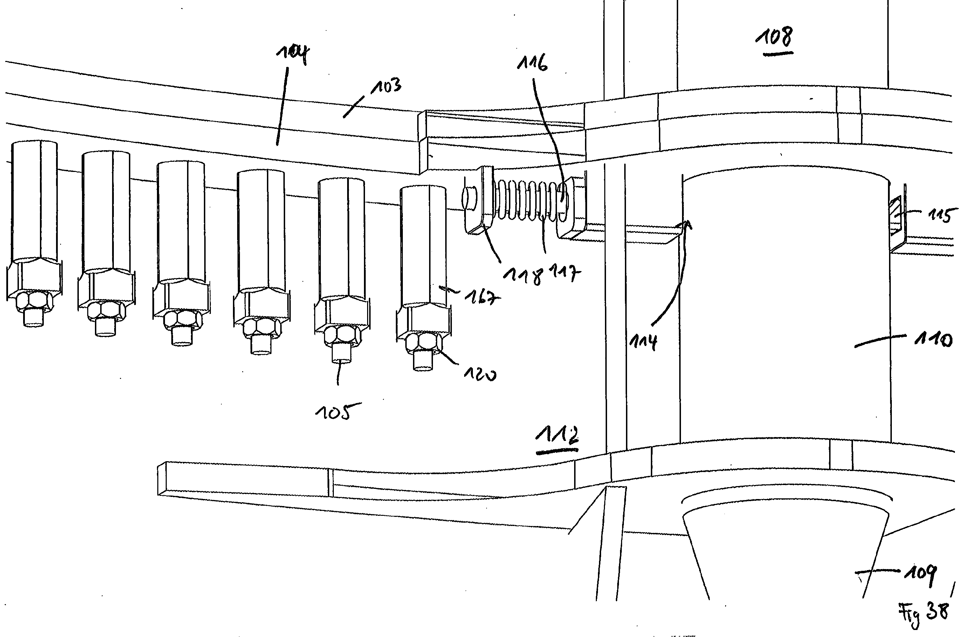

Fig. 38: eine vergrößerte Ansicht zu Fig. 36,

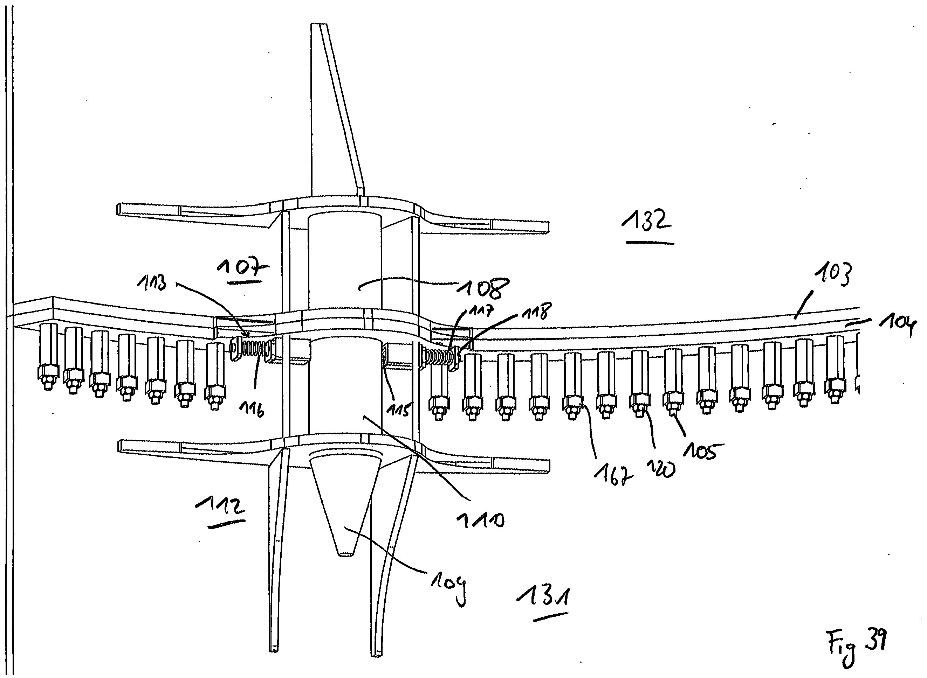

Fig. 39: eine zweite Ausschnittansicht zu Fig. 36,

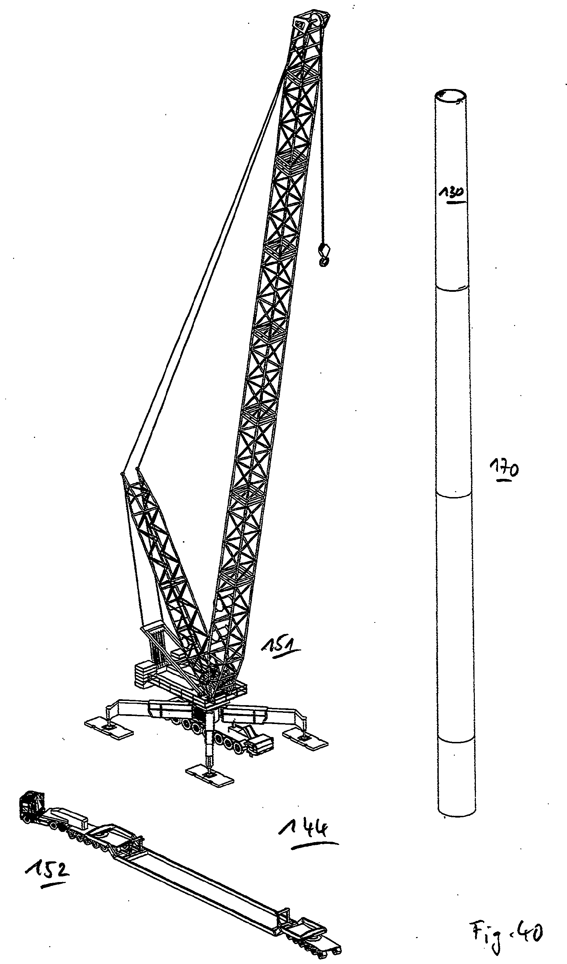

Fig. 40: eine räumliche Darstellung des fertig montierten Turmes.

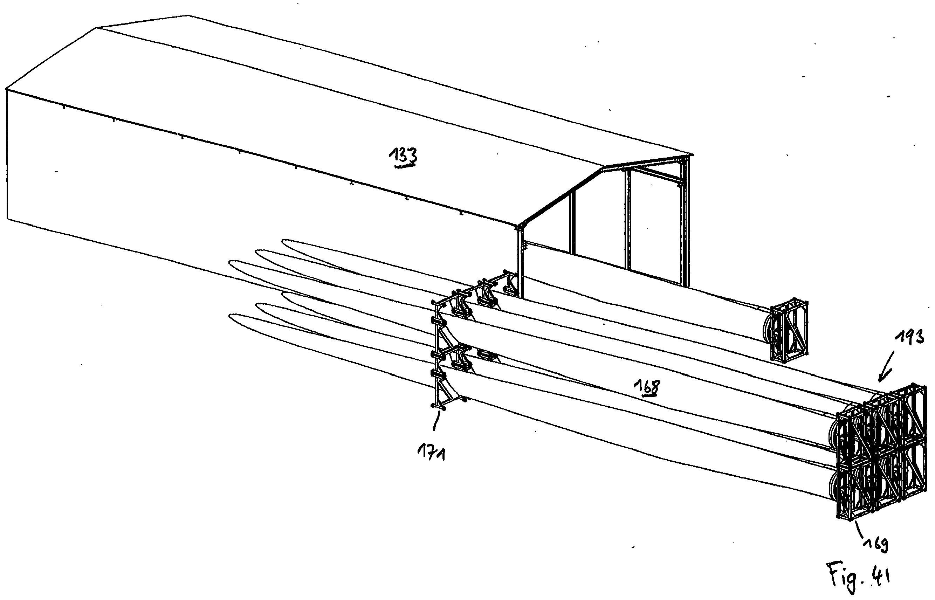

Fig. 41 - 59 zeigen den erfindungsgemäßen Transport von Rotorflügeln einer Windkraftanlage vom Herstellungsort zum Montageort. Dabei zeigen:
Fig. 41: eine räumliche Darstellung der zur Montage vorbereiteten Rotorflügel,

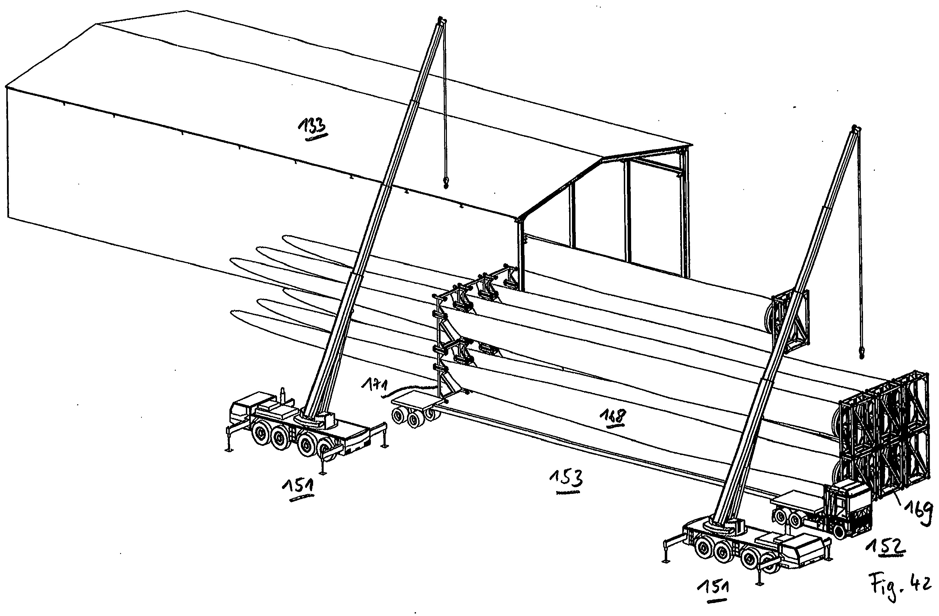

Fig. 42: das Verladen der Rotorflügel auf einem LKW,

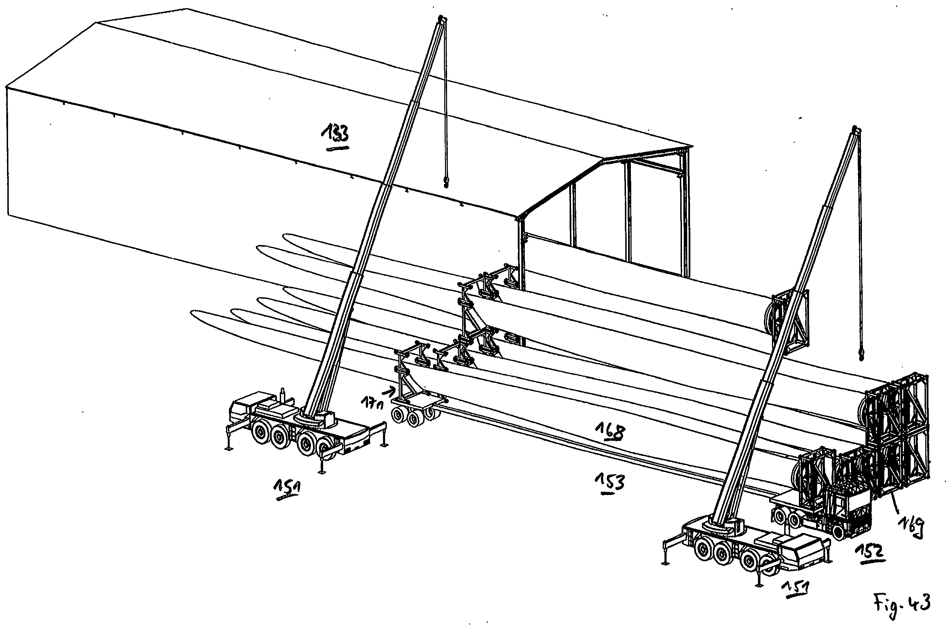

Fig. 43: den fertig verladenen Rotorflügel auf einem LKW,

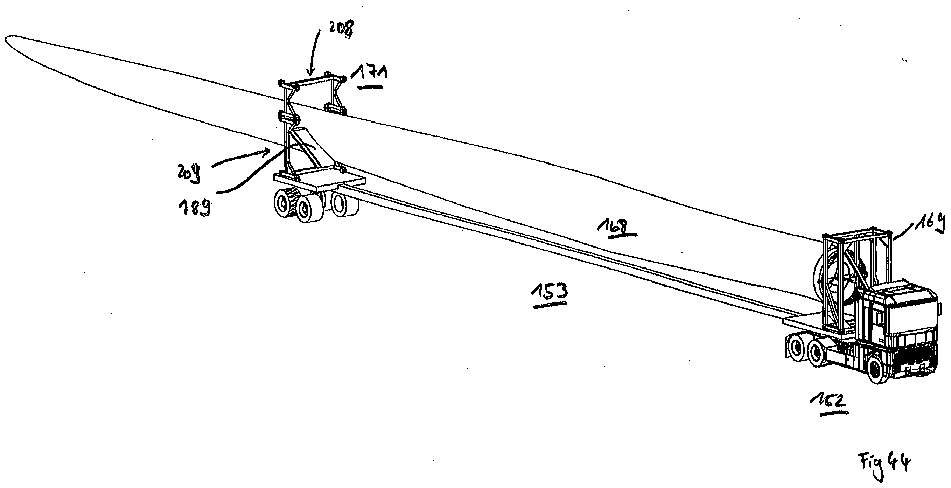

Fig. 44: den fertig verladenen Rotorflügel auf einem LKV

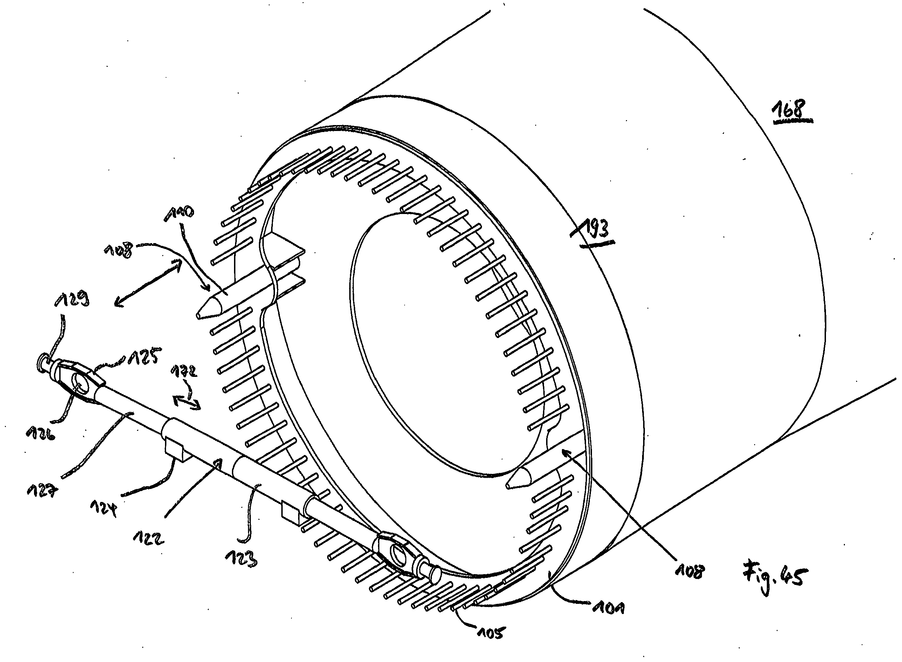

Fig. 45: eine vergrößerte Ansicht des Montageendes des Rotorflügels mit anzubringendem Transportelement,

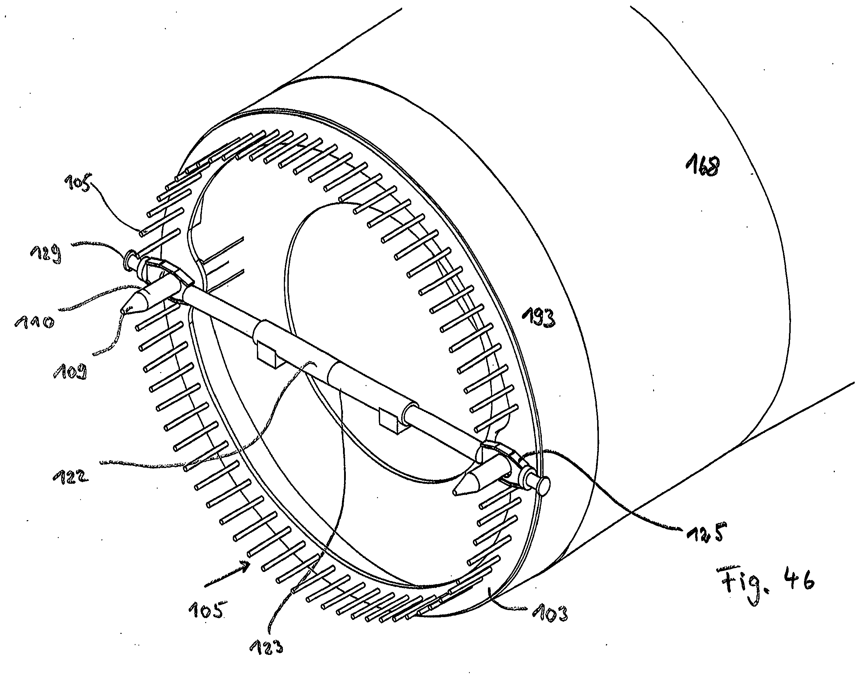

Fig. 46: eine Ansicht analog Fig. 45 mit montiertem Transportelement,

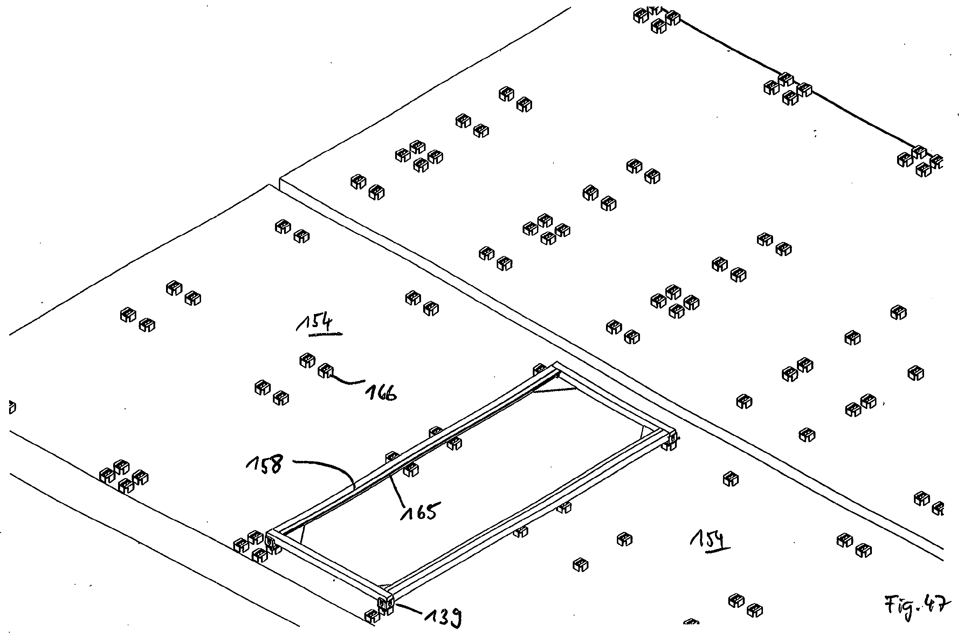

Fig. 47: ein auf einem Schiff angeordnetes Grundelement einer ersten Transportausführungsform der Erfindung,

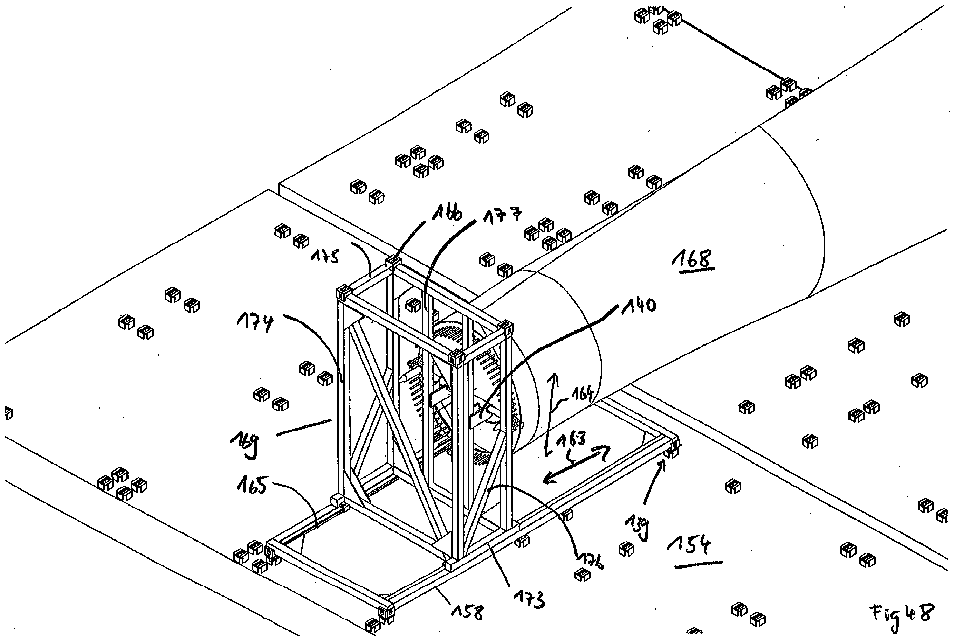

Fig. 48: eine räumliche Darstellung mit auf dem Grundelement von Fig. 47 montiertem Rotorflügel,

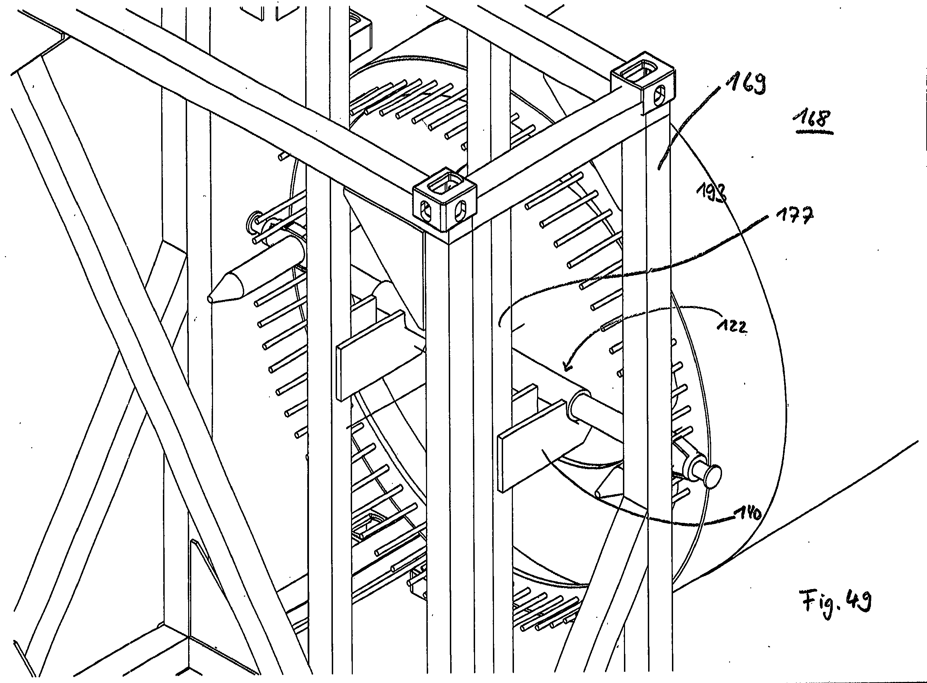

Fig. 49: eine vergrößerte Ansicht zu Fig. 48,

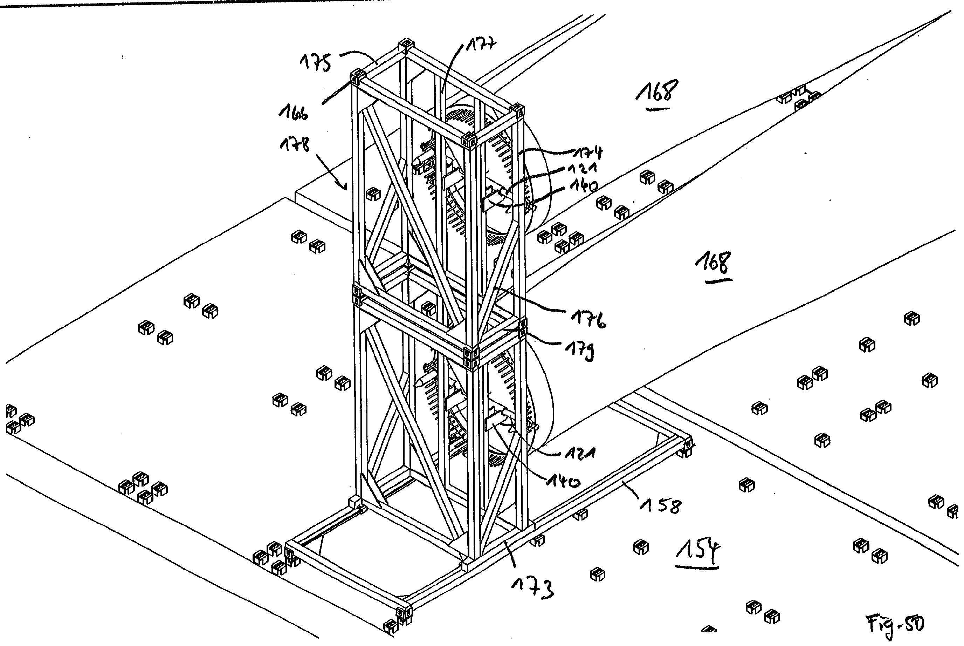

Fig. 50: eine weitere Ansicht zu Fig. 48 mit zweiter Lageebene mit gelagertem Rotor,

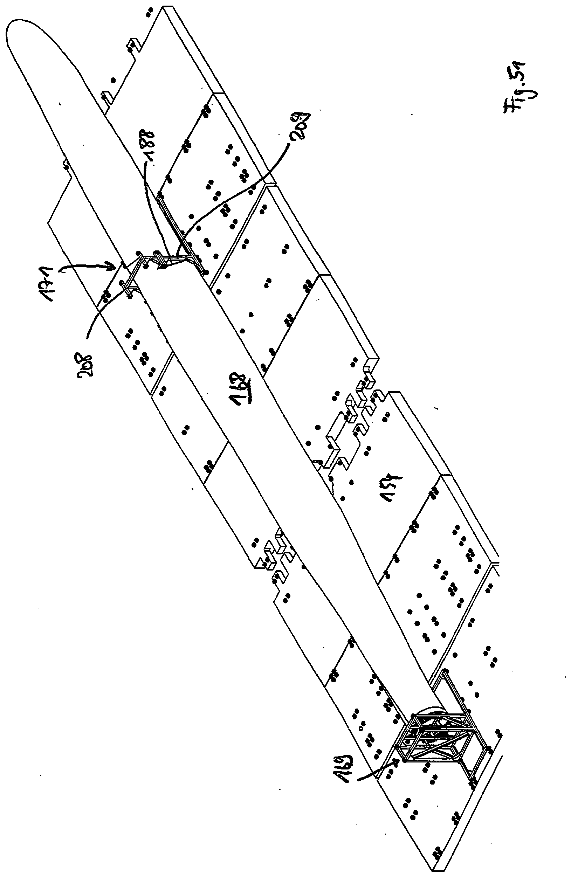

Fig. 51: eine Vollansicht des Rotors zu Fig. 48,

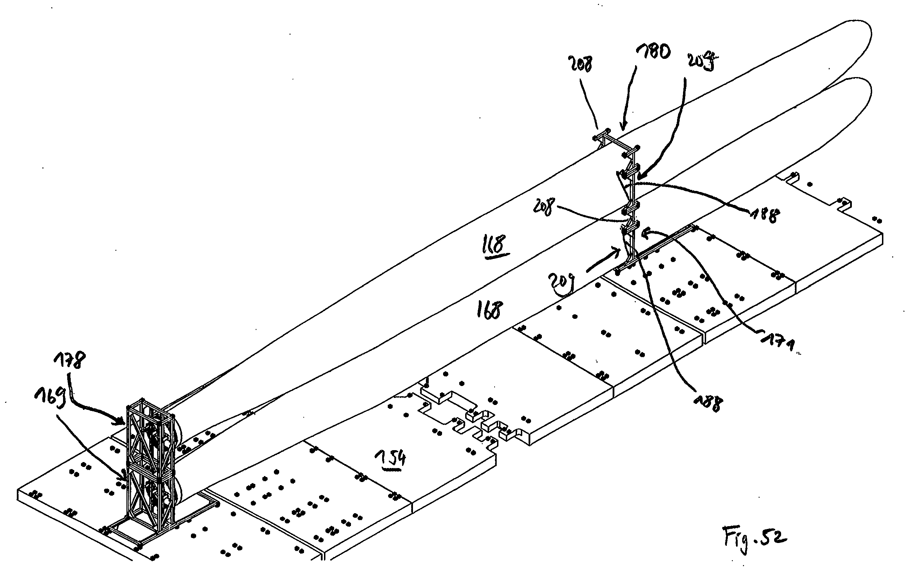

Fig. 52: eine räumliche Vollansicht zweier Rotorflügel zu Fig. 50,

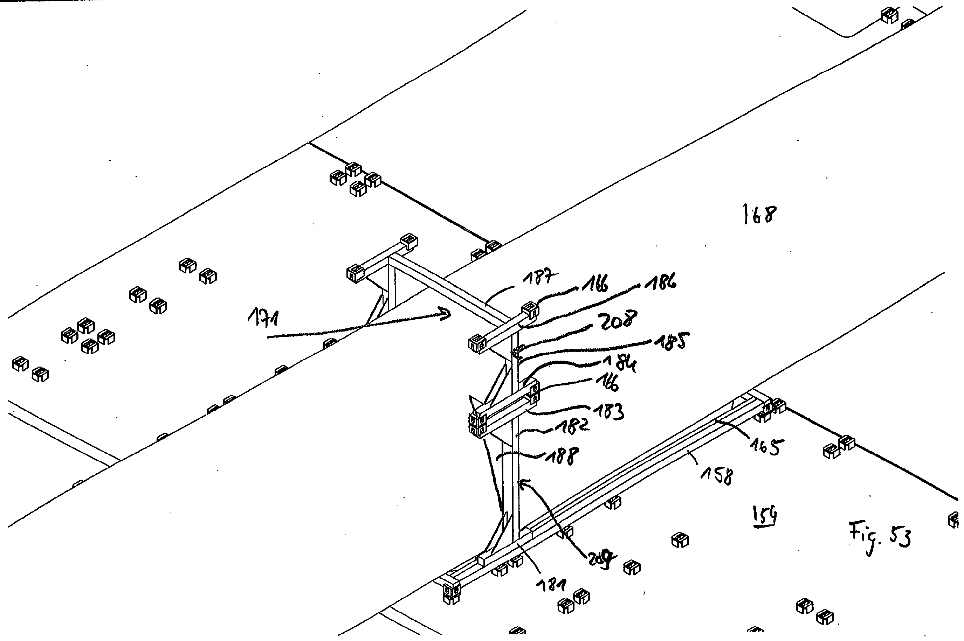

Fig. 53: eine vergrößerte Ansicht zu Fig. 50,

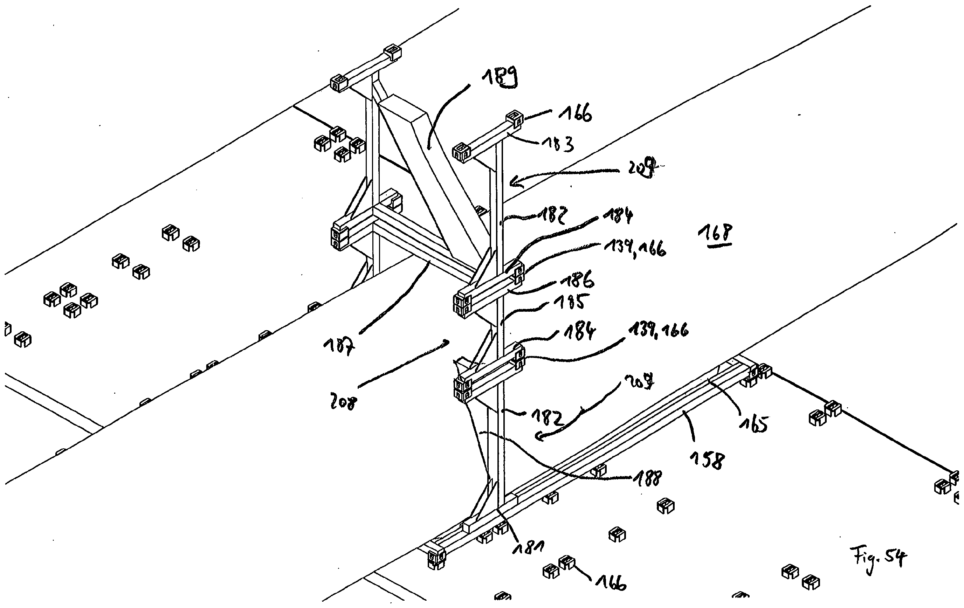

Fig. 54: eine vergrößerte Ansicht analog Fig. 53 mit montiertem Transportelement unter Weglassen des Rotorflügels,

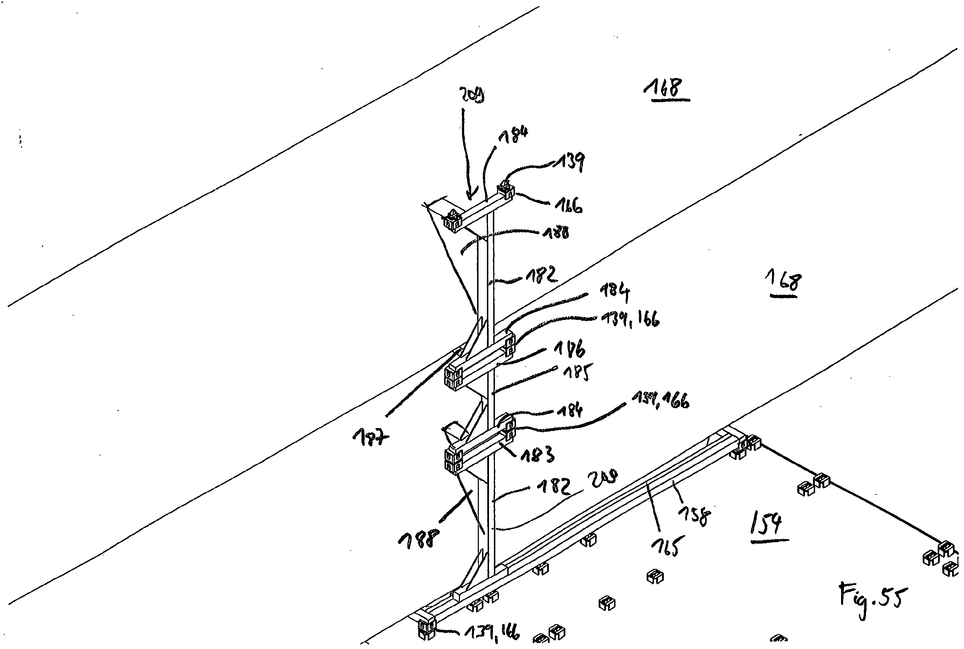

Fig. 55: eine vergrößerte Ansicht zu Fig. 52,

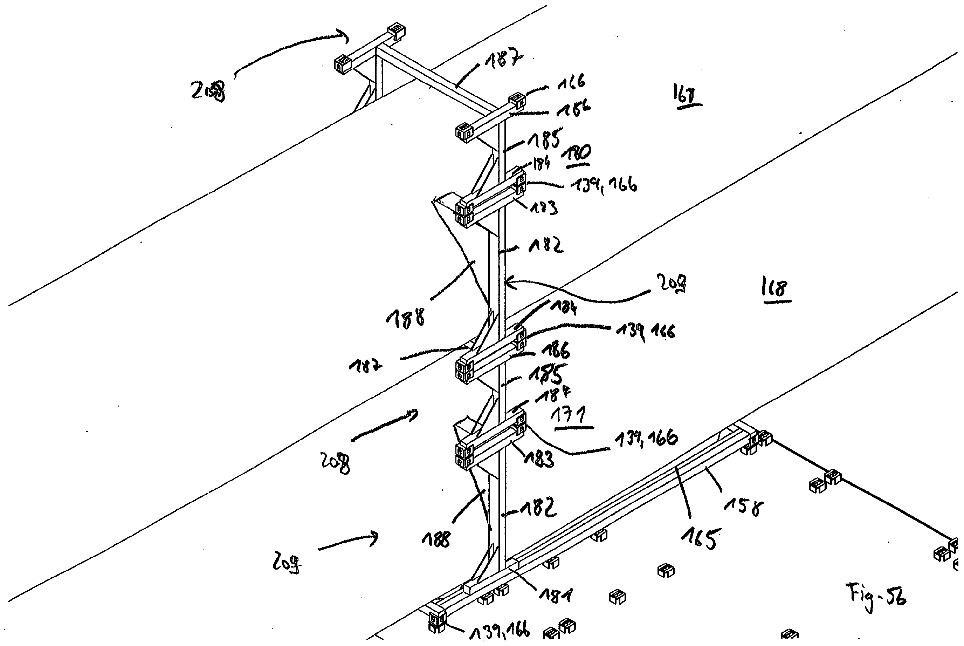

Fig. 56: eine weitere vergrößerte Ansicht zu Fig. 52,

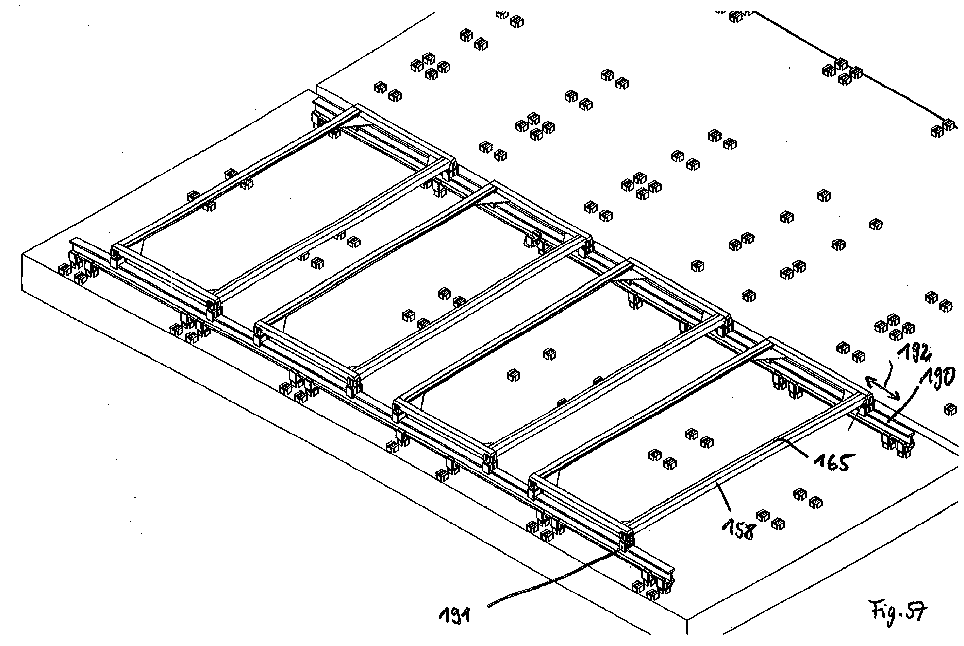

Fig. 57: eine alternative Transportvorrichtung für den Transport von Rotorflügeln,

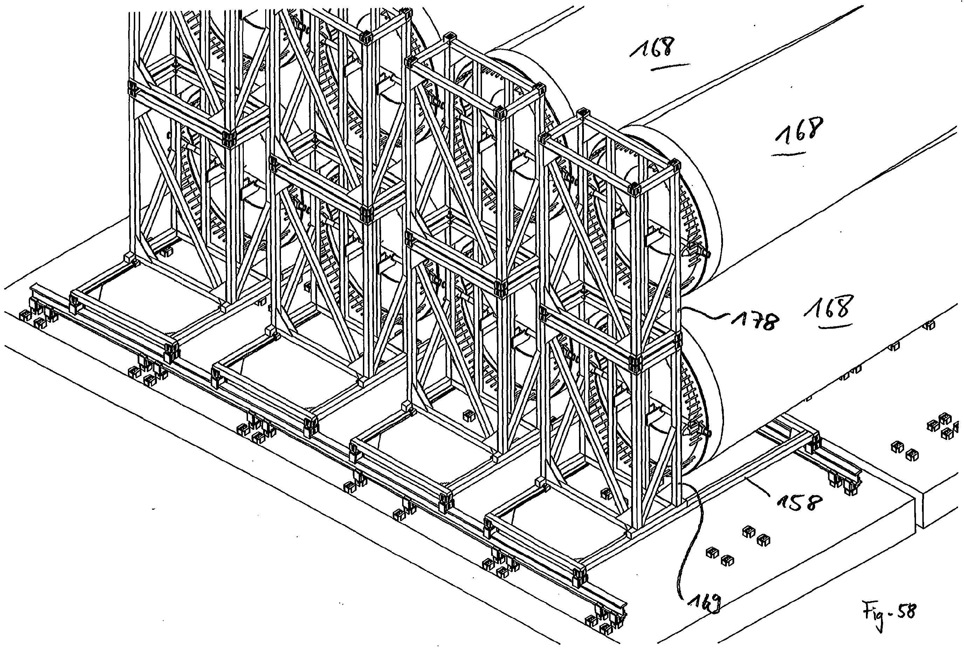

Fig. 58: eine Ansicht zu Fig. 57 mit eingebrachten Rotorflügeln,

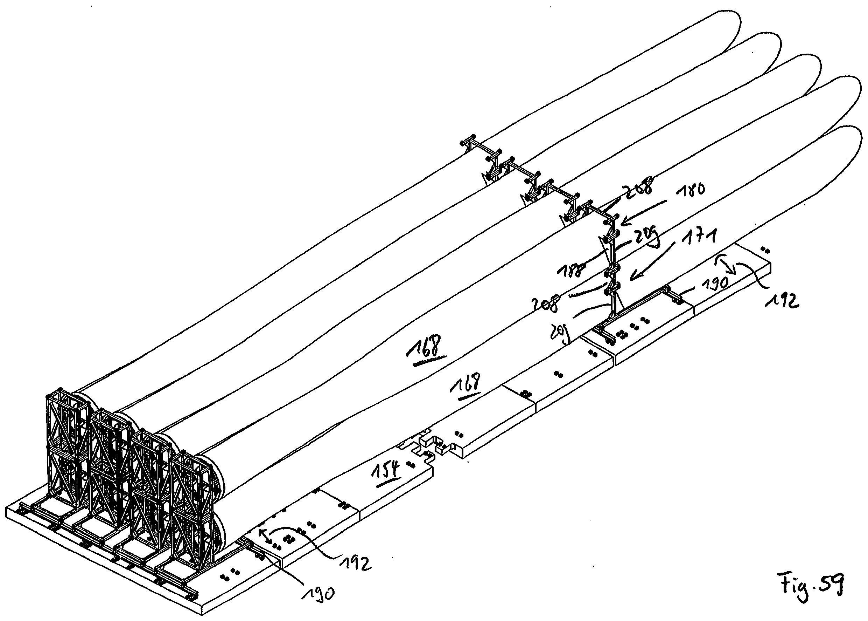

Fig. 59: eine räumliche Gesamtansicht der Rotorflügel zu Fig. 58.

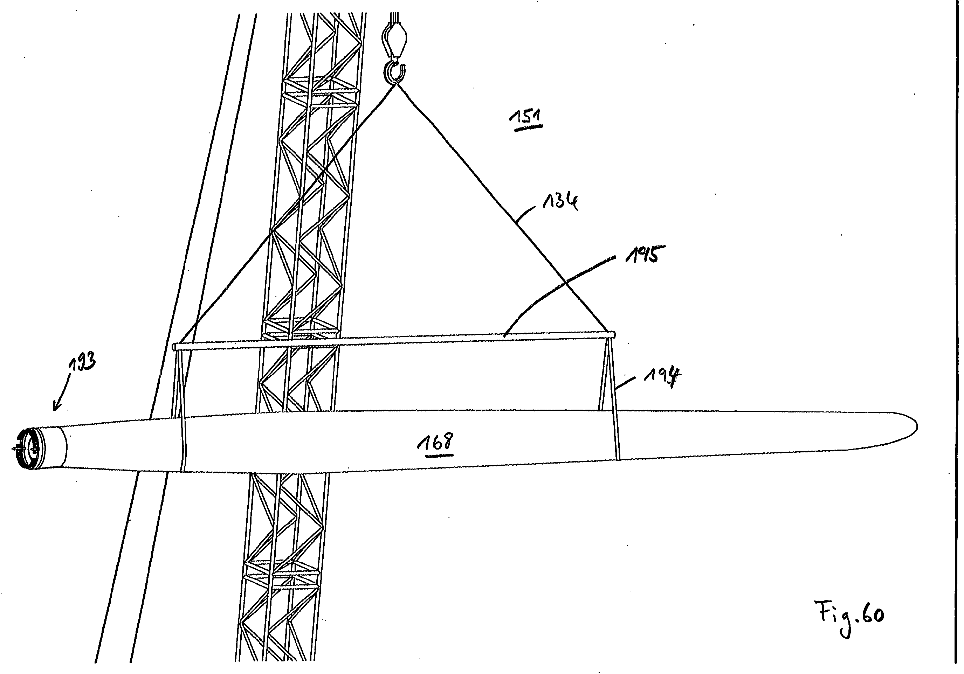

Die Fig. 60 - 65 zeigen die Montage eines Rotorflügels an die Nabe einer Windkraftanlage. Dabei zeigen:
Fig. 60: einen angehobenen Rotorflügel,

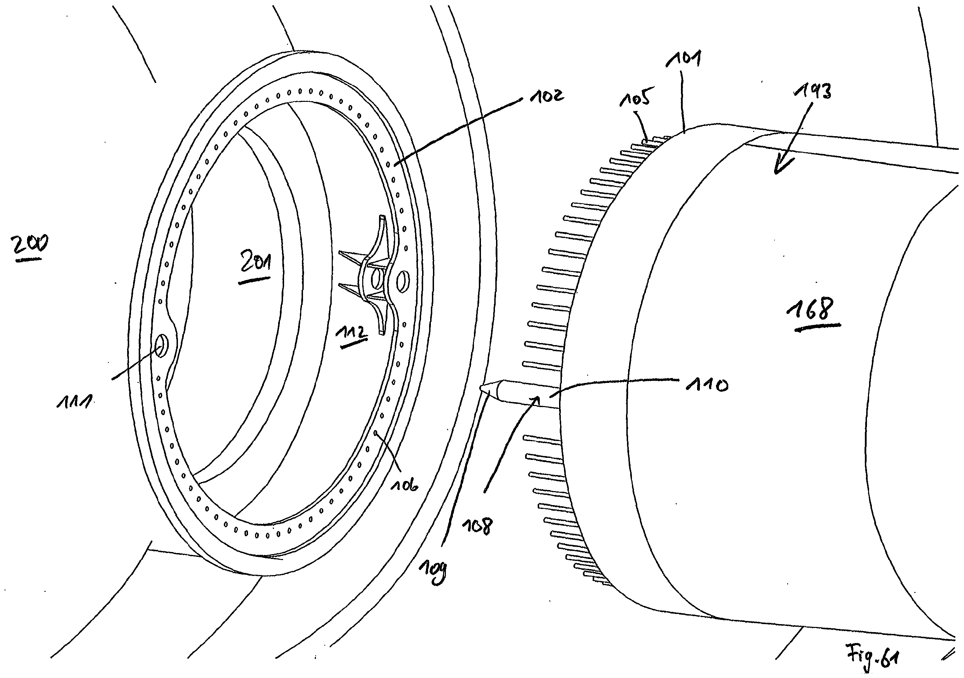

Fig. 61: das Anordnen des Montageendes des Rotorflügels vor dem Aufnahmebereich auf der Nabe,

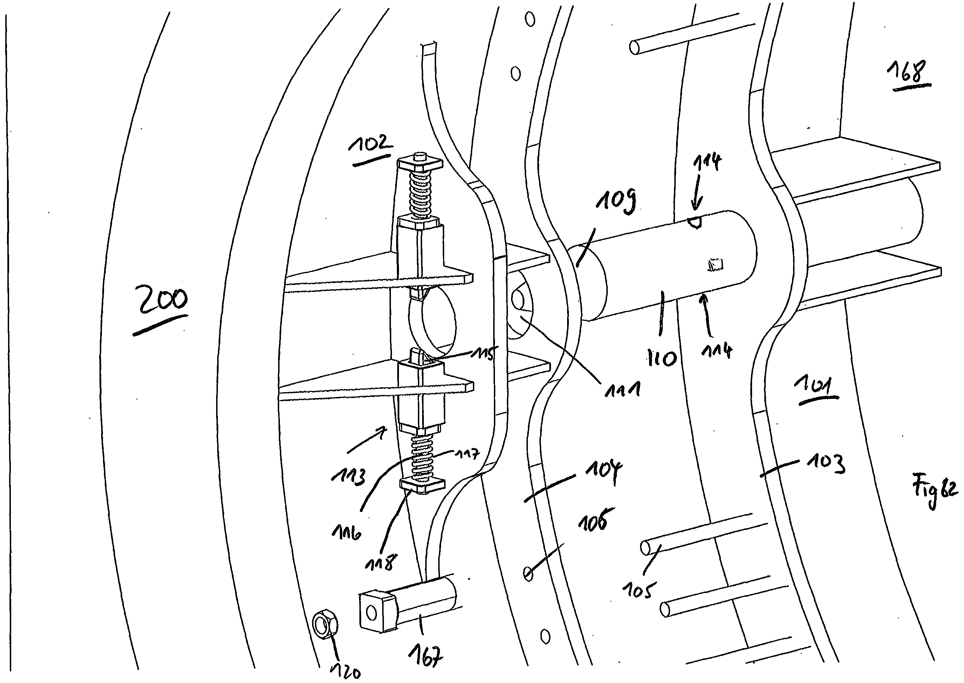

Fig. 62: eine aufgeschnittene räumliche Ansicht der Nabe und des Rotorflügels vor dem Einbringen des Rotorflügels in die Nabe,

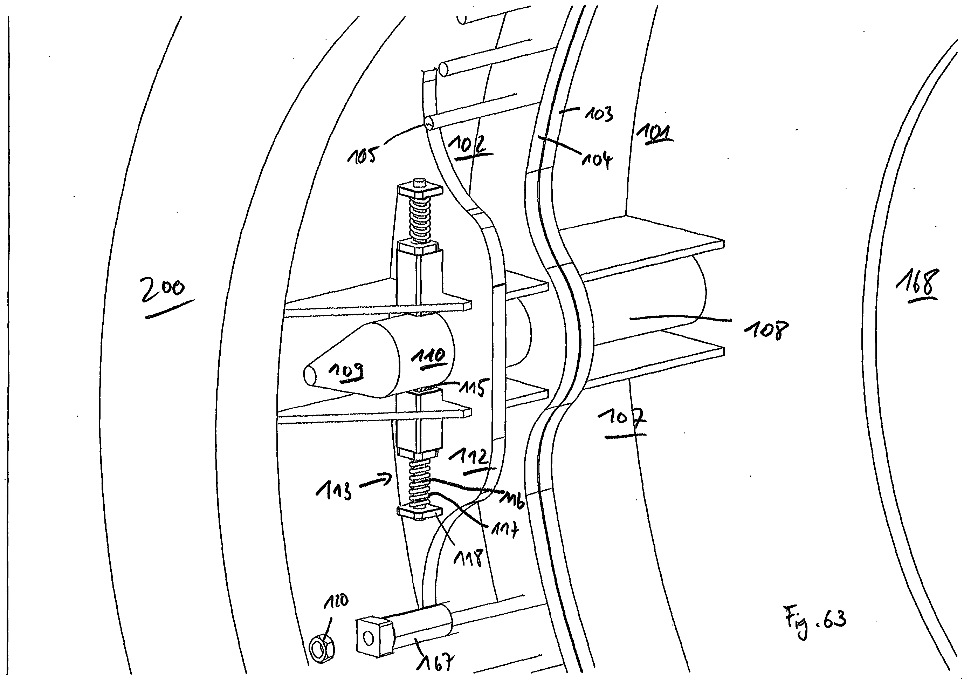

Fig. 63: eine räumliche Ansicht des mit der Nabe verbundenen Rotorflügels,

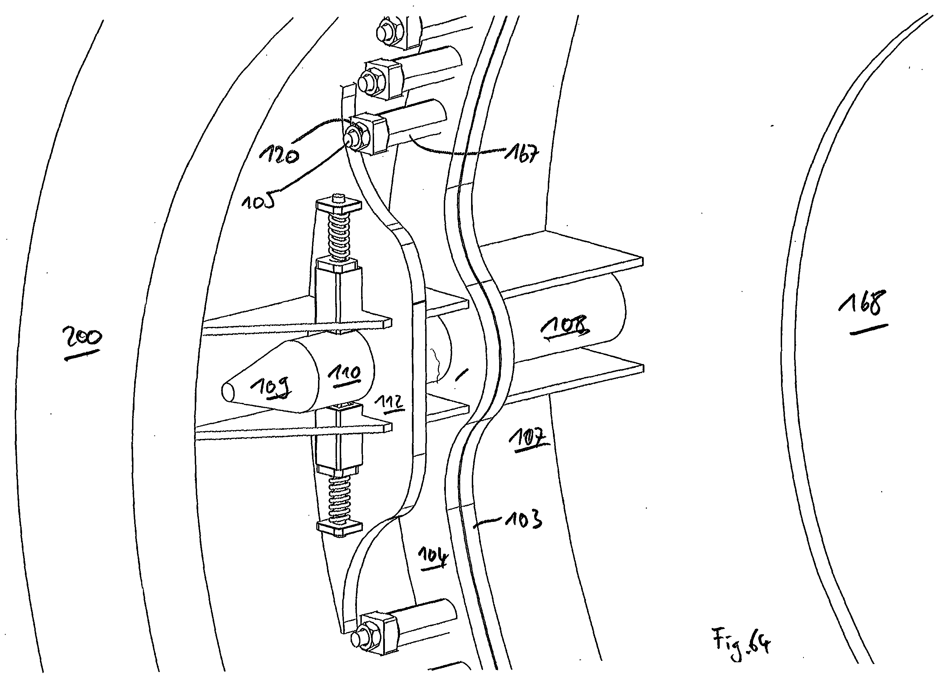

Fig. 64: eine räumliche geschnittene Ansicht analog Fig. 63 im fertig montierten Zustand,

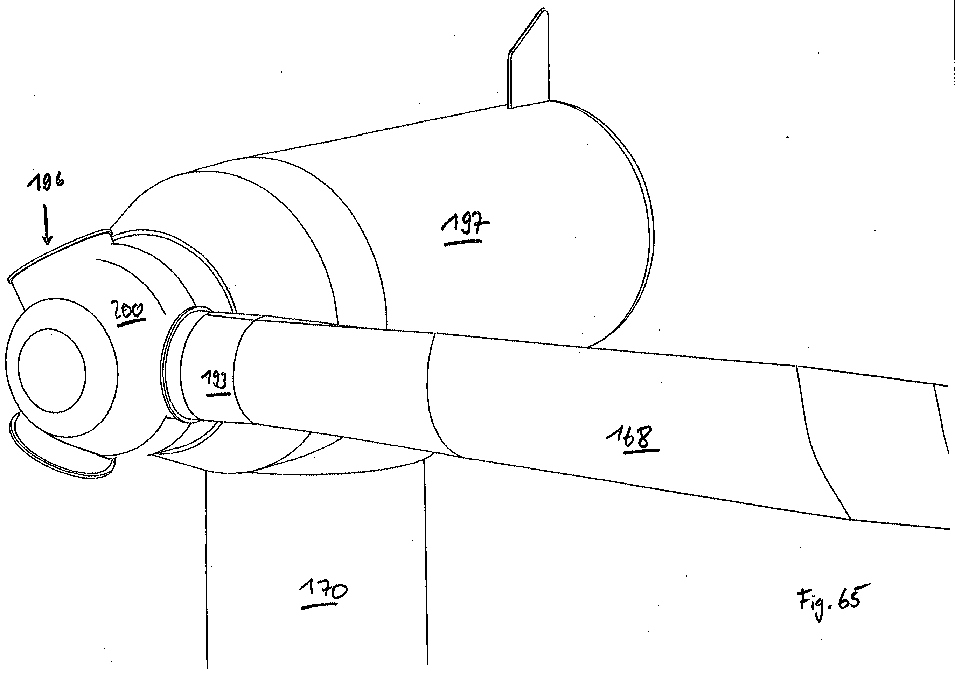

Fig. 65: eine räumliche Darstellung des an die Nabe einer Windkraftanlage montierten Rotorflügels.

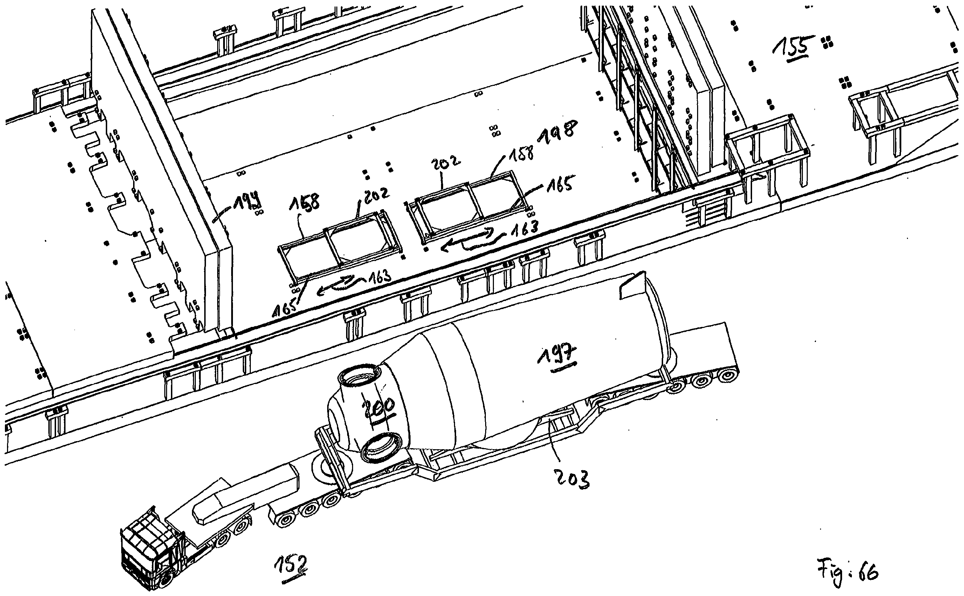

Fig. 66 - 72 zeigen den Transport und die Montage einer Gondel einer Windkraftanlage auf dem fertig errichteten Turm einer Windkraftanlage. Dabei zeigen:
Fig. 66: eine räumliche Ansicht einer Gondel vor dem Stauen auf einem Schiff,

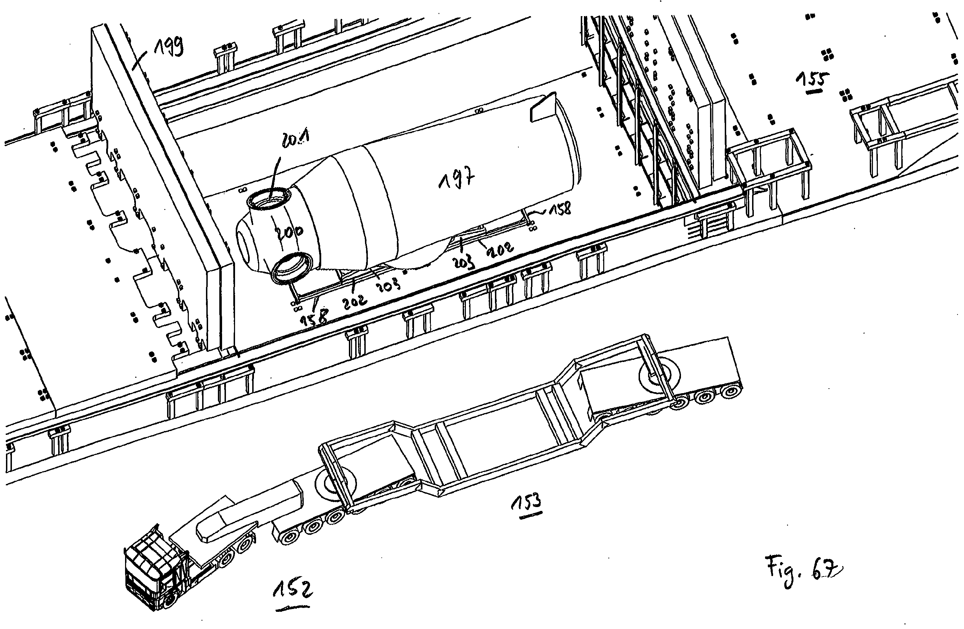

Fig. 67: die im Schiff verstaute Gondel,

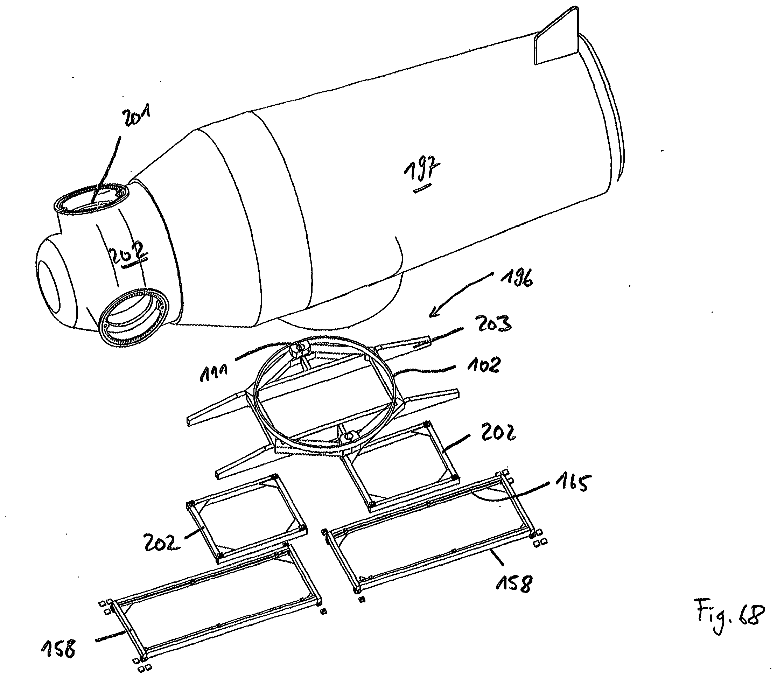

Fig. 68: eine Explosionsansicht des Transportelements der Gondel,

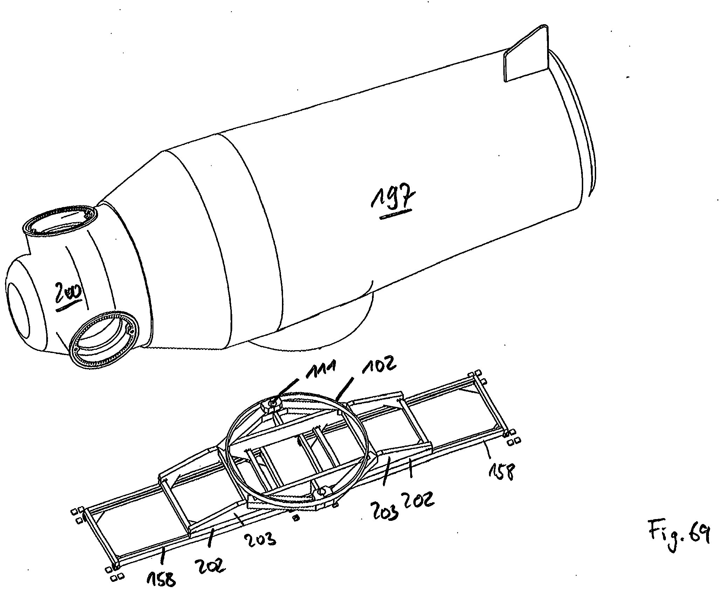

Fig. 69: eine zusammengesetzte Ansicht zu Fig. 68,

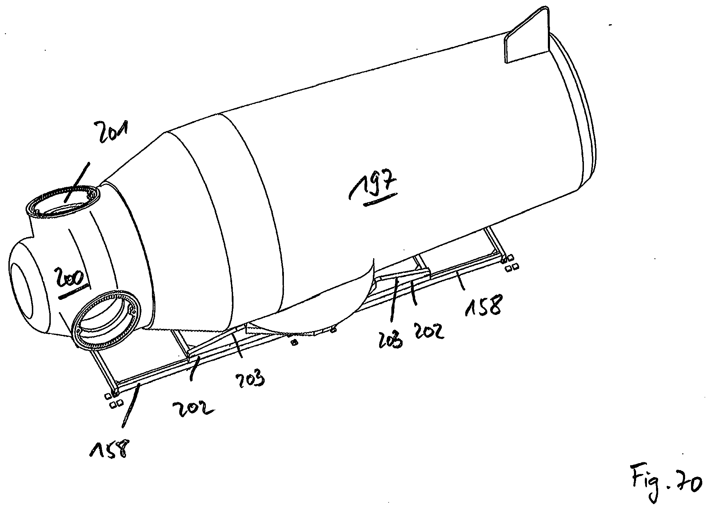

Fig. 70: eine zusammengesetzte Ansicht zu Fig. 69,

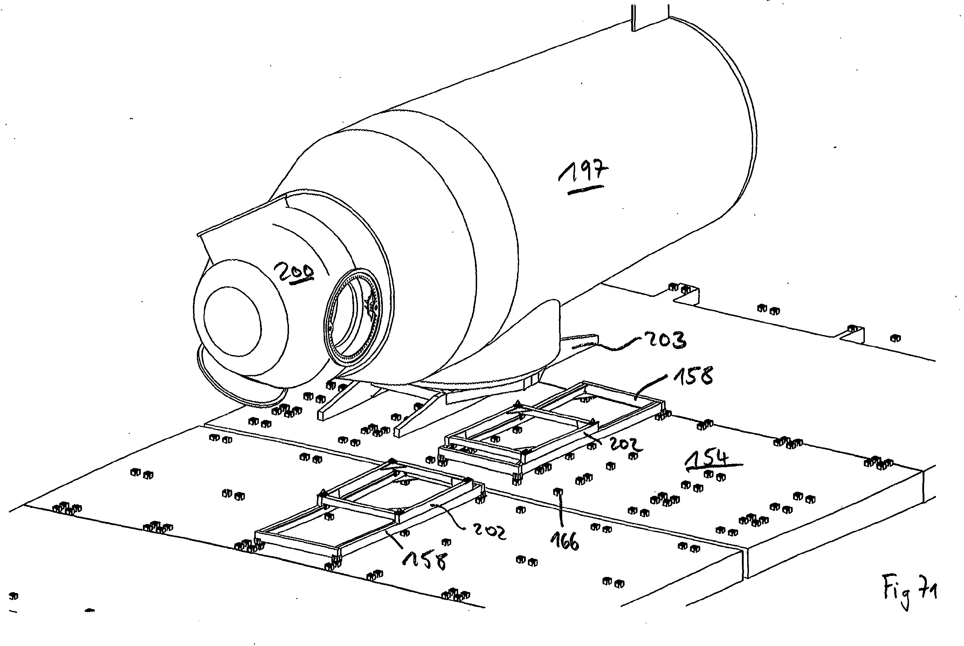

Fig. 71: eine teilweise Explosionsansicht zu Fig. 67,

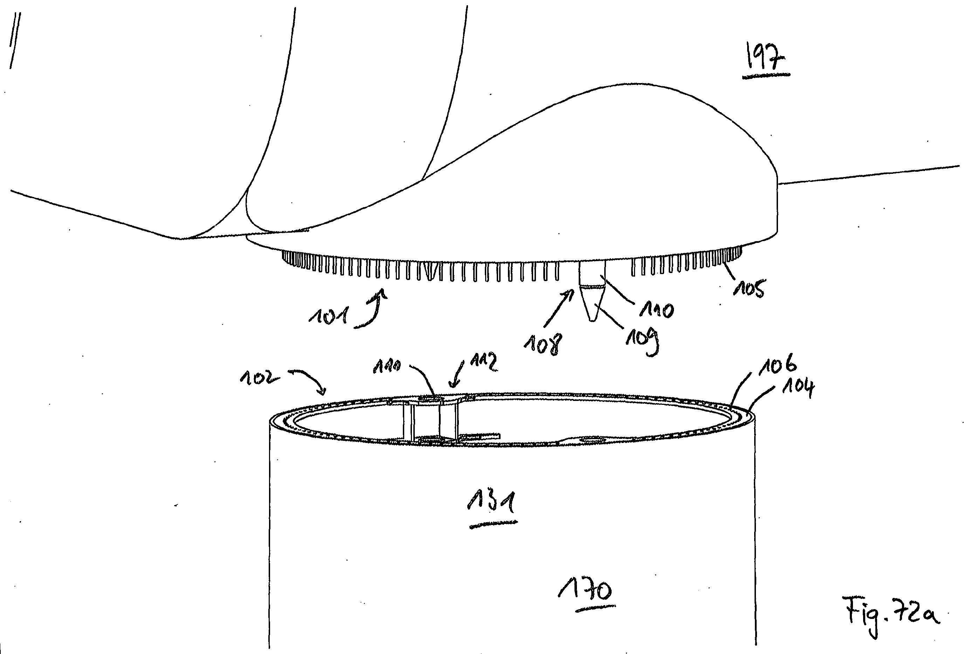

Fig. 72a: eine räumliche Ansicht des Montagebereichs der Gondel beim Montieren der Gondel auf dem Turm der Windkraftanlage, und

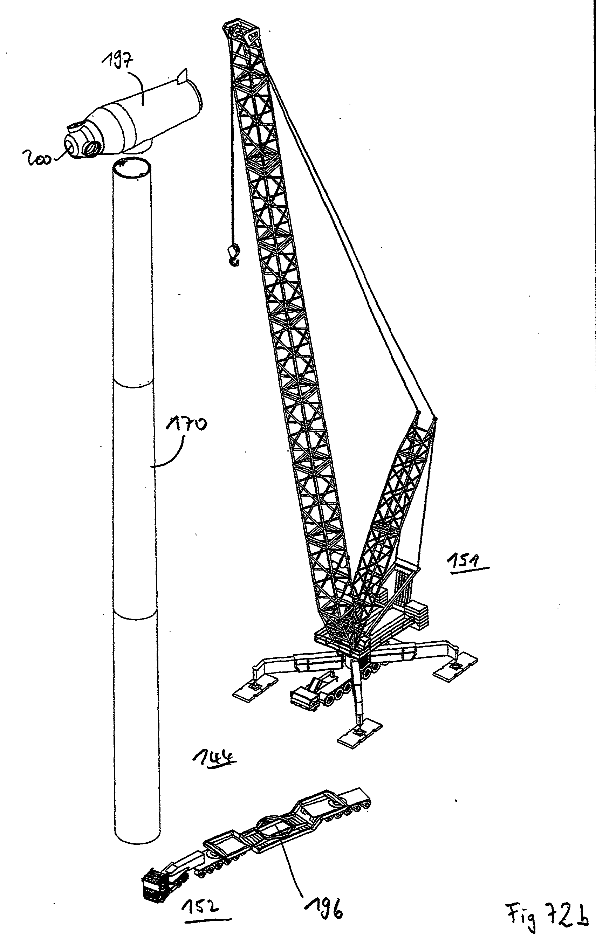

Fig. 72b: eine räumliche Gesamtansicht der Montage der Gondel auf dem Turm der Windkraftanlage.

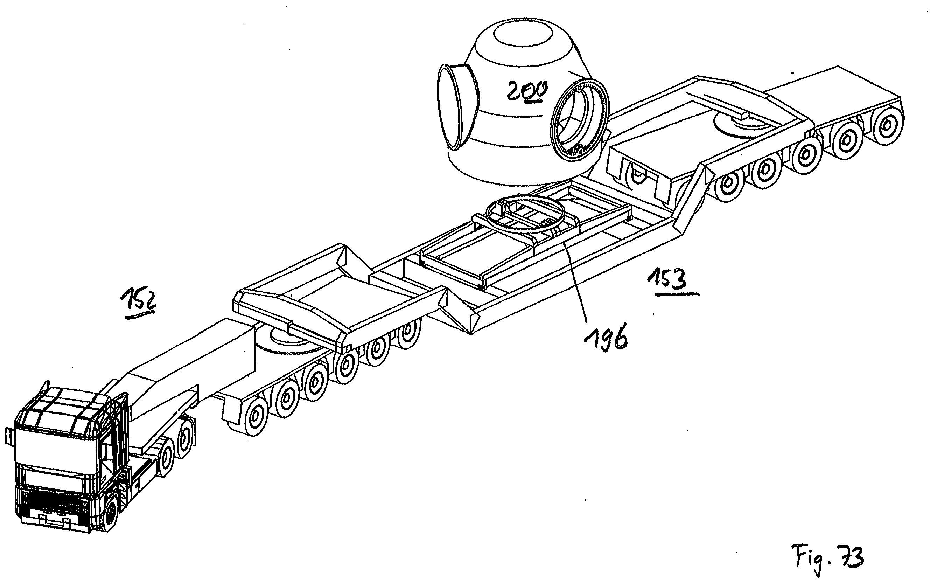

Fig. 73 - 78 zeigen den erfindungsgemäßen Transport und die erfindungsgemäße Montage einer Nabe einer Windkraftanlage. Dabei zeigen:
Fig. 73: eine räumliche Ansicht des Aufladens einer Nabe auf ein Fahrzeug,

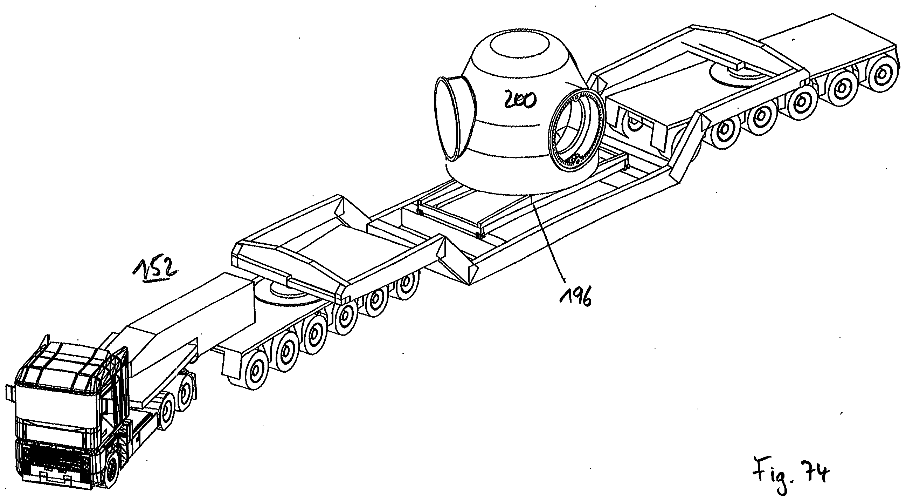

Fig. 74: die auf dem Fahrzeug montierte Nabe,

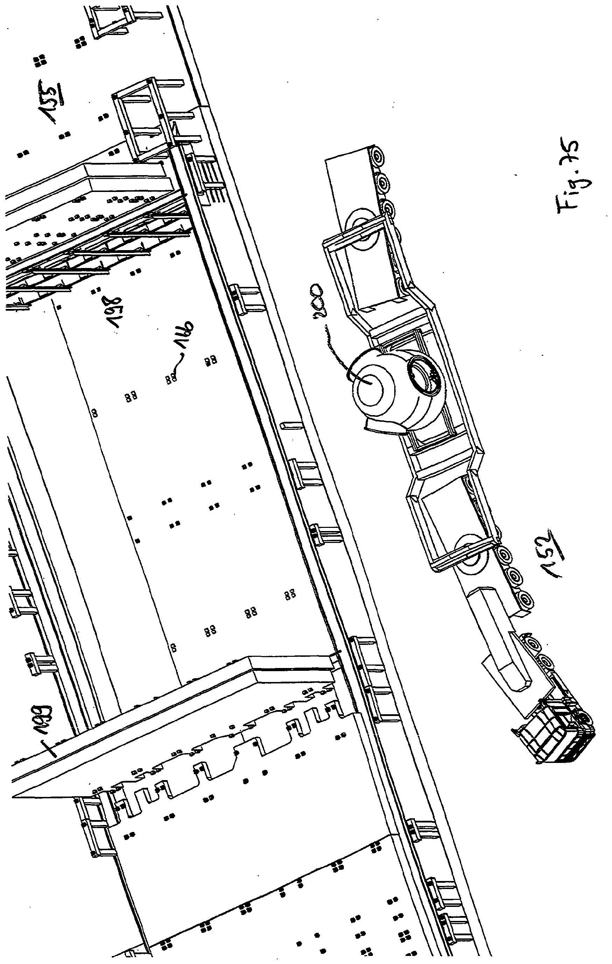

Fig. 75: die Anlieferung der Nabe zu einem Schiff,

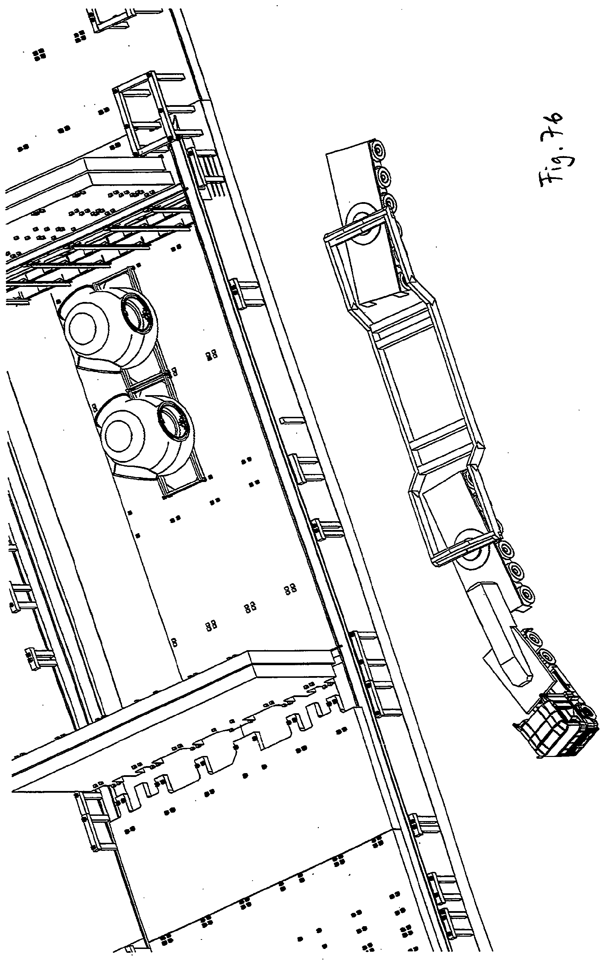

Fig. 76: die in dem Schiffsstauraum eingebrachte Nabe,

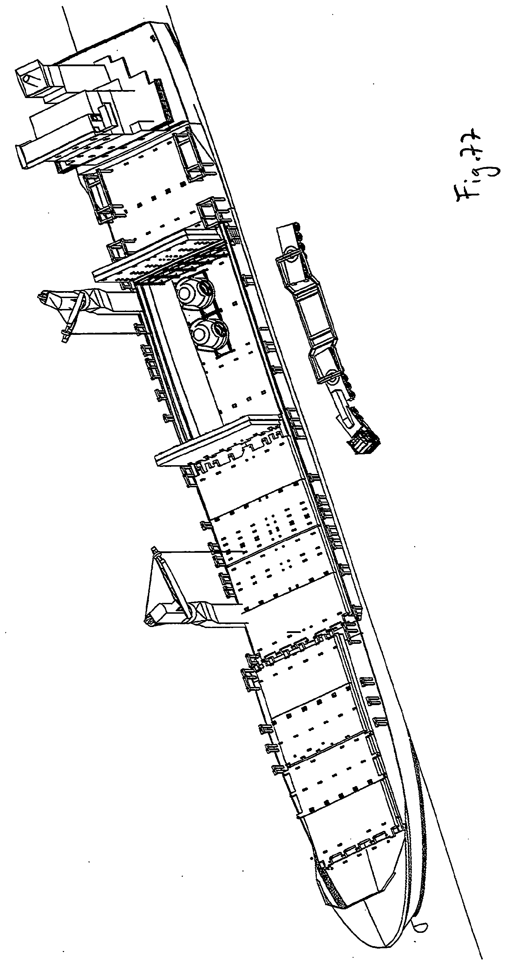

Fig. 77: eine räumliche Totalansicht zu Fig. 76,

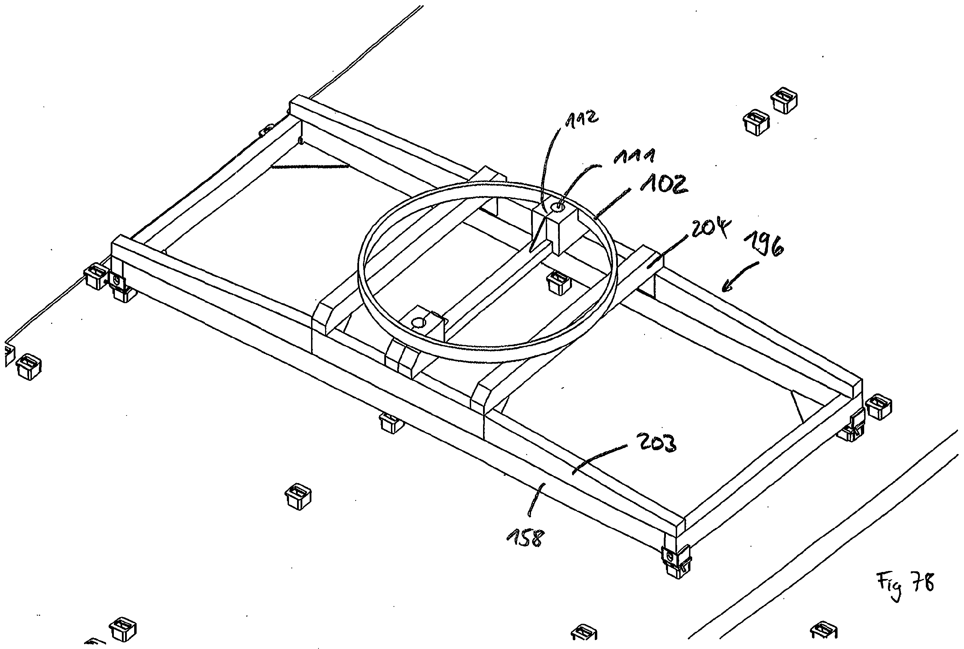

Fig. 78: eine räumliche Ansicht eines Transportelements für eine Nabe,

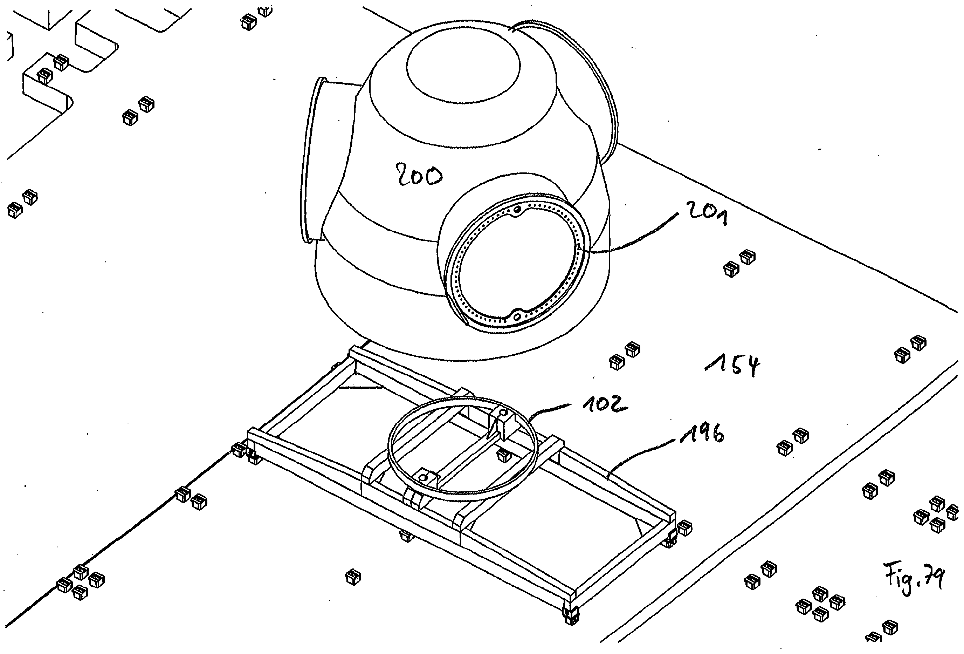

Fig. 79: das Aufbringen der Nabe auf ein Transportelement,

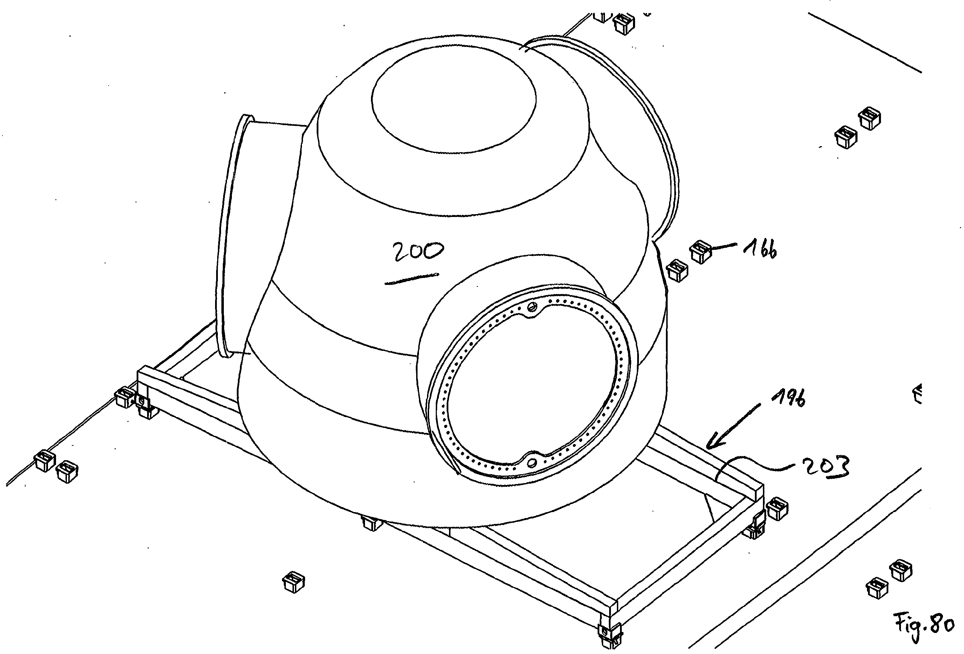

Fig. 80: die auf das Transportelement aufgebrachte Nabe,

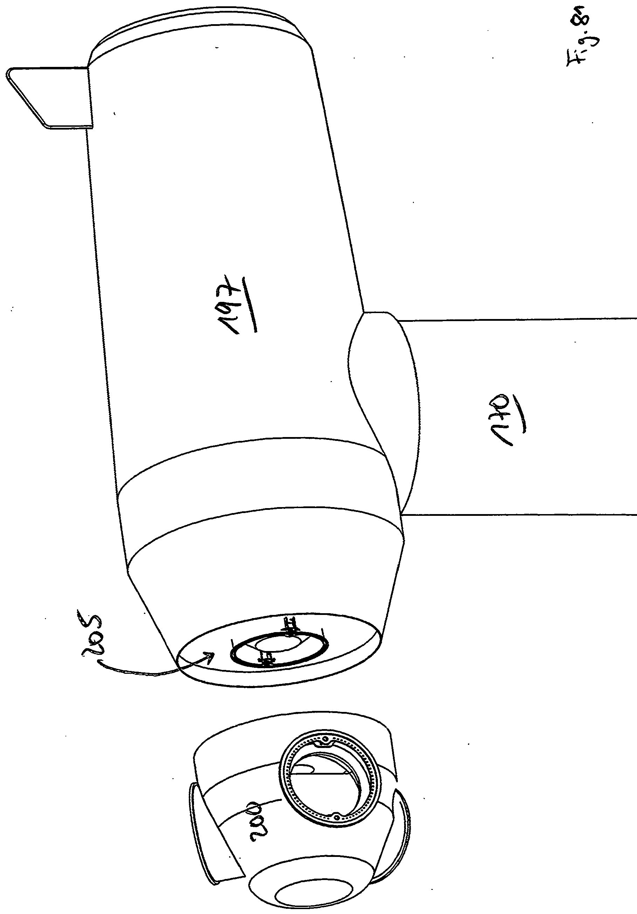

Fig. 81: das Montieren der Nabe an einer Gondel einer Windkraftanlage,

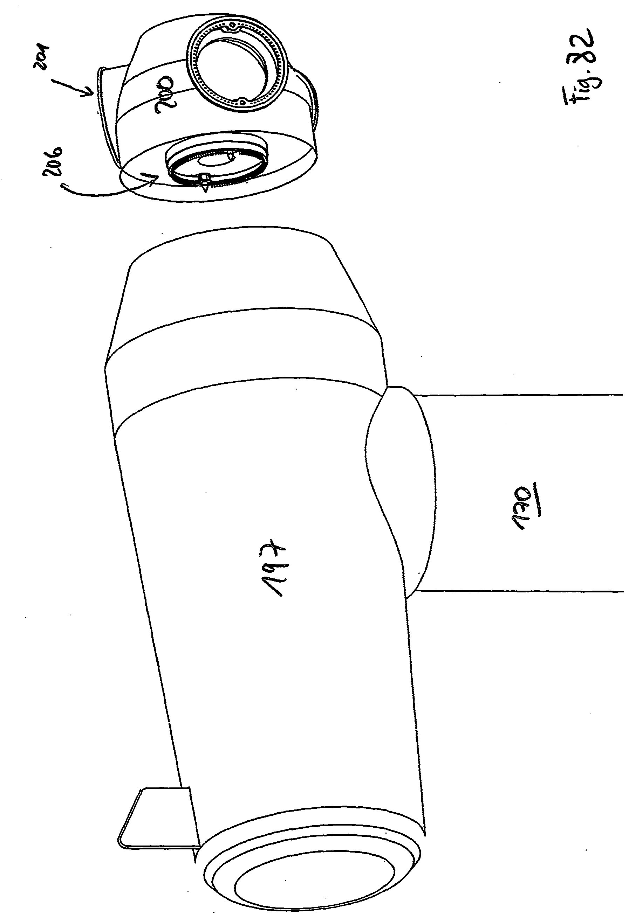

Fig. 82: eine weitere räumliche Ansicht zu Fig. 81,

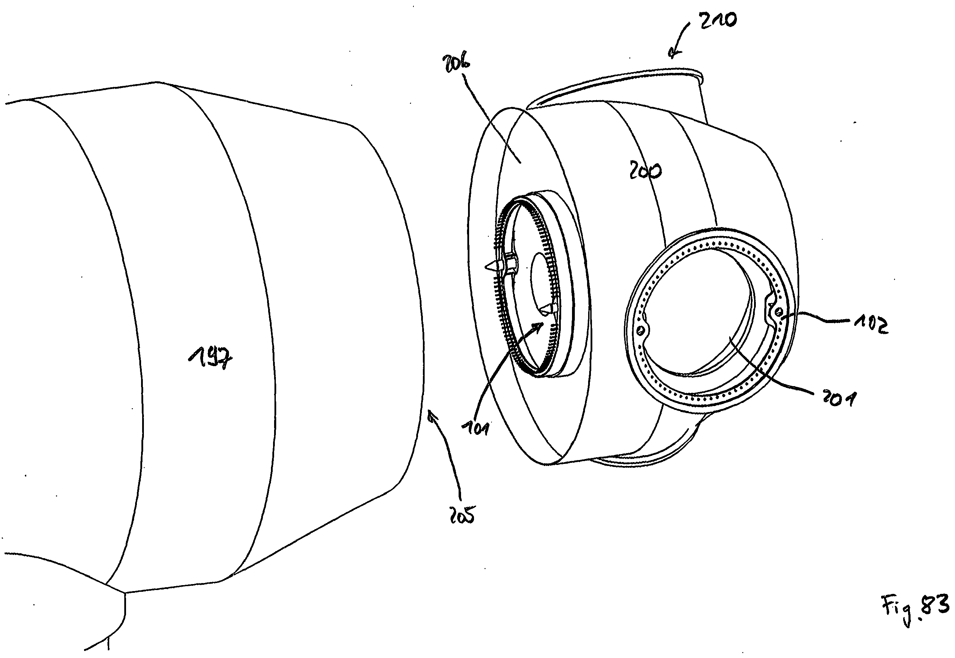

Fig. 83: eine vergrößerte Ansicht zu Fig. 82,

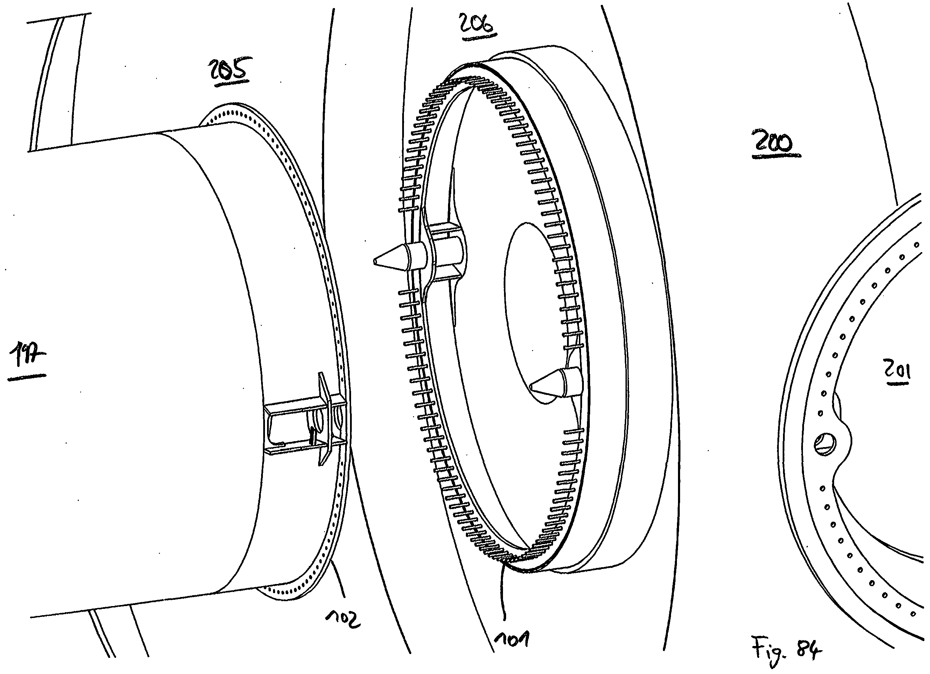

Fig. 84: eine teilweise räumliche Schnittansicht zu Fig. 83,

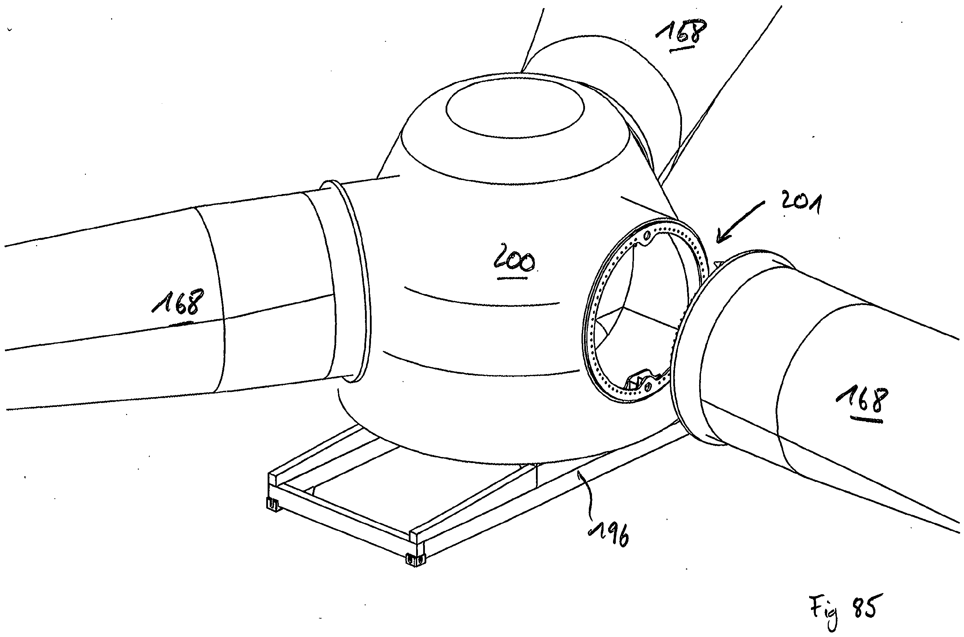

Fig. 85: die Montage von Rotorflügeln in der Nabe vor Montage der Nabe an der Gondel,

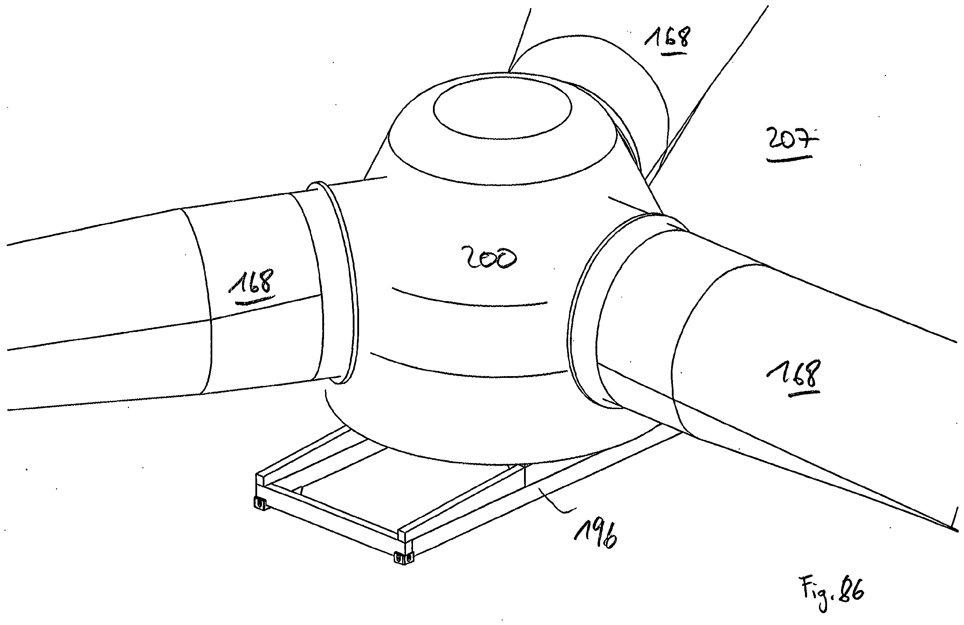

Fig. 86: die fertig montierte Nabe mit Rotorflügeln,

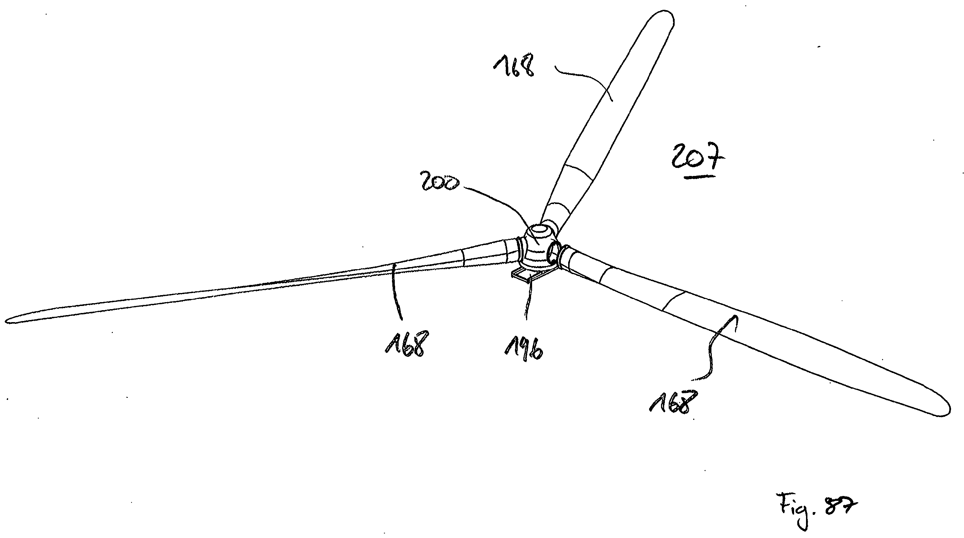

Fig. 87: eine räumliche Ansicht zu Fig. 86,

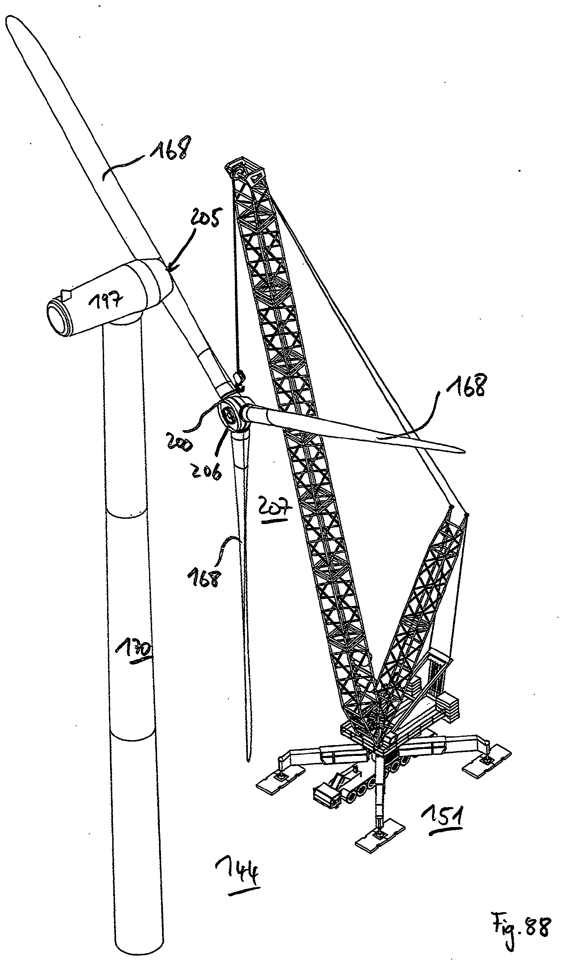

Fig. 88: die Montage der Nabe mit Rotorblättern an der Gondel.

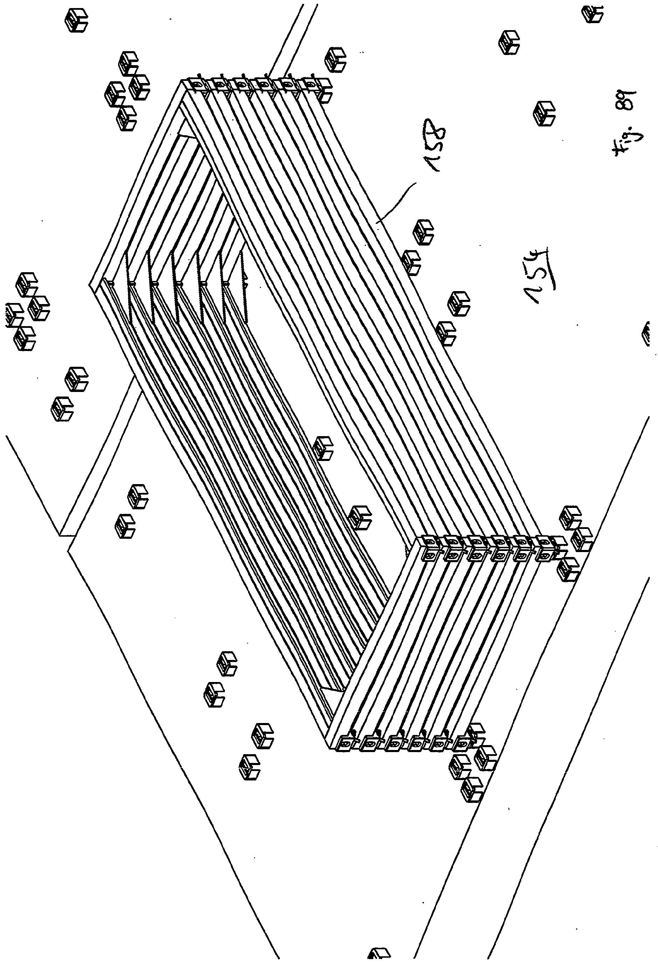

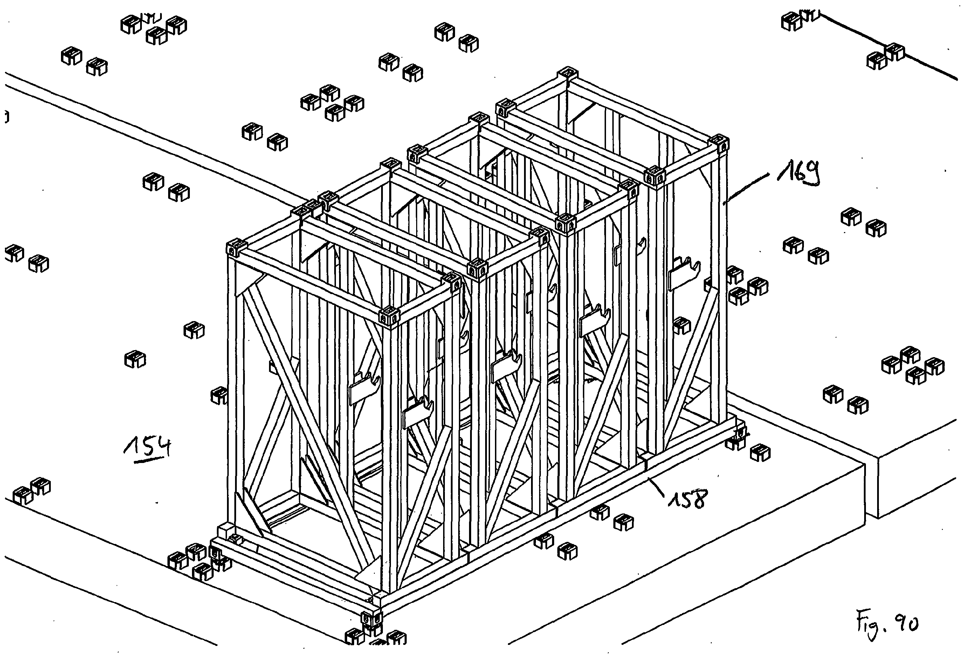

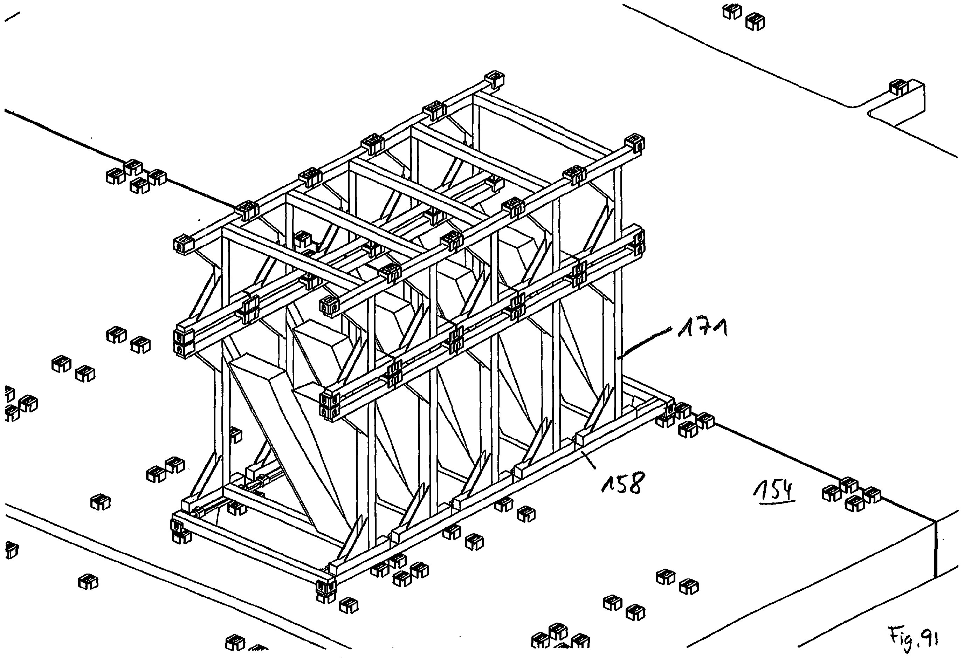

Fig. 89 - 91 zeigen den Rücktransport der einzelnen Transportvorrichtungen per Schiff zum Ausgangsort.

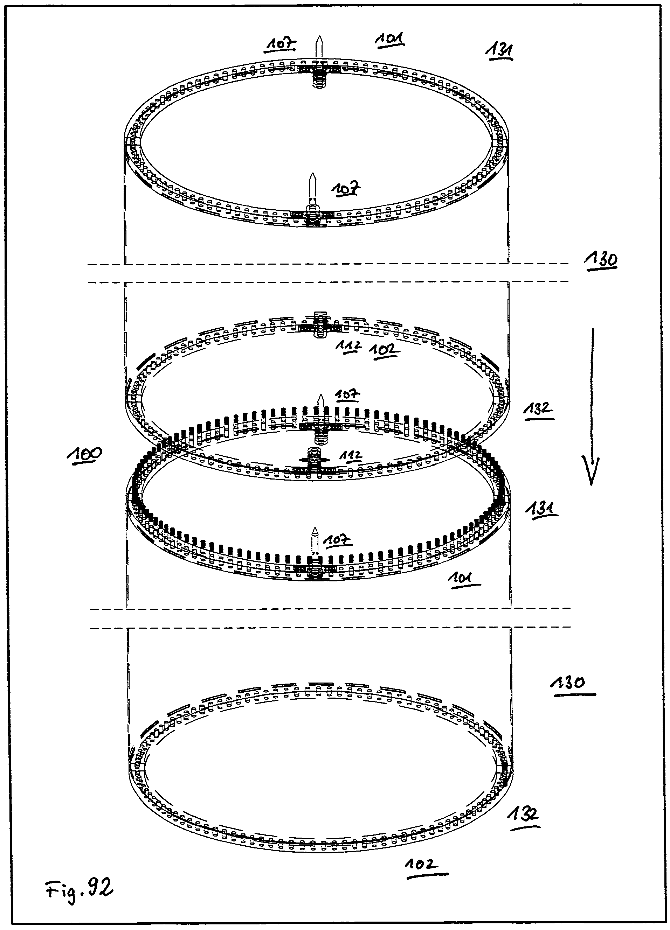

Fig. 92 bis Fig. 99 zeigen den Einsatz des erfindungsemäßen Befestigungsverfahrens. Dabei zeigen:
Fig. 92: eine räumliche Ansicht zweier Bauteile beim Zusammensetzen mit erfindungsgemäßen Befestigungssystemen,

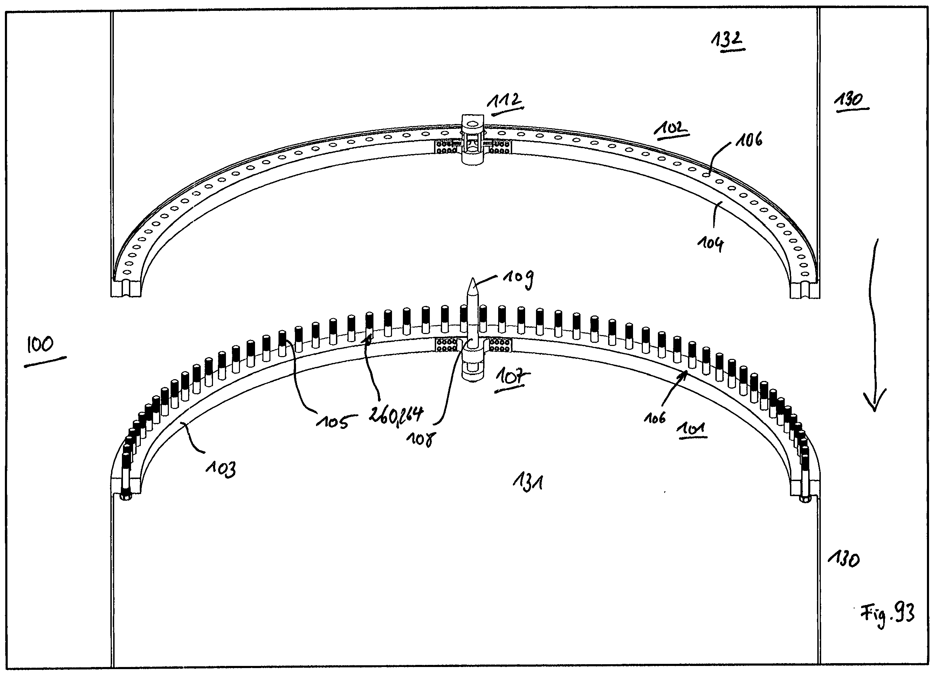

Fig. 93 eine vergrößerte Ansicht zu Fig. 92,

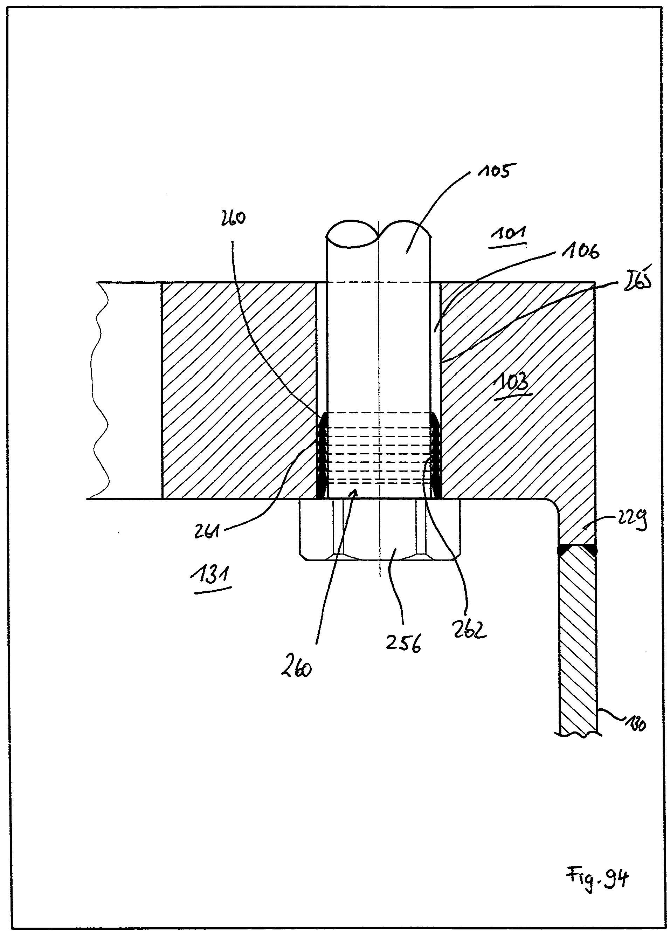

Fig. 94 eine Schnittansicht durch eine erfindungsgemäße Befestigungsvorrichtung mit einer ersten Ausführungsform eines erfindungsgemäßen Befestigungssystems,

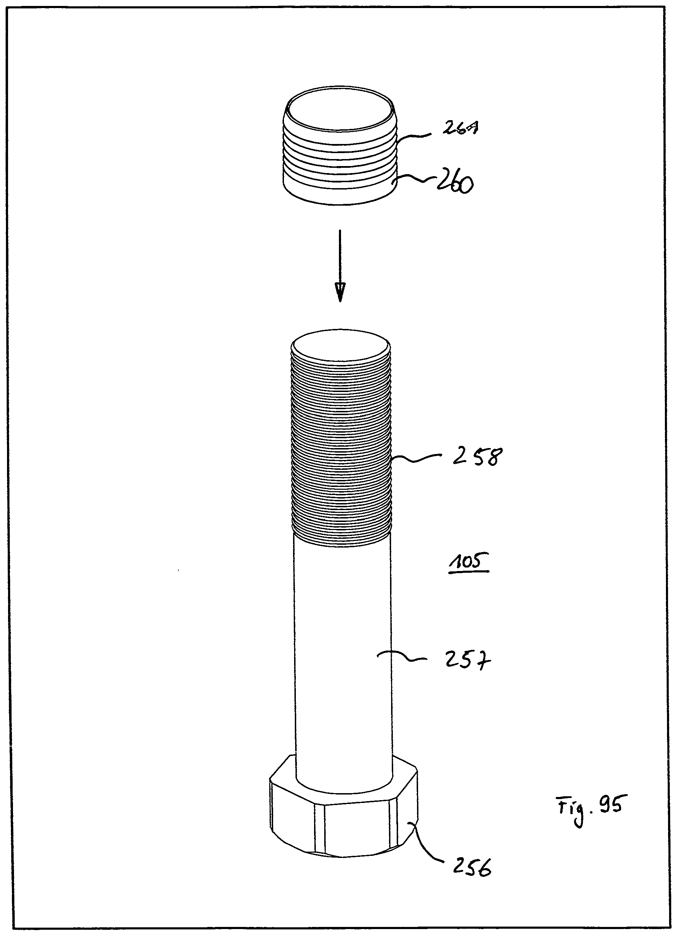

Fig. 95: eine Explosionsansicht des erfindungsgemäßen Befestigungssystems,

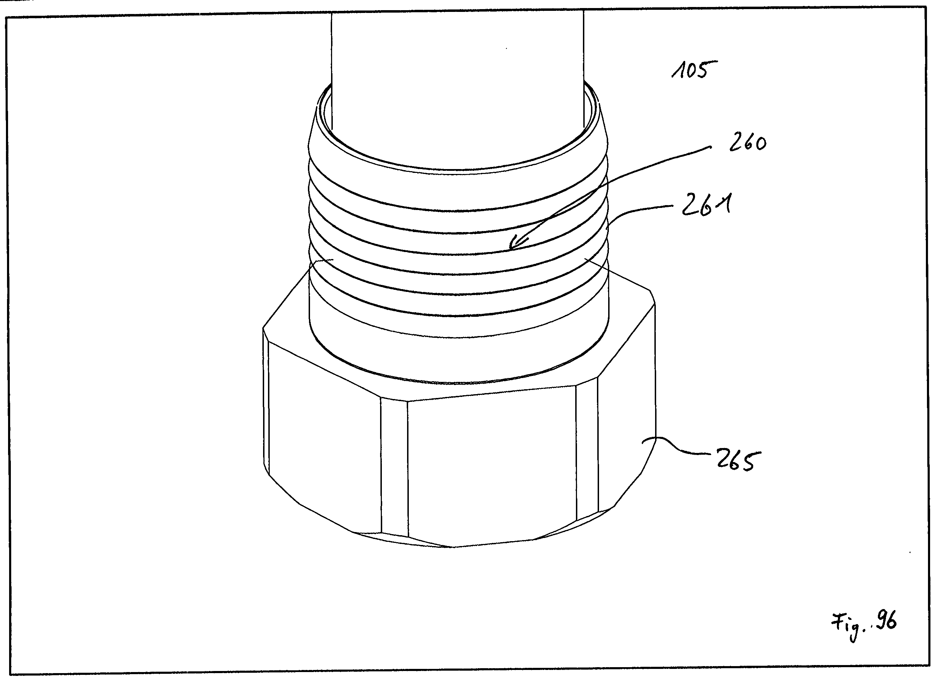

Fig. 96: eine räumliche Ansicht des erfindungsgemäßen Befestigungssystems,

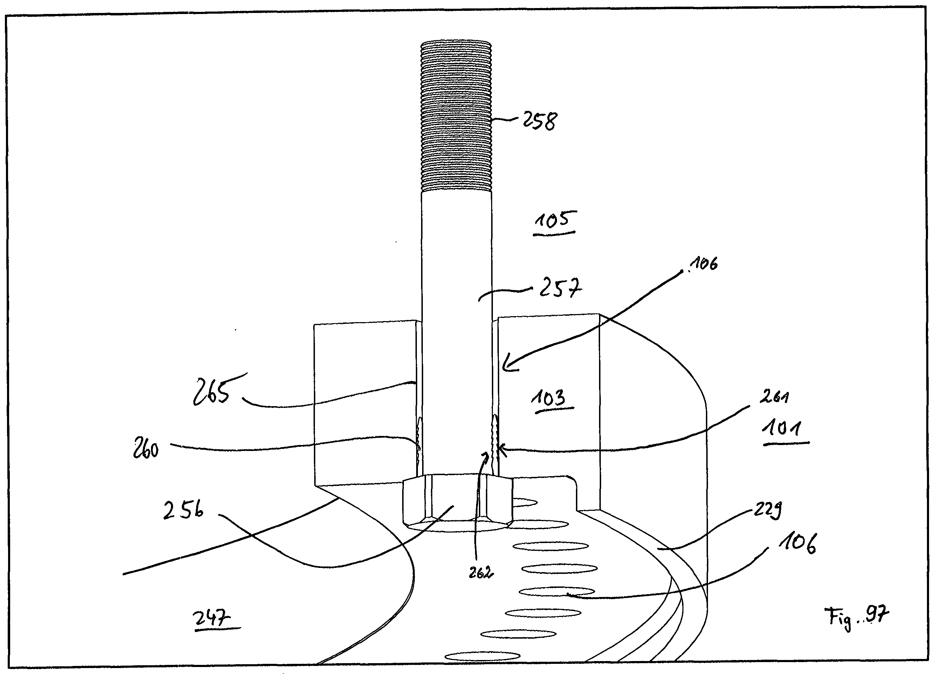

Fig. 97: eine räumliche Schnittdarstellung des erfindungsgemäßen Befestigungssystems,

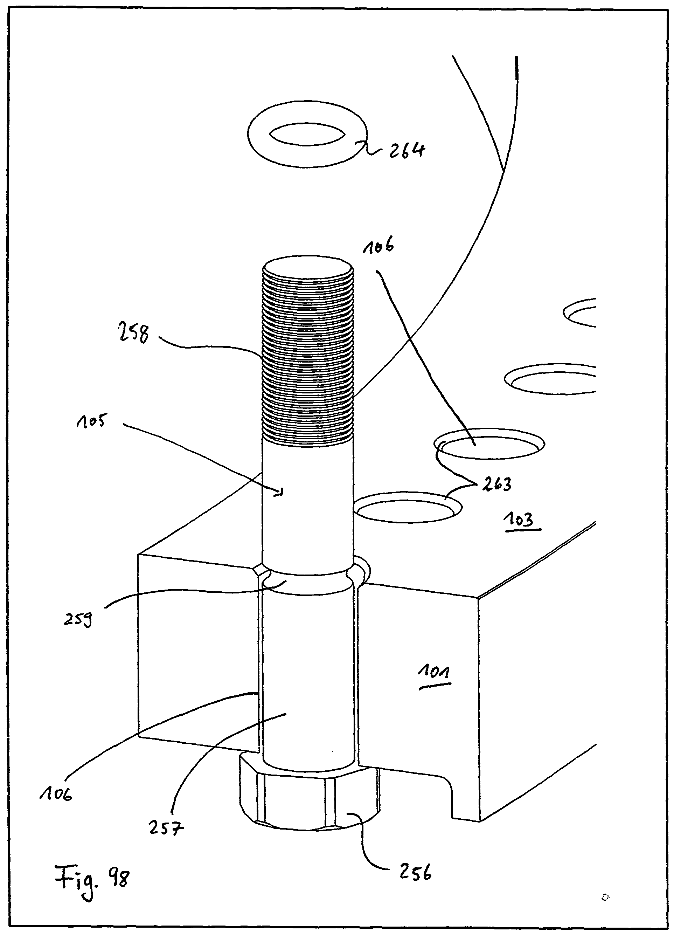

Fig. 98: eine weitere Ausführungsform des erfindungsgemäßen Befestigungssystems, und

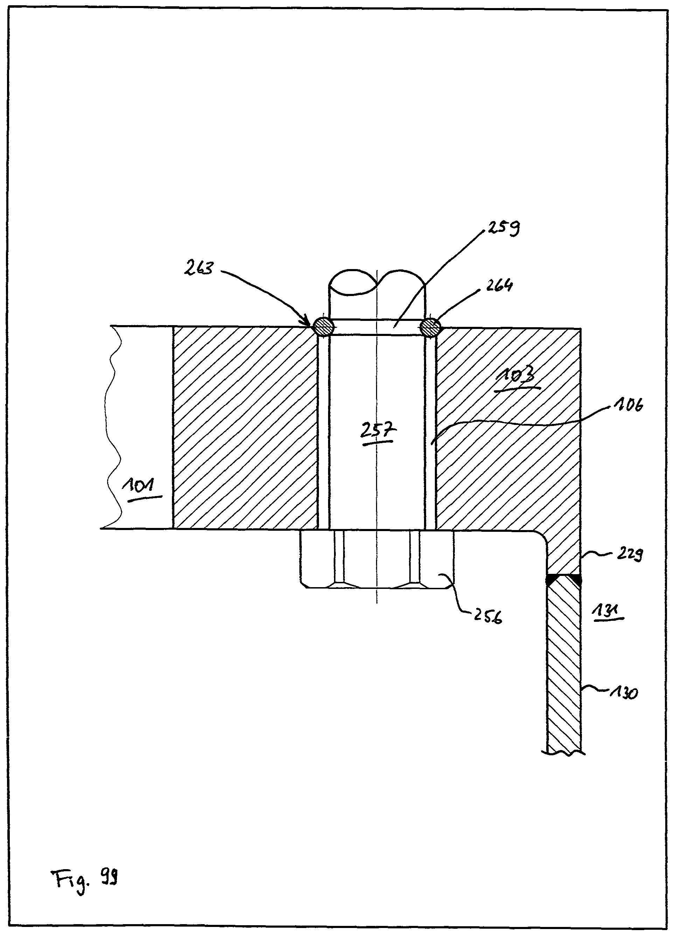

Fig. 99: eine Schnittansicht zu Fig. 98.

Fig. 1 zeigt eine erfindungsgemäße Erfindungsvorrichtung 100, die aus einem männlichen Element 101 und einem weiblichen Element 102 besteht. Das männliche Element 101 weist einen Flansch 103 auf, an dessen Unterseite Gewindestifte 105 vorgesehen sind. An zwei gegenüberliegenden Positionen ist ein Führungselement 107 vorgesehen, dass einen Führungsstift 108 aufweist, der in die gleiche Richtung wie die Gewindestifte angeordnet ist. Alternativ ist auch eine größere Anzahl von Führungsstiften 108 möglich. Der Führungsstift 108 besteht aus einem zylindrischen Grundkörper 110 und einem an der Spitze des Grundkörpers 110 angeordneten Konus 109.

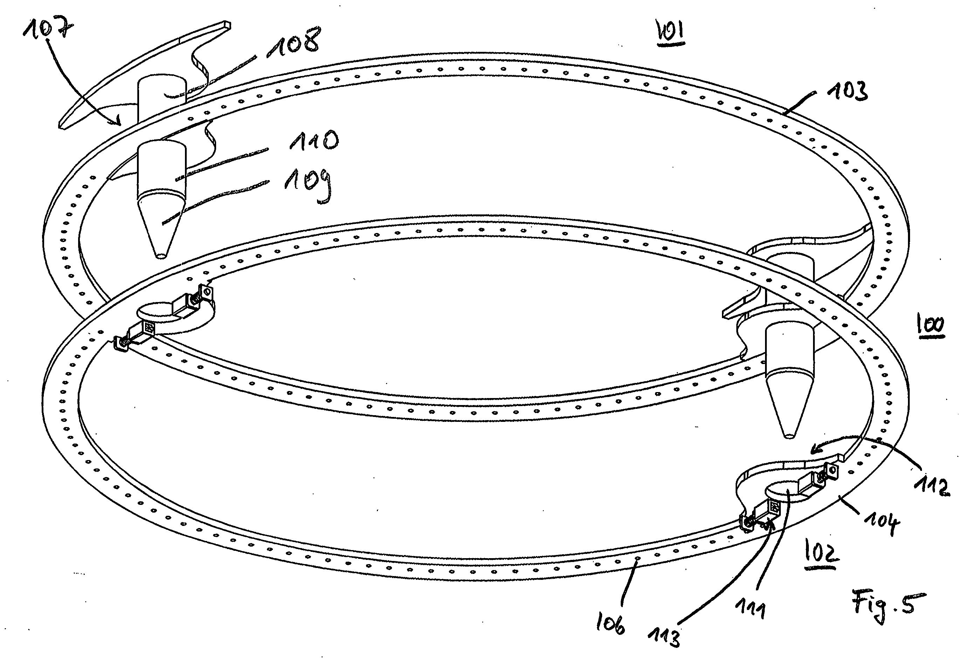

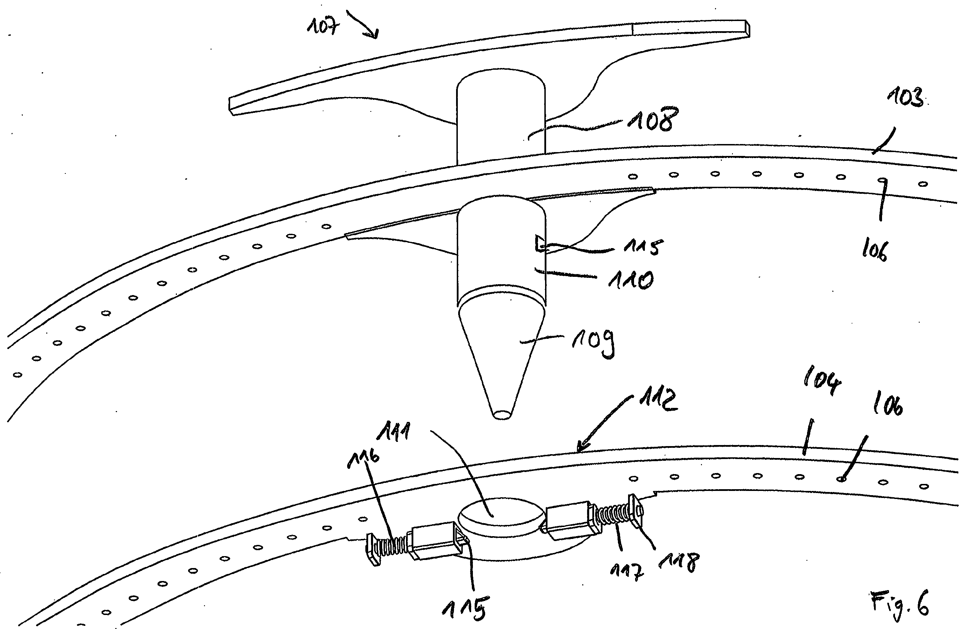

Das weibliche Element 102 weist ebenfalls einen Flansch 104 auf, in dem korrespondierend zu den Gewindestiften 105 Bohrungen 106 vorgesehen sind. An korrespondierenden Positionen zum Führungselement 107 ist ein Aufnahmekörper 112 vorgesehen, der auf Flanschhöhe eine Öffnung 111 aufweist. In diese Öffnung 111 greift der Führungsstift 108 mit seinem Konus 109 ein und zentriert damit beim Absenken des Bauteils, an dem sich das männliche Element 101 befindet, derart, dass die Gewindestifte 105 in die Bohrungen 106 direkt eingeführt werden können. Damit eine erste Arretierung der Elemente miteinander erfolgen kann, und anschließend Muttern 120 auf die Gewindestifte 105 zur dauerhaften Verbindung des männlichen und des weiblichen Elements 101, 102 erfolgen kann, ist im Aufnahmekörper 112 eine Verriegelung 113 vorgesehen. Die Verriegelung 113 (siehe Fig. 5 bis 7c) umfasst einen mit einer Feder 117 beaufschlagten Stift 116, an dessen vorderem Ende eine Nase 115 und am hinteren Ende eine Platte 118 als Führung angeordnet ist. Der Grundkörper 110 des Führungsstiftes 108 weist eine Vertiefung 114 auf, die mit der Nase 115 des Stiftes 116 korrespondiert. Wenn der Konus 109 des Führungsstiftes 108 in die Öffnung 111 eingreift, drückt dieser gegen die Nase 115 und schiebt den Stift 116 gegen die Feder 117 nach außen. Befinden sich die Flansche 103 und 104 aufeinander, rastet die Nase 115 in die Vertiefung 114 im Grundkörper 110 ein und die Feder 117 drückt den Stift wieder nach vorne, so dass der Stift 116 eine haltende Verbindung mit dem Führungsstift 108 erzeugt, so dass die beiden Bauteile, an denen sich das männliche Element 101 und das weibliche Element 102 befindet, eine erste vorläufige haltende Verbindung miteinander eingehen, so dass ggf. sogar eventuell haltende Elemente wie Kranseil etc., die eine Unterstützung bewirken, vorzeitig gelöst werden können.

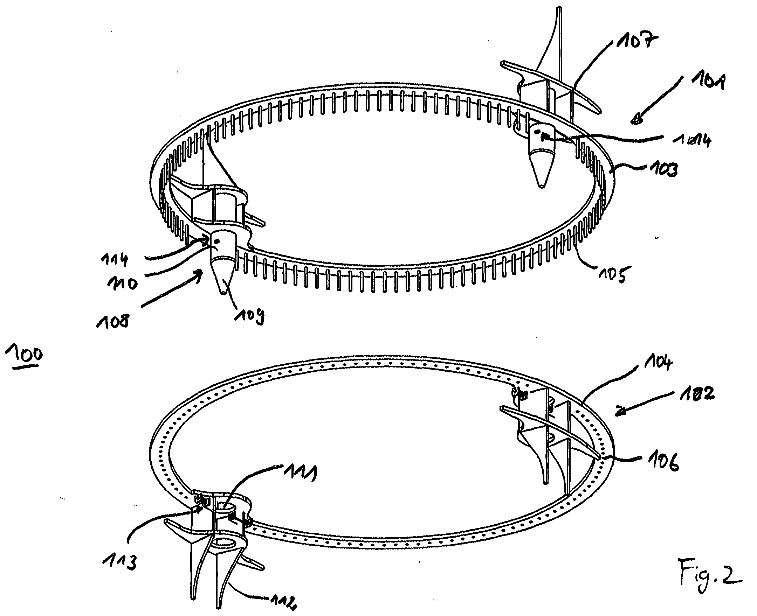

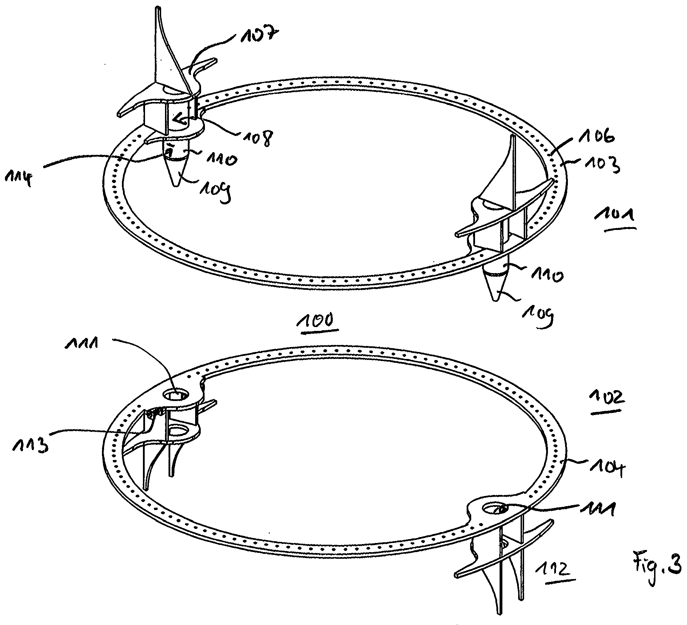

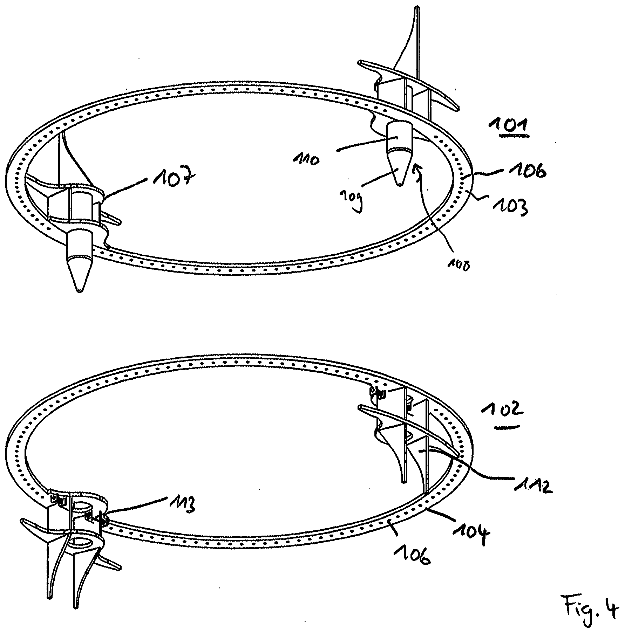

Eine alternative Ausführungsform zu der Verbindungsvorrichtung 100 ist in den Fig. 3 und 4 dargelegt. Diese unterscheidet sich von der Ausführungsform gemäß Fig. 1 und 2 dadurch, dass anstelle der vorangebrachten Gewindestifte 105 am Flansch 103 Bohrungen 106 vorgesehen sind. Nach Einbringen der Führungsstifte 108 und die Öffnungen 111 fluchten die Bohrungen 106 der Flansche 103 und 104 derart, dass Schrauben 119 durch die Bohrungen 106 hindurchgeschoben werden können und mit Muttern 120 gesichert werden können. In Fig. 5 bis 7d ist der Prozess des Zusammenführens des männliche Element 101 und des weiblichen Elements 102 bei der Montage von Bauteilen, an dem die Verbindungsvorrichtung 100 vorgesehen ist, dargestellt, wie dieses zuvor bereits beschrieben wurde.

Eine weitere alternative Ausführungsform der Verbindungsvorrichtung 100 ist in Fig. 7d dargestellt. Dabei ist am Flansch 103 und am Flansch 104 jeweils eine Aufnahmeplatte 210 angeordnet, die über eine Schweißverbindung 215 mit dem Flansch 103, 104 verbunden ist. Die Aufnahmeplatte 210 weist eine Öffnung 211 auf, durch die der Führungsstift 108 des Führungselements 107 einsetzbar ist. Der Flansch 103, 104 ist an der jeweils dem späteren Bauteil 130 zugewandten Seite mit Gewindebohrungen 212 versehen, die im Bereich der Aufnahmeplatte 210 vorgesehen sind. die Gewindebohrungen 212 dienen dazu, das Führungselement 107 bzw. den Aufnahmekörper 112 über Schrauben 213 mit dem Flansch 103, 104 zu verbinden.

Das Führungselement 107 weist in dieser Ausführungsform eine Kopfplatte 214 auf, die ebenfalls mit einer Öffnung 211 versehen ist, durch die der Führungsstift 108 eingesetzt wird. Die Kopfplatte 214 besteht aus einem Kopfabschnitt 222, einem Seitenabschnitt 223 und einem Befestigungsabschnitt 224, die in etwa eine Z-Form aufweisen. Im Befestigungsabschnitt 224 sind Bohrungen 220 vorgesehen, durch die die Schrauben 213 hindurch gesteckt werden, um in der Gewindebohrung 212 eingeschraubt zu werden. Der Führungsstift 108 wird durch die vorgesehene Öffnung 211 eingeführt und über ein Arretierungselement 225 oder eine Schweißverbindung 236 mit der Kopfplatte 214 verbunden. Anschließend wird der Führungsstift 108 durch die Öffnung 211 der Aufnahmeplatte 210 hindurch gesteckt und die Kopfplatte 214 mit dessen Befestigungsabschnitt 224 über den Gewindebohrungen 212 so angeordnet, dass die Schrauben 213 durch die Bohrungen 220 gesteckt werden und in die Gewindebohrungen 212 eingeschraubt werden. Dadurch wird eine feste haltende Verbindung des Führungselements 107 mit dem Flansch 103 des männlichen Elements 101 erzeugt.

Gleiches gilt für den Aufnahmekörper 112 (siehe Fig. 7e). Dieser wird ebenfalls über eine Schraubverbindung mit dem Flansch 104 verbunden. Die Aufnahmeplatte 210 stellt dabei einen Bestandteil des Aufnahmekörpers 112 dar. Der Aufnahmekörper 112 weist ein Aufnahmeelement 216 auf, das einen Bodenabschnitt 217, einen Seitenabschnitt 218, und einen Befestigungsabschnitt 219 aufweist. Diese drei Elemente bilden zueinander wiederum in etwa eine Z-Form. Der Befestigungsabschnitt 219 ist mit Bohrungen 220 versehen, durch die die Schrauben 213 gesteckt werden. Der Bodenabschnitt 217 weist eine Öffnung 211 auf, die mit der Öffnung 211 der Aufnahmeplatte korrespondiert. Des Weiteren sind zwei Seitenwände 228 vorgesehen, die an ihren Stirnseiten mit dem Bodenabschnitten 217 und den Seitenabschnitten 218 verbunden sind. An diesen Seitenwänden sind die Verriegelungen 113 angeordnet. Ebenfalls an der Seitenwand 228 ist jeweils ein Gehäuse 226 der Verriegelung 113 vorgesehen. In den Seitenwänden 228 ist korrespondierend zum Gehäuse 226 eine Bohrung 221 vorgesehen, durch die der Stift 116 der Verriegelung 113 hindurch tritt. Die Befestigungsabschnitte 219, 224 sind mit einer Aussparung 235 an ihrer Rückseite versehen, so dass es möglich ist, auch im Bereich des Führungselements 107 und des Aufnahmekörpers 112 eine Verschraubung des Flansches 103, 104 durch die Bohrung 106 vorzusehen.

Fig. 7f zeigt eine weitere Ausführungsform der Verbindungsvorrichtung 100. Diese Ausführungsform unterscheidet sich von der Ausführungsform gemäß Fig. 7d dadurch, dass die Aufnahmeplatten 210 nicht über eine Schweißverbindung 215 mit dem Flansch 103, 104 verbunden ist, sondern dass die Aufnahmeplatte 210 einen Befestigungsabschnitt 230 (Fig. 7g), der beidseitig auslaufend aus der Aufnahmeplatte 210 vorgesehen ist, aufweist. Dieser Befestigungsabschnitt ist mit Bohrungen 232 versehen. Die Seitenwand 247 des Flansches 103, 104 weist Gewindebohrungen 233 auf. Im Befestigungsabschnitt 230 sind Bohrungen 232 vorgesehen, durch die Schrauben 231 hindurch gesteckt werden. Diese Schrauben 231 werden dann in die Gewindebohrungen 233 eingeschraubt. Die Ausführungsform des Führungselements 107 und des Aufnahmekörpers 112 sind analog dem Ausführungsbeispiel gemäß Fig. 7d ausgeführt.

Fig. 8 - Fig. 24 zeigen den Transport fertig hergestellter Turmsegmente 130 vom Produktionsstandort 133 zum Errichtungsort 144.

Die Turmsegmente 130 weisen ein oberes Ende 131 und ein unteres Ende 132 auf. Am oberen Ende 131 ist ein weibliches Element 102 und am unteren Ende 132 ein männliches Element 101 angeordnet. Dieses kann auch anders herum vorgenommen werden. Sowohl am oberen Ende 131 als auch am unteren Ende 132 sind Transportbalken 121, 122 vorgesehen. Am oberen Ende 131, an dem ein männliches Element 101 der Verbindungsvorrichtung 100 vorgesehen ist, ist ein weiblicher Transportbalken 122 vorgesehen. Am unteren Ende 132 ist ein männlicher Transportbalken 121 vorgesehen. Die Transportbalken umfassen ein Auflageelement 123, an dessen jeweiligem Ende ein Endstück 125 vorgesehen ist. Am Auflageelement 123 sind zwei Führungen 124 vorgesehen. Die Endstücke 125 sind über ein Verschiebungsteil 127 mit dem Auflageelement 123 verbunden. Das Verschiebungsteil 127 kann gegenüber dem Auflageelement 123 verschoben werden, so dass die Breite des Transportbalkens 121, 122 in Abhängigkeit des Durchmessers des Turmsegments 130 angepasst werden kann. Am äußeren Ende des Endstückes 125 ist ein Verbindungselement 129 vorgesehen, an dessen Ende ein Kranseil 134 angeordnet werden kann (siehe Fig. 20). Das Endstück 125 des männlichen Transportbalkens 121 weist einen Führungsstift 128 auf, der einen Grundkörper 145 und einen Konus 146 aufweist. Der Führungsstift 128 stimmt mit dem Führungsstift 108 des Führungselements 107 des männlichen Elements 101 überein. Das Endstück des weiblichen Transportbalkens weist eine Öffnung 126 auf, in die der Führungsstift 108 des männlichen Elements 101 eingeführt werden kann. Am oberen Ende 131 des Turmsegments 130 ist ein männliches Element 101 vorgesehen. Der Führungsstift 108 des männlichen Elements greift in die Öffnung 126 des Endstücks 125 des weiblichen Transportbalkens 122 ein.

Die beiden Führungsstifte 108 des männlichen Elements 101 sind somit mit dem weiblichen Transportbalken 121 direkt verbunden. Gleiches gilt umgekehrt für das untere Ende 132 des Turmsegments 130. In die Öffnung 111 des weiblichen Elements 102 greift der Führungsstift 128 des männlichen Transportbalkens 121 jeweils ein. Das männliche Element 101 und das weibliche Element 102 des Turmsegments 130 sind dabei so angeordnet, dass die montierten Transportbalken parallel zueinander ausgerichtet sind.

Korrespondierend zu den Transportbalken 121, 122 sind ein vorderer Transportrahmen 135 und ein hinterer Transportrahmen 142 vorgesehen, die für den Transport der Turmsegmente 130 als Aufnahmelager dienen. Die Transportrahmen 135, 142 weisen jeweils eine Basis 136, 143 auf, an deren einen Ende ein Vertikalträger 137, 147 vorgesehen ist. Am oberen Ende des Vertikalträgers 137, 138 ist eine Traverse 148 vorgesehen. Zur Versteifung ist eine Diagonaltraverse 141, 149 vorgesehen. An der von dem Basiselement 136, 143 abgewandten Seite des Vertikalträgers 137, 147 ist ein Aufnahmeelement 140 vorgesehen. Dieses Aufnahmeelement 140 ist U-förmig nach oben offen ausgeführt. Die U-Förmigkeit korrespondiert mit der Form des Auflageelements 123 der Transportbalken 121, 122. Des Weiteren ist das Aufnahmeelement 140 mit einer Öffnung 150 versehen, in die die Führungen 124 des Auflageelements 123 der Transportbalken 121, 122 eingreifen und diesen im Aufnahmeelement 140 seitlich stabilisieren bzw. dessen Beweglichkeit zur Seite hin begrenzen. Der vordere Transportrahmen 135 ist in Fig. 20 und Fig. 22 dargestellt. Der hintere Transportrahmen 142 ist in Fig. 24 dargestellt. Fig. 24 zeigt auch einen männlichen Transportbalken 121.

Fig. 9 und Fig. 10 zeigen den Verladevorgang eines Turmsegments 130 auf den Ladebereich 153 eines LKWs 152. Mittels zweier Kräne 151 wird ein Kranseil 134 mit den Verbindungselementen 129 der Transportbalken 121, 122 verbunden. Das Turmsegment 130 wird dann mittels der Kräne 151 angehoben und dabei von den Transportrahmen 135, 142 abgehoben. Anschließend wird das Turmsegment 130 verschwenkt und auf dem vorderen Transportrahmen 135 und dem hinteren Transportrahmen 142 im Ladebereich 153 des LKWs 152 abgesetzt.

Anschließend wird das Turmsegment 130 mittels LKW beispielsweise zum Errichtungsort 144 oder zu einem Schiff 155 gefahren. Im Hafen wird das Turmsegment 130 mittels eines Krans 151 in der zuvor beschriebenen Art und Weise an Bord eines Schiffes 155 in dessen Ladebereich 154 beispielsweise in einem Laderaum des Schiffes 155 oder an Deck des Schiffes 155 transportiert. In Fig. 11 ist an Deck des Schiffes 155 in dessen Ladebereich 154 eine doppelstöckige Beladung vorgesehen. Bei dem Schiff 155 handelt es sich beispielsweise um ein Containerschiff. Im Ladebereich 154 des Schiffes 155, bei dem es sich um den Bereich handelt, in dem normalerweise die Container gestaut werden, ist ein vorderer Transportrahmen 156 als Doppelrahmen zur besseren Kraftaufnahme und ein hinterer Transportrahmen 157 als Einzelrahmen vorgesehen. Die Basis der Transportrahmen 156, 157 stellt beispielsweise ein 20-Fuß-Containergrundelement 158 dar, das mittels Verbindungsmitteln 139 (beispielsweise Twistlocks) mit dem Deck des Schiffes 155 verbunden ist. Über Schienen 165 ist eine Basis 159 des vorderen bzw. hinteren Transportrahmens 156, 157 mit dem Containergrundelement 158 verbunden. Die Basis 159 ist in Richtung des Pfeils 163 auf dem Containergrundelement 158 verschiebbar, um eine Anpassung an verschiedene Längen des Turmsegments 130 vornehmen zu können. Auf der Basis 159 ist ein Tragrahmen 160 angeordnet, der beim vorderen Transportrahmen 150 aus vier Stützen und am hinteren Transportrahmen 157 aus zwei Stützen besteht. Zwischen den Stützen sind Quertraversen 162 angeordnet. Am oberen Ende des Tragrahmens 160 ist jeweils ein Kopfteil 161 vorgesehen, das bei dem vorderen Transportrahmen 156 ein Quadrat bzw. Rechteck darstellt und beim hinteren Transportrahmen 157 eine U-Förmigkeit aufweist. Auf dem Kopfteil 161 sind Aufnahmen 166 für Verbindungsmittel 139 vorgesehen. An der dem Ladebereich 154 zugewandten Seite des Tragrahmens 160 sind Aufnahmeelemente 140 vorgesehen, die das Auflageelement 123 der Transportbalken 121, 122 aufnimmt. Die Aufnahmeelemente 140 sind dabei wie mit dem Pfeil 164 angezeigt entlang des Tragrahmens 160 in Pfeilrichtung verschiebbar. Zusätzlich kann auch eine horizontale Verschiebung notwendig sein.

Beim vorderen Transportrahmen 156 kann auf dessen Kopfteil 161 ein weiterer vorderer Transportrahmen 135 über Verbindungsmittel 139 angeordnet werden, wie dies in Fig. 20 dargestellt ist. Gleiches gilt für den hinteren Transportrahmen 157, auf dessen Kopfteil 161 über Verbindungsmittel 139 ein hinterer Transportrahmen 142 angeordnet werden kann, wie dies in Fig. 24 dargestellt ist. Es lassen sich somit zwei Turmsegmente 130 im Ladebereich 154 des Schiffes 155 übereinander anordnen.

Nachdem das erste Turmsegment (wie in Fig. 12 dargestellt) im vorderen und hinteren Transportrahmen abgelegt worden ist, wird ein weiteres Turmsegment 130 angeliefert (siehe Fig. 13), dass auf den Transportrahmen 156 und 157 angeordneten Transportrahmen 135 und 142 mittels Kran 151 abgelegt wird. In Fig. 15 bis Fig. 18 sind verschiedene räumliche Darstellungen der Transportrahmen 156, 157, 135, 142 und der daran abgelegten Turmsegmente 130 dargestellt. In Fig. 19 ist das Aufrichten eines Turmsegments mittels zwei Kränen dargestellt. Dieses ist möglich, weil die Endstücke 125 der Transportbalken 121, 122 über den Durchmesser des Turmsegments 130 hinausstehen und damit die Kranseile 134 am Turmsegment vorbeibewegt werden können.

Fig. 25 bis Fig. 40 zeigen die Montage eines Turms 170 bzw. das Anbringen eines Turmsegments 130 auf dem obersten Turmsegment 130 des Turmes 170. In Fig. 25 wird das Kranseil 134 des Krans 151 am Errichtungsort 144 mit den Verbindungselementen 129 des vorderen Transportbalkens 121 verbunden. Anschließend wird das Kranseil 134 angehoben (Fig. 26) und das Turmsegment 130 damit verschwenkt. Das untere Ende 132 bleibt über den Transportbalken 122 mit dem Transportrahmen 142 verbunden. Das Auflageelement 123 des Transportbalkens 122 dreht dabei in den Aufnahmeelementen 140. Die Führung 124 dreht dabei aus den Aufnahmeelementen 140 heraus (siehe Fig. 27). Anschließend wird das Turmsegment 130 senkrecht gestellt (Fig. 28) und das untere Ende 132 des Turmsegments 130 wird aus dem Transportrahmen 142 herausgehoben (Fig. 29). Nach dem Herausheben kann am unteren Ende 132 der Transportbalken 121 aus dem weiblichen Element 102 der Verbindungsvorrichtung 100 entfernt werden. Anschließend wird das Turmsegment 130 über das oberste Turmsegment 130 des Turms 170 angehoben und über diesem angeordnet (Fig. 31). Die Anordnung erfolgt der Gestalt, dass die Führungsstifte 108 des männlichen Elements 101 am unteren Ende 132 sich der oberhalb der Öffnung 111 des Aufnahmekörpers 112 des weiblichen Elements 102 am oberen Ende 131 befinden. Anschließend wird das schwebende Turmsegment 130 abgesenkt, so dass als Erstes der Konus 109 in die Öffnung 111 eingreift. Bei weiterem Absenken des oberen Turmsegments 130 wird durch die Konusform des Führungsstiftes 108 das schwebende Turmsegment 130 ausgerichtet, so dass, sobald der Grundkörper 110 des Führungsstiftes 108 die Öffnung 111 erreicht, sich die Gewindestifte 105 direkt oberhalb der Bohrungen 106 befinden (siehe Fig. 32). Das Absenken ist in geschnittener Ansicht in Fig. 35 und Fig. 36 dargestellt. In Fig. 35 ist der Konus am Eintreten in die Öffnung 111. Nach vollständigem Absenken des Turmsegments 130 berühren sich die Flansche 103, 104 und die Gewindestifte 105 sind vollständig durch die Bohrung 106 hindurchgeführt.

Beim Eintreten des Konus 109 in die Öffnung 111 bzw. beim Eintreten des Grundkörpers 110 des Führungsstiftes 108 in die Öffnung 111 wird die Nase 115 der Verriegelung 113 von diesen nach außen gedrückt. Die Nase 115 ist mit einem Stift 116 verbunden, der wiederum mit einer Feder 117 die gegen eine Platte 118 arbeitet mit einer Federkraft beaufschlagt ist. Sobald das obere Turmsegment 130 vollständig auf das darunter liegende Turmsegment 130 abgesenkt worden ist, befindet sich auf Höhe der Nase 115 eine Vertiefung 114 im Grundkörper 110. In diese Vertiefung 114 greift die Nase ein und verriegelt durch die Federkraft den Führungsstift 108 und damit das Führungselement 107 mit dem Aufnahmekörper 112. Das obere Turmsegment 130 ist damit bereits vorläufig haltend mit dem Turm 170 verbunden. Durch diese haltende Verbindung ist es möglich, das Kranseil 134 und damit den Kran 151 bereits zum jetzigen Zeitpunkt, bevor sämtliche haltenden Verschraubungen eingebracht worden sind, vom Turmsegment zu trennen. Dieses kann beispielsweise dadurch geschehen, dass der Transportbalken 121 vom Aufnahmekörper 112 getrennt wird. Zum jetzigen Zeitpunkt kann der Kran 151 bereits für die Aufnahme des nächsten Turmsegments 130 vorbereitet werden und die teure Kranzeit muss nicht aufgewendet werden, um das oberste Turmsegment 130 zu halten.

Auch die Transportbalken 121, 122 werden über die Verriegelung 113 mit dem jeweiligen Element 101, 102 der Verbindungsvorrichtung 100 verbunden. Der weibliche Transportbalken 122 kann dabei eine Verriegelung 113 aufweisen. Um eine abschließende Verbindung des Turmsegments 130 mit dem bereits errichteten Turm 170 zu erreichen, werden auf die Gewindestifte Hülsen 167 aufgesetzt, die dann anschließend mittels Muttern 120 mit den Gewindestiften 105 verbunden werden, wodurch eine haltende Verbindung der Turmsegmente 130 miteinander erzeugt wird. Fig. 40 zeigt dabei die räumliche Ansicht des Errichtungsortes 144 mit wieder zur Verfügung stehendem Kran 151.

Fig. 41 bis Fig. 65 zeigen den Transport und die Montage von Rotorflügeln 168 zur Errichtung einer Windkraftanlage. Die Rotorflügel 168 sind zur Vorbereitung des Transports an ihrer Montageseite 193 mit einem vorderen doppelten Transportrahmen 169 und nach ca. 2/3 der Rotorlänge mit einem hinteren Transportrahmen 171 versehen (siehe Fig. 41). Auf einen LKW 152 wird im Ladebereich 153 von Kränen 151 ein Rotorflügel 168 mit vorderem und hinterem Transportrahmen 169, 171 montiert (Fig. 42 und Fig. 43). Eine vergrößerte Ansicht des zum Transport bereit gestellten LKWs mit Rotorflügeln 168 ist mit Fig. 44 dargestellt.

Fig. 45 und Fig. 46 zeigen einen Rotorflügel 168 in seinem Montagebereich 193. Im Montagebereich 193 ist ein männliches Element 101 der Verbindungsvorrichtung 100 angeordnet. Auf dem Flansch 103 sind Gewindestifte 105 und Führungselemente 107 vorgesehen, die einen Führungsstift 108, bestehend aus einem Grundkörper 110 und einem Konus 109, aufweisen. Über die Führungsstifte 108 werden die Öffnungen 126 des weiblichen Transportbalkens 122 bzw. an dessen Endstücken 125 befestigt. Der weibliche Transportbalken weist wiederum ein Auflageelement 123 und Führungen 124 auf, die mit dem Auflageelement 123 verbunden sind. Am Endstück 125 sind Verbindungselemente 129 vorgesehen. Zwischen Endstück 125 und Auflageelement 123 sind Verschiebungsteile 127 vorgesehen, die in den Auflagenelementbereich 123 hinein- und herausgeschoben werden können (siehe Pfeil 172 bzw. dessen Verschieberichtung). Der Transportbalken 122 ist mit einer Verriegelung 113 (nicht dargestellt) versehen, um eine Arretierung mit den Führungsstiften 108 und damit eine haltende Verbindung zu bewirken.

Für eine Anordnung im Ladebereich 154 eines Schiffes 155 wird ein 20-Fuß-Containergrundelement 158 mittels Verbindungsmitteln 139, beispielsweise Twistlocks, in eine Aufnahme 166 für das Verbindungsmittel 139 eingesetzt. Das Containergrundelement 158 ist mit Schienen 165 versehen (siehe Fig. 47). Auf dem Containergrundelement 158 wird ein vorderer Transportrahmen 169 als doppelter Rahmen angeordnet. Dieser sieht eine Basis 173 vor, die sich auf den Schienen 165 in Pfeilrichtung 163 verschieben lässt. Auf der Basis 173 ist ein Tragrahmen 174 angeordnet. Auf der dem Rotorflügel 168 zugewandten Seite weist der Tragrahmen 174 zwei Tragstützen 177 auf, an denen zwei Aufnahmeelemente 140 vorgesehen sind, die sich in Pfeilrichtung 164 verschieben lassen. Der Tragrahmen weist an seiner Oberseite ein Kopfteil 175 auf, in dessen Ecken Aufnahmen für Verbindungsmittel 166 vorgesehen sind. Der Tragrahmen 174 ist mit Diagonaltraverse 176 verstärkt. Fig. 49 zeigt eine vergrößerte Darstellung des Tragrahmens 174 und der Montageseite des Rotorflügels 168. In Fig. 50 ist auf dem vorderen Tragrahmen ein oberer Transportrahmen 178 angeordnet. Der obere Transportrahmen 178 weist ebenfalls eine Basis 179 auf, die über Verbindungsmittel 139 und Aufnahmen 166 mit dem darunter liegenden vorderen Transportrahmen 169 verbunden ist. Auf der Basis 179 ist wiederum ein Tragrahmen 174, ein Kopfteil 175, Diagonaltraverse 176 und zwei Tragstützen 177 vorgesehen, an denen beweglich Aufnahmeelemente 140 angeordnet sind. Alternativ besteht bei beiden Tragrahmen die Möglichkeit, die Aufnahmeelemente 140 fest am Tragrahmen vorzusehen.

In Fig. 51 ist der Ladebereich 154 des Schiffes 155 mit der vollständigen Ansicht eines geladenen Rotorflügels 168 dargestellt. Auf ca. 2/3 der Länge des Rotorflügels 168 ist der hintere Transportrahmen 171 vorgesehen. Er besteht aus einen oberen Teil 207 und einem unteren Teil 209. Die Teile können voneinander zur Entnahme des Rotorflügels 168 getrennt werde. Er ist ebenfalls wie der vordere Transportrahmen auf einem 20-Fuß-Containergrundelement 158 beweglich auf den Schienen 165 angeordnet. In Fig. 52 ist der zweite geladene Rotorflügel dargestellt.

Fig. 53 zeigt den hinteren Transportrahmen der ersten Ladeebene. Der hintere Transportrahmen 171 weist eine verschiebbare Basis 181 auf. Auf dieser Basis ist ein Tragrahmen 182 vorgesehen, der ein mittleres Kopfelement 183 aufweist. Auf diesem mittleren Kopfelement 183 ist über Verbindungsmittel 139 eine Mittelbasis 184 vorgesehen, mit der es möglich ist, den hinteren Transportrahmen 171 nach oben zu öffnen. Auf der Mittelbasis 184 ist ein Mitteltragrahmen 185 und auf diesem ein Kopfelement 186 vorgesehen. Das Kopfelement 186 weist eine Verbindungsstütze 187 auf. An einer Seite des hinteren Transportrahmens ist ein Lagerelement 188 vorgesehen, mit dem der Rotorflügel 168 abgestützt und abgepuffert wird. Auf der nicht dargestellten Rückseite des Rotorflügels ist ein weiteres Auflager 189 (in der unteren Transportebene nicht dargestellt) vorgesehen. Das Auflager 189 ist in Fig. 54 gezeigt. Fig. 54 zeigt einen oberen hinteren Transportrahmen 180, der auf dem hinteren Transportrahmen 171 angeordnet ist. Er ist in Fig. 54 unbeladen dargestellt. Er weist eine Mittelbasis 184 auf, die über Vermittlungsmittel 139 mit dem Kopfelement 186 des darunter liegenden hinteren Transportrahmens verbunden ist. Auf der Mittelbasis 184 ist ein Tragrahmen 182 mit einem mittleren Kopfelement 183 vorgesehen. Fig. 55 zeigt die gleiche Ansicht wie Fig. 54 mit aufgeladenem Rotorflügel 168 und eingesetztem Lagerelement 188. In Fig. 56 ist das obere Element des oberen hinteren Transportrahmens 180 aufgesetzt und damit der zweite obere hintere Transportrahmen 180 verschlossen.

Fig. 57 bis Fig. 59 zeigen eine alternative Anordnungsform zum Stauen von Rotorflügeln auf einem Schiff. Dabei sind zwei zur Fahrtrichtung des Schiffes 155 rechtwinklig angeordnete Schienen 190 vorgesehen, die verschiebbare Aufnahmen 191 aufweisen. Diese Aufnahmen 191 sind mit Aufnahmen 166 für Verbindungsmittel versehen. Über Verbindungsmittel 139 werden 20-Fuß-Containergrundelemente 158 auf den Schienen angeordnet. Je nach Größe der Rotorflügel 168 können die Grundrahmen so angeordnet werden, dass eine optimale Anzahl von Rotorflügeln und eine optimale Stauung der Rotorflügel für das Schiff erreicht werden kann. Fig. 58 und Fig. 59 zeigen die vollständige Stauung der Rotorflügel 168 der alternativen Ausführungsform.

Bei Fig. 60 sind die Rotorflügel 168 am Montageort 144 angekommen. Ein Kran 151 hat einen Rotorflügel zur Montage angehoben. Dafür sind am Rotorflügel Gurte 194 vorgesehen, die über Abstandhalter 195 mit dem Tragseil 134 verbunden sind. Der Rotorflügel 168 wird, wie in Fig. 61 dargestellt, angehoben, bis die Montageseite 193 des Rotorflügels sich am Montagepunkt 201 der Nabe 200 der Windkraftanlage vorgesehen ist. Der Montagepunkt 201 ist mit einem weiblichen Element 102 der Verbindungsvorrichtung 100 versehen. Wie in Fig. 62 vergrößert dargestellt, werden die Führungsstifte 108 in die Öffnung 111 des Elements 102 eingesetzt, wodurch der Rotor so zentriert wird, dass die Gewindestifte 105 in die Bohrungen 106 des Elementes 102 eingeführt werden können. Wie zuvor dargestellt, greift die Verriegelung 113 in die Vertiefung 114 des Führungsstiftes 108 ein, so dass eine erste Arretierung des Rotorflügels erreicht wird und anschließend die Hülsen 167 auf die Gewindestifte 105 aufgebracht und das ganze mit Muttern 120 gesichert werden kann. Dieses ist in Fig. 63 und Fig. 64 dargestellt. Fig. 65 zeigt den an der Nabe 200 angeordneten Rotorflügel 168. Die Nabe 200 ist an der Gondel 197 vorgesehen.

Fig. 66 bis Fig. 72b zeigen den Transport und die Montage der Gondel 197 auf den Turm 170 einer Windkraftanlage. Von einem LKW 152 wird die Gondel 197 mit montierter Nabe 200 am Schiff 155 angeliefert. Beim Schiff 155 ist der Frachtraum 198 in Fig. 66 geöffnet dargestellt und die Abdeckung 199 zur Seite geschoben. Am Boden des Frachtraums 198 sind zwei 20-Fuß-Containergrundelemente 158 vorgesehen, auf denen ein Basiselement 202, das auf Schienen 165 beweglich ist, angeordnet ist. Die Gondel 197 wird mit Tragelement 203 auf die beiden Basiselemente 202 aufgesetzt, wie dieses in Fig. 67 dargestellt ist. Die einzelnen Elemente sind in Fig. 68 angeordnet. Auf dem Tragelement 203 ist ein weibliches Element 102 der Verbindungsvorrichtung 100 angeordnet. Auf der Unterseite der Gondel 197 befindet sich das männliche Element 101 dazu. In Fig. 69 ist die Gesamtkonstruktion zum Transport der Gondel in einem Schiff 155 zusammengesetzt dargestellt. Fig. 70 zeigt dazu noch die auf die Gesamtzusammenstellung aus Fig. 69 angeordnete Gondel 197.

Fig. 71 zeigt eine schräge räumliche Ansicht bei Anordnung der Gondel auf dem Ladebereich 154 auf der Abdeckung 199.

In Fig. 72a ist das Aufsetzen der Gondel 197 auf den Turm 170 dargestellt. Im Turm 170 ist am oberen Ende 131 des obersten Turmsegments 130 ein weibliches Element 102 der Verbindungsvorrichtung 100 angeordnet. Dieses weist ein Flansch 104 mit Bohrungen 106 und zwei Aufnahmekörpern 112 mit entsprechenden Öffnungen 111 auf. An der Unterseite der Gondel 197 ist ein männliches Element 101 der Verbindungsvorrichtung 100 vorgesehen. Sichtbar in Fig. 72a sind die Gewindestifte und die Führungsstifte mit Konus 109 und Grundkörper 110. Beim Absenken der Gondel 197 wird die Gondel gegenüber dem Turm durch die Führungsstifte 108 beim Einbringen derselben in die Öffnung 111 zentriert, so dass die Gewindestifte 105 durch die Bohrungen 106 hindurchtreten und verschraubt werden können. Die Führungsstifte 108 weisen Vertiefungen 114 auf (nicht dargestellt), in die die Nase 115 der Verriegelung 113 eingreifen kann, wodurch eine vorläufige Sicherung der Gondel gegenüber dem Turm 170 entsteht. Fig. 72b zeigt eine räumliche Ansicht auf den Montageort 144 mit Kran 151, LKW 152, der auf dem LKW 152 verbliebenen Tragrahmen 196 und der Gondel 197 zur Montage auf dem Turm 170.

Fig. 73 bis Fig. 80 zeigen den Transport einer Nabe 200 mit LKW 152 und Schiff 155. Im Ladebereich 153 des LKWs 152 ist ein Tragrahmen 196 angeordnet, auf dem die Nabe 200 aufgesetzt wird, wie dies in Fig. 73 und Fig. 74 dargestellt ist. Zum Transport der Nabe 200 auf einem Schiff 155 wird im geöffneten Laderaum 198 der Tragrahmen 196, der die Maße eines 20-Fuss-Containers aufweisen kann, auf Aufnahmen 166 für Verbindungsmittel 139 angeordnet, wie dieses in Fig. 75 bis Fig. 77 dargestellt ist. Fig. 78 zeigt eine räumliche Darstellung des Tragrahmens 196. Dieser weist eine Unterkonstruktion analog eines 20-Fuss-Containergrundelements 158 auf, auf dem ein Tragelement 203 vorgesehen ist. Das Tragelement weist angeordnet auf mehreren Traversen 204 ein weibliches Element 102 der Verbindungsvorrichtung 100 auf. Diese weist zwei Aufnahmekörper 112 und korrespondierende Öffnungen 111 auf. In Fig. 78 bis Fig. 80 ist der Tragrahmen 196 auf der geschlossenen Abdeckung 199 des Frachtraums 198 alternativ angeordnet. Die Nabe weist an ihrer Unterseite ein korrespondierendes männliches Element 101 der Verbindungsvorrichtung 100 auf, wie dieses in Fig. 82 und Fig. 83 ersichtlich ist. Fig. 81 zeigt eine räumliche Darstellung der Gondel 197 auf dem Turm 170. Im Anschlussbereich 205 der Gondel 197 ist ein weibliches Element 102 der Verbindungsvorrichtung 100 vorgesehen. In dieses wird die Unterseite der Nabe 200, die mit einem männlichen Element 101 der Verbindungsvorrichtung 100 versehen ist, eingesetzt. Fig. 84 zeigt eine geschnittene Ansicht der Gondel mit deren Anschlussbereich 205 und der Unterseite 206 der Nabe 200. Durch das Heranführen der Nabe 200 an den Anschlussbereich 205 der Gondel 197 wird wiederum jeweils ein Führungselement 107 dem Aufnahmekörper 112 des weiblichen Elements 102 der Verbindungsvorrichtung 100 der Gondel 197 im Anschlussbereich 205 der Nabe zugeführt. Dieses ist in Fig. 84 dargestellt. Die Montage der Nabe und die dauerhafte Verbindung der Nabe mit dem Anschlussbereich 205 erfolgt auf die zuvor beschriebene Art und Weise. Alternativ kann, wie in Fig. 85 bis Fig. 88 dargestellt, die auf dem Tragrahmen 196 angeordnete Nabe 200 vor Montage der Nabe mit der Gondel 197 an den Montagepunkten 201 mit Rotorflügeln 168 versehen werden. Auf diese Weise wird, wie in Fig. 86 und 87 dargestellt, ein vollständiger Rotor 207 geschaffen, der dann als Ganzes mit der Gondel 197 in Verbindung gebracht wird, wie dieses in Fig. 88 dargestellt ist. Die Verbindung der Nabe 200 des vollständigen Rotors 207 erfolgt auf die zuvor beschriebene Art und Weise.

In Fig. 89 bis 91 ist die Möglichkeit des platzsparenden Rücktransports der Transportrahmen 169 und 171 und der Containergrundelemente 158 dargestellt.

Für die Demontage eine Komponente einer Windkraftanlage wie beispielsweise ein Turmsegment 130, eine Gondel 197, einen Rotorflügel 168 und/oder einer Nabe 200, können die Verbindungsmittel, beispielsweise die Muttern 120 mit denen die Elemente 101, 102 gegeneinander verschraubt sind, gelöst werden, bevor entweder das Kranseil 134 des Krans 151 der ein Transportbalken 121, 122, der mit dem Kranseil 134 verbunden ist, mit der zu demontierenden Komponente verbunden wurde. Dieses ist möglich, weil die Nase 115 der Verriegelung 113 in die Vertiefung 114 im Grundkörper 110 des Führungsstiftes 108 eingreift und dadurch eine hinreichend starke haltende Verbindung zwischen der zu demontierenden Komponenten und der restlichen Windkraftanlage erzeugt. Nach Anschlagen des Kranseils 134 bzw. nach Anbringen des mit dem Kranseil 134 verbundenen Transportbalkens 121, 122 an der Komponente wird die Verriegelung 113 gelöst und die Komponente kann abgehoben bzw. entfernt werden. Zum Lösen der Verriegelung 113 wird der Stift 116 gegen die Federkraft der Feder 117 nach außen gezogen bis die Nase 115 aus der Vertiefung 114 heraustritt und die Komponente frei gibt, so dass sie entfernt werden kann. Dadurch wird die Demontage schnell und kostengünstig. Die Verriegelung 113 dient damit als einfach lösbarer Schnellverschluss, dieses ist insbesondere bei Wartungs- bzw. Verschleißteilen wie Rotorblätter 168 vorteilhaft.

Fig. 92 zeigt das Zusammensetzen zweier Bauteile 130 einer Windkraftanlage mit dem erfindungsgemäßen Befestigungsverfahren. Am oberen Ende 131 des unteren bereits montierten Bauteils 130 ist ein männliches Element 101 in der Verbindungsvorrichtung 100 vorgesehen. Am unteren Ende 132 des Bauteils 130, das auf dem darunter liegenden Bauteil 130 montiert werden soll, ist ein weibliches Element 102 einer Verbindungsvorrichtung 100 vorgesehen. Innerhalb des männlichen Elements 101 der Verbindungsvorrichtung 100 sind Bohrungen 106 vorgesehen, in die das erfindungsgemäße Verbindungssystem, bestehend aus einem Gewindestift 105 und einem Arretiermittel 260, 264, eingesetzt sind. Dieses ist vergrößert in Fig. 93 dargestellt.

Fig. 94 zeigt eine vergrößerte geschnittene Ansicht des Flansches 103 des männlichen Elements 101 der Verbindungsvorrichtung 100. In der Bohrung 106 ist ein Gewindestift 105 vorgesehen, der (siehe Fig. 95 und 96) einen Mutterkopf 256, einen gewindelosen Abschnitt 257 und einen Gewindeabschnitt 258 aufweist. Von oben wird auf den Gewindestift eine Arretierhülse 260 auf den Gewindestift 105 aufgeschoben, wobei die Arretierhülse 260 über den Gewindeabschnitt 258 entweder geschoben oder geschraubt wird und dann anschließend auf dem gewindelosen Abschnitte 257 am unteren Ende auf dem Mutterkopf 256 aufsitzt, wie dieses in Fig. 10b dargestellt ist. Die Arretierhülse 260 weist eine äußere Oberfläche 261 und eine innere Oberfläche 262 auf, die im dargestellten Ausführungsbeispiel eine geriffelte bzw. gezackte Oberfläche aufweisen. Die Vorsprünge sind dabei für den Einsetzprozess verformbar und bilden eine Haltekraft, die die Arretierhülse 260 und den Gewindestift 105 in der Bohrung 106 festhält. Die Arretierhülse 260 ist dabei in ihrer Höhe und in ihrem inneren und äußeren Durchmesser so ausgeführt, dass eine hinreichende haltende Kraft zwischen Arretierhülse 260 und der Oberfläche 265 der Bohrung 106 erzeugt wird. Des Weiteren wird eine haltende Kraft zwischen dem gewindelosten Abschnitt 257 und der inneren Oberfläche 262 der Arretierhülse 260 so bereit gestellt, dass Arretierhülse 260 und Gewindestift 105 gegen die Schwerkraft ggf. mit Zuschlag als Sicherheitsfaktor in der Bohrung 106 des Flansches 103 gehalten wird. Der eingesetzte Zustand des Befestigungssystems ist räumlich in Fig. 97 dargestellt.

Eine weitere Ausführung des erfindungsgemäßen Befestigungssystems ist in den Fig. 98 und 99 dargestellt. Das Befestigungssystem besteht dabei aus einem Gewindestift 105 und einem Arretierring 264. Der Gewindestift 105 wird wiederum in die Bohrung 106 des Flansches 103 eingesetzt. Er weist eine Vertiefung 259 auf, die, gesehen vom Mutterkopf 256, in etwa in der Stärke des Flansches 103 im gewindelosten Abschnitt 257 vorgesehen ist. Die Vertiefung 259 ist dabei so ausgeführt, dass der Arretierring 264 in diesen eingesetzt wird. Die Bohrung 106 weist an ihrer nach außen gerichteten Seite eine Mulde 263 auf, in die der Arretierring 264 zumindest teilweise einsetzbar ist. Der Arretierring 264 wird über den Gewindeabschnitt 258 auf den gewindelosen Abschnitt 257 nach Einsetzen des Gewindestiftes 105 in die Bohrung 106 aufgeschoben, bis dieser in der Mulde 263 und der Vertiefung 259 einrastet. Durch den Arretierring 264 wird eine Haltekraft erzeugt, die ebenfalls den Gewindestift 105 in der Bohrung 106 gegen die Schwerkraft arretiert. Sowohl die Arretierhülse 260 als auch der Arretierring 264 zentrieren den Gewindestift 105 in der Bohrung 106.

Beim Absenken des zu montierenden Bauteils 130 auf das darunter liegende, bereits montierte Bauteil 130 greifen die Führungselemente 107 des männlichen Elements 101 in die Aufnahmekörper 112 des weiblichen Elements 102 der Verbindungsvorrichtung 100 ein und zentrieren das zu montierende Bauteil so, dass die Bohrungen 106 der beiden Flansche 103, 104 fluchtend übereinander stehen. Beim weiteren Absenken führt das Führungselement 107 mit seinem Führungsstift 108 das weibliche Element 102 und damit das zu montierende Bauteil 130 so auf das darunter liegende Bauteil 130, dass die eingesetzten Gewindestifte 105, die durch die Arretierhülsen 260 bzw. Arretierringe 264 in den Bohrungen 106 zentriert sind, dass die Gewindestifte 105 durch die Bohrungen 106 des weiblichen Elementes 102 berührungslos hindurch treten. Auf den Gewindeabschnitt 258 der Gewindestifte 105 werden anschließend, nachdem die beiden Bauteile 130 aufeinander aufsitzen, die Muttern 120 aufgeschraubt, so dass die notwendige Verbindungskraft zwischen den Bauteilen 130 erzeugt wird. Die Arretierhülse 260 bzw. der Arretierring 264 halten auch im montierten Zustand die Gewindestifte 105 so in der Bohrung 106, dass diese durch dynamische Belastungen nicht aus der Bohrung 106 heraus bewegt werden, auch wenn aufgrund von dynamischen Belastungen die Muttern 120 sich gelöst haben sollten. Es bliebe somit eine Sicherung gegen Scherkräfte vorhanden, da die Gewindestifte 105 in den Bohrungen 106 verbleiben, auch wenn die durch die Muttern 120 bereit gestellten Haltekräfte nicht mehr hinreichend gegeben wären.

**Bezugszeichenliste**

| | | | |
|---|---|---|---|
| 100 | Verbindungsvorrichtung | 129 | Verbindungselement |
| 101 | männliches Element | 130 | Turmsegment |
| 102 | weibliches Element | 131 | Oberes Ende |
| 103 | Flansch | 132 | Unteres Ende |
| 104 | Flansch | 133 | Produktionsstätte |
| 105 | Gewindestift | 134 | Tragseil |
| 106 | Bohrung | 135 | Vorderer Transportrahmen |
| 107 | Führungselement | 136 | Basis |
| 108 | Führungsstift | 137 | Vertikalträger |
| 109 | Konus | 138 | Traverse |
| 110 | Grundkörper | 139 | Verbindungsmittel |
| 111 | Öffnung | 140 | Aufnahmeelement |
| 112 | Aufnahmekörper | 141 | Diagonaltraverse |
| 113 | Verriegelung | 142 | Hinterer Transportrahmen |
| 114 | Vertiefung | 143 | Basis |
| 115 | Nase | 144 | Errichtungsort |
| 116 | Stift | 145 | Grundkörper |
| 117 | Feder | 146 | Konus |
| 118 | Platte | 147 | Vertikalträger |
| 119 | Schraube | 148 | Traverse |
| 120 | Mutter | 149 | Diagonaltraverse |
| 121 | Transportbalken männlich | 150 | Öffnung |
| 122 | Transportbalken weiblich | 151 | Kran |
| 123 | Auflageelement | 152 | LKW |
| 124 | Führung | 153 | Ladebereich |
| 125 | Endstück | 154 | Ladebereich |
| 126 | Öffnung | 155 | Schiff |
| 127 | Verschiebungsteil | 156 | Vorderer Transportrahmen |
| 128 | Führungsstift | 157 | Hinterer Transportrahmen |
| 158 | 20-Fuß-Containergrundelement | 189 | Auflage |
| | | 190 | Schiene |
| 159 | Basis | 191 | Aufnahme, verschiebbar |
| 160 | Tragrahmen | 192 | Verschieberichtung |
| 161 | Kopfteil | 193 | Montageseite |
| 162 | Quertraverse | 194 | Gurt |
| 163 | Verschieberichtung | 195 | Abstandshalter |
| 164 | Verschieberichtung | 196 | Tragrahmen |
| 165 | Schiene | 197 | Gondel |
| 166 | Aufnahme für Verbindungsmittel | 198 | Frachtraum |
| | | 199 | Abdeckung |
| 167 | Hülse | 200 | Nabe |
| 168 | Rotorflügel | 201 | Montagepunkt |
| 169 | Vorderer Transportrahmen | 202 | Basiselement |
| 170 | Turm | 203 | Tragelement |
| 171 | Hinterer Transportrahmen | 204 | Traverse |
| 172 | Verschieberichtung | 205 | Anschlussbereich |
| 173 | Basis | 206 | Unterseite |
| 174 | Tragrahmen | 207 | Rotor |
| 175 | Kopfteil | 208 | Oberer Teil |
| 176 | Diagonaltraverse | 209 | Unterer Teil |
| 177 | Tragstütze | 210 | Aufnahmeplatte |
| 178 | Oberer Transportrahmen | 211 | Öffnung |
| 179 | Basis | 212 | Gewindebohrung |
| 180 | Oberer Hinterer Transportrahmen | 213 | Schraube |
| | | 214 | Kopfplatte |
| 181 | Basis | 215 | Schweißverbindung |
| 182 | Tragrahmen | 216 | Aufnahmeelement |
| 183 | Kopfelement Mitte | 217 | Bodenabschnitt |
| 184 | Mittelbasis | 218 | Seitenabschnitt |
| 185 | Mitteltragrahmen | 219 | Befestigungsabschnitt |
| 186 | Kopfelement | 220 | Bohrung |
| 187 | Stütze | 221 | Bohrung |
| 188 | Lagerelement | 222 | Kopfabschnitt |
| 223 | Seitenabschnitt | | |
| 224 | Befestigungsabschnitt | | |
| 225 | Arretierungselement | | |
| 226 | Gehäuse | | |
| 227 | Öse | | |
| 228 | Seitenwand | | |
| 229 | Aufnahmewulst | | |
| 230 | Befestigungsabschnitt | | |
| 231 | Schraube | | |
| 232 | Bohrung | | |
| 233 | Gewindebohrung | | |
| 234 | Bohrung | | |
| 235 | Aussparung | | |
| 236 | Schweißverbindung | | |
| 247 | Seitenwand | | |
| 256 | Mutterkopf | | |
| 257 | gewindeloser Abschnitt | | |
| 258 | Gewindeabschnitt | | |
| 259 | Vertiefung | | |
| 260 | Arretierhülse | | |
| 261 | äußere Oberfläche | | |
| 262 | innere Oberfläche | | |
| 263 | Mulde | | |
| 264 | Arretierring | | |
| 265 | Oberfläche der Bohrung | | |

## Patentansprüche

1. Verbindungsvorrichtung für den Transport und die Montage von Komponenten von Windkraftanlagen (130, 168, 197, 200), **dadurch gekennzeichnet, dass** ein männliches Element (101) und ein korrespondierendes weibliches Element (102) vorgesehen sind, die miteinander verbindbar sind, dass das männliche Element (101) und das weibliche Element (102) jeweils einen Flansch (103, 104) aufweisen, dass das männliche Element (101) und/oder das weibliche Element (102) an der Komponente der Windkraftanlage (130, 168, 197, 200) fest angeordnet sind, dass ein Führungselement (107) und ein Aufnahmekörper (112) vorgesehen sind, die mit den Flanschen (103, 104) verbunden sind, wobei das Führungselement (107) einen Führungsstift (108) aufweist, der in eine Öffnung (111) des Aufnahmekörpers (112) einsetzbar ist, dass der Führungsstift (108) ein Zentrierungselement (109, 110) aufweist, über den beim Einsetzen des männlichen Elements (101) in das weibliche Element (102) oder umgekehrt die Elemente (101, 102) fluchtend verbunden werden und dass eine Verriegelung (113) vorgesehen ist, durch die eine haltende Verbindung zwischen den Elementen (101, 102) erzeugbar ist.

2. Verbindungsvorrichtung nach Anspruch 1, **dadurch gekennzeichnet, dass** das Zentrierungselement des Führungsstiftes (108) ein Konus (109) bevorzugt auf einem Grundkörper (110) ist, und/oder dass die Verriegelung (113) einen beweglichen Stift (116) aufweist, der an seinem einen Ende eine Nase (115) aufweist und/oder der über eine Feder (117) mit einer Federkraft beaufschlagbar ist, die der Bewegung des Stiftes (116) entgegenwirkt, wobei bevorzugt die Nase (115) in eine Vertiefung (114) im Führungsstift (108) haltend eingreift, und/oder dass die Elemente (101, 102), Bohrungen (106) und/oder Gewindestifte (105) aufweisen, über die eine haltende Verbindung zwischen den Elementen (101, 102) erzeugbar ist.

3. Verbindungsvorrichtung nach Anspruch 1 oder 2, **dadurch gekennzeichnet, dass** ein Gewindestift (105) zum Einsetzen in eine in den Verbindungsvorrichtung (100) vorgesehenen Bohrung (106) und eine mit dem Gewindestift (105) in Verbindung zu bringenden Mutter (120) vorgesehen sind, die so ausgelegt sind, dass über sie ein Anteil der Verbindungskraft zwischen den beiden Komponenten (130, 168, 197, 200) in verbundenem Zustand bereit gestellt wird, und dass ein Arretiermittel (260, 264) zum Anbringen an dem Gewindestift (105) vorgesehen ist, dessen Innendurchmesser so ausgeführt ist, dass der Gewindestift (105) in dem Arretiermittel (260, 264) arretiert ist, und der Innendurchmesser des Arretiermittels (260, 264) in Verbindung mit der Höhe des Arretiermittels (260, 264) und dem Außendurchmesser des Arretiermittels (260, 264) so dimensioniert ist, dass das Arretiermittel (260, 264) den Gewindestift wenigstens gegen die Schwerkraft in der Öffnung (106) hält, wobei das Arretiermittel (260, 264) aus Kunststoff oder Gummi besteht und/oder kompressierbar und/oder elastisch ist, oder der Gewindestift (105) eine radial umlaufende Vertiefung (259) zur Aufnahme des Arretiermittels (264) aufweist und/oder ein Zentiermittel ist, und/oder dass das Arretiermittel (260) ein Zentriermittel ist, das als eine Hülse (260) ausgeführt ist, deren Innendurchmesser so ausgeführt ist, dass der Gewindestift (105) in dem Zentriermittel arretiert ist, und deren Außendurchmesser so ausgeführt ist, dass die Hülse in einer korrespondierenden Öffnung (106) der Komponente (130) arretiert ist, und die Höhe des Zentriermittels in Verbindung mit dem Innen- und/oder Außendurchmesser der Hülse (260) so dimensioniert ist, dass das Zentriermittel und der Gewindestift (105) wenigstens gegen die Schwerkraft in der Öffnung (106) gehalten wird.

4. Tragbalken zum Transport und zur Montage von Komponenten von Windkraftanlagen (130, 168, 197, 200) mit einem Auflageelement (123), an dem bevorzugt wenigstens eine Führung (124) angeordnet ist, mit einem Endstück (125), das mit dem Auflageelement (123) verbunden ist, wobei das Endstück (125) ein Verbindungselement (126, 128) aufweist, das mit dem Führungselement (107) und/oder dem Aufnahmekörper (112) der Verbindungsvorrichtung nach einem der Ansprüche 1 bis 3 korrespondiert.

5. Tragbalken nach Anspruch 4, **dadurch gekennzeichnet, dass** das Endstück (125) mit dem Aufnahmeelement (123) über ein gegenüber dem Aufnahmeelement (123) verschiebbaren Element (127) verbunden ist, sodass die Länge des Tragbalkens (121, 122) einstellbar ist in Abhängigkeit des Durchmessers der Komponente (130, 168, 187, 200) der Windkraftanlage, und/oder dass am Endstück (125) ein Verbindungselement (129) vorgesehen ist, an dem ein Hebemittel (134) beispielsweise eines Krans (151) anschlagbar ist, wobei das Endstück (125) bevorzugt so ausgeführt ist, dass das Hebemittel (134) gegenüber dem Verbindungselement (129) über eine Drehbewegung beweglich ist.

6. Transportrahmen zur Aufnahme einer Komponente (130, 168, 197, 200) einer Windkraftanlage mit einem männlichen oder einem weiblichen Element (101, 102) der Verbindungsvorrichtung (100) nach einem der Ansprüche 1 bis 3.

7. Transportrahmen zur Aufnahme einer Komponente (130, 168, 197, 200) einer Windkraftanlage mit einem Aufnahmeelement (140) zur Aufnahme eines Transportbalkens nach Anspruch 4 oder 5,

8. Transportrahmen nach Anspruch 7, **dadurch gekennzeichnet, dass** das Auflageelement (123) in das Aufnahmeelement (140) einsetzbar ist, wobei das Aufnahmeelement (140) einen Abschnitt zur haltenden Aufnahme der Führung (124) aufweist.

9. Transportrahmen nach einem der Ansprüche 6 bis 8, **dadurch gekennzeichnet, dass** der Transportrahmen (135, 142, 169, 171, 180, 196) ein Basiselement (136, 143, 159, 181, 202) aufweist, das über ein Verbindungsmittel (139), bevorzugt ein Twistlock, mit einer Aufnahme (166) eines darunterliegenden Elements lösbar verbindbar ist, und/oder dass die Aufnahme (140) am Transportrahmen (135, 142, 169, 171, 180, 196) vertikal und/oder horizontal verschiebbar ist (164) und/oder dass das Basiselement (136, 143, 159, 181, 200) auf einem Grundelement (158) und/oder auf einem darunter liegenden Element verschiebbar (163, 172, 192) anordbar ist.

10. Transportrahmen nach einem der Ansprüche 6 bis 9, **dadurch gekennzeichnet, dass** der Transportrahmen (135, 142, 169, 171, 180, 196) ein Auflager (189) und/oder ein Lagerelement (188) zur lösbaren Aufnahme eines Rotorelements (168) aufweist und/oder dass der Transportrahmen (171, 180) wenigstens zweiteilig (208, 209) aufgebaut ist, wobei die Teile voneinander lösbar sind und die lösbare Verbindung über ein Verbindungsmittel (139), bevorzugt ein Twistlock, herstellbar ist.

11. Transportsystem für den Transport von Komponenten (130, 168, 197, 200) einer Windkraftanlage mit einer Verbindungsvorrichtung (100) nach einem der Ansprüche 1 bis 3, einem Transportbalken (121, 122) nach Anspruch 4 oder 5 und/oder einem Transportrahmen (135, 142, 169, 171, 180, 196) nach einem der Ansprüche 6 bis 10.

12. Montagesystem für die Montage von Komponenten (130, 168, 197, 200) einer Windkraftanlage mit einer Verbindungsvorrichtung (100) nach einem der Ansprüche 1 bis 3 und/oder einem Transportbalken (121, 122) nach Anspruch 4 oder 5.

13. Verfahren zum Transport und zur Montage von Komponenten (130, 168, 197, 200) einer Windkraftanlage mit den Schritten: Vorsehen eines Elements (101, 102) einer Verbindungsvorrichtung (100) nach einem der Ansprüche 1 bis 3 an einer Komponente (130, 168, 197, 200) einer Windkraftanlage, Verbinden des Elements (101, 102) mit einem korrespondierenden Tragbalken (121, 122) nach Anspruch 4 oder 5 und Anordnen des Tragbalkens (121, 122) einem korrespondierenden Tragrahmen (135, 142, 169, 171, 180, 196) nach einem der Ansprüche 6 bis 10 oder mit einem korrespondierenden Tragrahmen (135, 142, 169, 171, 180, 196) und Verladen der Komponente (130, 168, 197, 200) auf ein Transportmittel (152, 155), Transport der so verladenen Komponente (130, 168, 197, 200) mit einem Transportmittel (152, 155) zum Errichtungsort (144), Aufnehmen der Komponente (130, 168, 197, 200) mit einem Kran (151) durch Anschlagen eines Hebemittels (134) am Transportbalken (121, 122) und/oder an einem Element an der Komponente (130, 168, 197, 200), Anordnen der Komponente (130, 168, 197, 200) gegenüber der Windkraftanlage, so dass das Element (101, 102) der Komponente (130, 168, 197, 200) an einem korrespondierenden Element (101, 102) an einer bereits montierten Komponente gegenübersteht, Zentrieren der Elemente (101, 102) durch Einführen des Führungsstiftes (108) des Führungselementes (107) in den Aufnahmekörper (112), Einführen des Führungsstiftes (108) in den Aufnahmekörper (112) bis die Elemente (101,102) zum Aufliegen aufeinander kommen, Verbinden der Elemente (101, 102) mit geeigneten Verbindungsmitteln (105, 119, 120, 167).

14. Verfahren nach Anspruch 13, **dadurch gekennzeichnet, dass** eine Verriegelung (113) in den Führungsstift (108) einrastet und damit eine vorläufige haltende Verbindung der zu montierenden Komponente mit den bereits montierten Komponenten erzeugt wird.

15. Verfahren nach Anspruch 14, **dadurch gekennzeichnet, dass** das Hebemittel (134) und/oder der Transportbalken (121, 122) nach Erfolg der vorläufigen haltenden Verbindung durch die Verriegelung (113) gelöst wird, bevor oder während die Komponenten mit Verbindungsmitteln (105, 119, 120, 167) verbunden werden.

## Claims

1. Connecting device for transporting and assembling components of wind turbines (130, 168, 197, 200), **characterized in that** a male element (101) and a corresponding female element (102) are provided which can be connected to one another, **in that** the male element (101) and the female element (102) each have a flange (103, 104), **in that** the male element (101) and/or the female element (102) are fixedly arranged on the component of the wind turbine (130, 168, 197, 200), **in that** a guide element (107) and a receiving body (112) are provided which are connected to the flanges (103, 104), wherein the guide element (107) has a guide pin (108) which can be inserted into an opening (111) of the receiving body (112), **in that** the guide pin (108) has a centring element (109, 110) by means of which the elements (101, 102) are connected in alignment when inserting the male element (101) into the female element (102), or vice versa, and **in that** a locking means (113) is provided by means of which a holding connection between the elements (101, 102) can be produced.

2. Connecting device according to Claim 1, **characterized in that** the centring element of the guide pin (108) is a cone (109) preferably on a base body (110) and/or **in that** the locking means (113) has a movable pin (116) which has a nose (115) at one of its ends and/or which can be loaded by means of a spring (117) with a spring force which counteracts the movement of the pin (116), wherein the nose (115) preferably engages in a depression (114) in the guide pin (108) in a holding manner, and/or **in that** the elements (101, 102) have bores (106) and/or threaded pins (105) by means of which a holding connection between the elements (101, 102) can be produced.

3. Connecting device according to Claim 1 or 2, **characterized in that** a threaded pin (105) for insertion into a bore (106) provided in the connecting device (100) and a nut (120) to be brought into connection with the threaded pin (105) are provided and are configured such that they provide a proportion of the connecting force between the two components (130, 168, 197, 200) in the connected state, and **in that** an arresting means (260, 264) for mounting on the threaded pin (105) is provided, the inside diameter of which is configured such that the threaded pin (105) is arrested in the arresting means (260, 264), and the inside diameter of the arresting means (260, 264) is dimensioned in connection with the height of the arresting means (260, 264) and the outside diameter of the arresting means (260, 264) such that the arresting means (260, 264) holds the threaded pin at least against gravity in the opening (106), wherein the arresting means (260, 264) consists of plastic or rubber and/or is compressible and/or elastic, or the threaded pin (105) has a radially encircling depression (259) for receiving the arresting means (264) and/or is a centring means, and/or **in that** the arresting means (260) is a centring means which is configured as a sleeve (260), the inside diameter of which is configured such that the threaded pin (105) is arrested in the centring means, and the outside diameter of which is configured such that the sleeve is arrested in a corresponding opening (106) of the component (130), and the height of the centring means is dimensioned in connection with the inside and/or outside diameter of the sleeve (260) such that the centring means and the threaded pin (105) is held at least against gravity in the opening (106).

4. Carrier beam for transporting and for assembling components of wind turbines (130, 168, 197, 200) having a bearing element (123) on which at least one guide (124) is preferably arranged, having an end piece (125) which is connected to the bearing element (123), wherein the end piece (125) has a connecting element (126, 128) which corresponds with the guide element (107) and/or the receiving body (112) of the connecting device according to one of Claims 1 to 3.

5. Carrier beam according to Claim 4, **characterized in that** the end piece (125) is connected to the receiving element (123) via an element (127) which is displaceable with respect to the receiving element (123), with the result that the length of the carrier beam (121, 122) can be set in dependence on the diameter of the component (130, 168, 187, 200) of the wind turbine, and/or **in that** the end piece (125) has provided thereon a connecting element (129) on which a lifting means (134) for example of a crane (151) can be fastened, wherein the end piece (125) is preferably configured such that the lifting means (134) is movable by means of a rotary movement with respect to the connecting element (129).

6. Transport frame for receiving a component (130, 168, 197, 200) of a wind turbine having a male or a female element (101, 102) of the connecting device (100) according to one of Claims 1 to 3.

7. Transport frame for receiving a component (130, 168, 197, 200) of a wind turbine having a receiving element (140) for receiving a transport beam according to Claim 4 or 5.

8. Transport frame according to Claim 7, **characterized in that** the bearing element (123) can be inserted into the receiving element (140), wherein the receiving element (140) has a portion for receiving the guide (124) in a holding manner.

9. Transport frame according to one of Claims 6 to 8, **characterized in that** the transport frame (135, 142, 169, 171, 180, 196) has a base element (136, 143, 159, 181, 202) which can be releasably connected by means of a connecting means (139), preferably a twistlock, to a receptacle (166) of an element situated therebelow, and/or **in that** the receptacle (140) is vertically and/or horizontally displaceable (164) on the transport frame (135, 142, 169, 171, 180, 196), and/or **in that** the base element (136, 143, 159, 181, 200) can be arranged displaceably (163, 172, 192) on a base element (158) and/or on an element situated therebelow.

10. Transport frame according to one of Claims 6 to 9, **characterized in that** the transport frame (135, 142, 169, 171, 180, 196) has a support (189) and/or a mounting element (188) for releasably receiving a rotor element (168), and/or **in that** the transport frame (171, 180) is of at least two-part (208, 209) design, wherein the parts can be released from one another and the releasable connection can be produced by means of a connecting means (139), preferably a twistlock.

11. Transport system for transporting components (130, 168, 197, 200) of a wind turbine having a connecting device (100) according to one of Claims 1 to 3, a transport beam (121, 122) according to Claim 4 or 5, and/or a transport frame (135, 142, 169, 171, 180, 196) according to one of Claims 6 to 10.

12. Assembly system for assembling components (130, 168, 197, 200) of a wind turbine having a connecting device (100) according to one of Claims 1 to 3 and/or a transport beam (121, 122) according to Claim 4 or 5.

13. Method for transporting and for assembling components (130, 168, 197, 200) of a wind turbine, comprising the following steps: providing an element (101, 102) of a connecting device (100) according to one of Claims 1 to 3 on a component (130, 168, 197, 200) of a wind turbine, connecting the element (101, 102) to a corresponding carrier beam (121, 122) according to Claim 4 or 5 and arranging the carrier beam (121, 122) a corresponding carrier frame (135, 142, 169, 171, 180, 196) according to one of Claims 6 to 10 or with a corresponding carrier frame (135, 142, 169, 171, 180, 196) and loading the component (130, 168, 197, 200) onto a transport means (152, 155), transporting the thus-loaded component (130, 168, 197, 200) with a transporting means (152, 155) to the erection site (144), receiving the component (130, 168, 197, 200) with a crane (151) by fastening a lifting means (134) on the transport beam (121, 122) and/or on an element on the component (130, 168, 197, 200), arranging the component (130, 168, 197, 200) with respect to the wind turbine such that the element (101, 102) of the component (130, 168, 197, 200) is situated opposite on a corresponding element (101, 102) on an already-assembled component, centring the elements (101, 102) by introducing the guide pin (108) of the guide element (107) into the receiving body (112), introducing the guide pin (108) into the receiving body (112) until the elements (101, 102) come to bear against one another, connecting the elements (101, 102) with suitable connecting means (105, 119, 120, 167).

14. Method according to Claim 13, **characterized in that** a locking means (113) latches into the guide pin (108) and thus a preliminary holding connection between the component to be assembled and the already-assembled components is produced.

15. Method according to Claim 14, **characterized in that,** after successful preliminary holding connection by the locking means (113), the lifting means (134) and/or the transport beam (121, 122) are or is released before or while the components are connected with connecting means (105, 119, 120, 167).

## Revendications

1. Dispositif de connexion pour le transport et le montage de composants d'éolienne (130, 168, 197, 200), **caractérisé en ce qu'**un élément mâle (101) et un élément femelle correspondant (102) sont prévus, lesquels peuvent être connectés l'un à l'autre, **en ce que** l'élément mâle (101) et l'élément femelle (102) présentent chacun une bride (103, 104), l'élément mâle (101) et/ou l'élément femelle (102) sont disposés fixement sur le composant d'éolienne (130, 168, 197, 200), un élément de guidage (107) et un corps de réception (112) sont prévus, lesquels sont connectés aux brides (103, 104), l'élément de guidage (107) présentant une broche de guidage (108) qui peut être insérée dans une ouverture (111) du corps de réception (112), **en ce que** la broche de guidage (108) présente un élément de centrage (109, 110) par le biais duquel, lors de l'insertion de l'élément mâle (101) dans l'élément femelle (102) ou inversement, les éléments (101, 102) sont connectés en alignement et **en ce qu'**un verrouillage (113) est prévu, par le biais duquel une connexion de retenue peut être établie entre les éléments (101, 102).

2. Dispositif de connexion selon la revendication 1, **caractérisé en ce que** l'élément de centrage de la broche de guidage (108) est un cône (109) de préférence sur un corps de base (110), et/ou **en ce que** le verrouillage (113) présente une broche mobile (116) qui présente à l'une de ses extrémités un ergot (115) et/ou qui peut être sollicitée par le biais d'un ressort (117) avec une force de ressort qui agit à l'encontre du mouvement de la broche (116), l'ergot (115) s'engageant de préférence dans un renfoncement (114) dans la broche de guidage (108) en la retenant et/ou **en ce que** les éléments (101, 102), présentent des alésages (106) et/ou des broches filetées (105) par le biais desquelles une connexion de retenue peut être établie entre les éléments (101, 102).

3. Dispositif de connexion selon la revendication 1 ou 2, **caractérisé en ce qu'**une broche filetée (105) pour l'insertion dans un alésage (106) prévu dans le dispositif de connexion (100) et un écrou (120) devant être amené en liaison avec la broche filetée (105) sont prévus, lesquels sont conçus de telle sorte qu'ils fournissent une proportion de la force de connexion entre les deux composants (130, 168, 197, 200) dans l'état assemblé, et **en ce qu'**un moyen de blocage (260, 264) est prévu pour le montage sur la broche filetée (105), dont le diamètre intérieur est réalisé de telle sorte que la broche filetée (105) soit bloquée dans le moyen de blocage (260, 264) et le diamètre intérieur du moyen de blocage (260, 264) en association avec la hauteur du moyen de blocage (260, 264) et le diamètre extérieur du moyen de blocage (260, 264) sont dimensionnés de telle sorte que le moyen de blocage (260, 264) maintienne la broche filetée au moins à l'encontre de la force de pesanteur dans l'ouverture (106), le moyen de blocage (260, 264) se composant de plastique ou de caoutchouc et/ou étant compressible et/ou étant élastique, ou la broche filetée (105) présentant un renfoncement radialement périphérique (259) pour recevoir le moyen de blocage (264) et/ou étant un moyen de centrage, et/ou **en ce que** le moyen de blocage (260) est un moyen de centrage, qui est réalisé sous forme de douille (260) dont le diamètre intérieur est réalisé de telle sorte que la broche filetée (105) soit bloquée dans le moyen de centrage, et dont le diamètre extérieur est réalisé de telle sorte que la douille soit bloquée dans une ouverture correspondante (106) du composant (130), et la hauteur du moyen de centrage en association avec le diamètre intérieur et/ou le diamètre extérieur de la douille (260) sont dimensionnés de telle sorte que le moyen de centrage et la broche filetée (105) soit retenus au moins à l'encontre de la force de pesanteur dans l'ouverture (106).

4. Poutre porteuse pour le transport et le montage de composants d'installations éolienne (130, 168, 197, 200) comprenant un élément d'appui (123) sur lequel est disposé au moins un guide (124), avec un embout (125) qui est connecté à l'élément d'appui (123), l'embout (125) présentant un élément de connexion (126, 128) qui correspond à l'élément de guidage (107) et/ou au corps de réception (112) du dispositif de connexion selon l'une quelconque des revendications 1 à 3.

5. Poutre porteuse selon la revendication 4, **caractérisée en ce que** l'embout (125) est connecté à l'élément de réception (123) par le biais d'un élément (127) pouvant coulisser par rapport à l'élément de réception (123) de telle sorte que la longueur de la poutre porteuse (121, 122) puisse être ajustée en fonction du diamètre des composants (130, 168, 187, 200) de l'éolienne, et/ou **en ce qu'**un élément de connexion (129) est prévu au niveau de l'embout (125), au niveau duquel un moyen de levage (134), par exemple d'une grue (151) peut être monté, l'embout (125) étant de préférence réalisé de telle sorte que le moyen de levage (134) puisse être déplacé par un mouvement de rotation par rapport à l'élément de connexion (129) .

6. Cadre de transport pour recevoir un composant (130, 168, 197, 200) d'une éolienne comprenant un élément mâle ou un élément femelle (101, 102) du dispositif de connexion (100) selon l'une quelconque des revendications 1 à 3.

7. Cadre de transport pour recevoir un composant (130, 168, 197, 200) d'une éolienne comprenant un élément de réception (140) pour recevoir une poutre de transport selon la revendication 4 ou 5.

8. Cadre de transport selon la revendication 7, **caractérisé en ce que** l'élément d'appui (123) peut être inséré dans l'élément de réception (140), l'élément de réception (140) présentant une portion pour recevoir le guide (124) en le retenant.

9. Cadre de transport selon l'une quelconque des revendications 6 à 8, **caractérisé en ce que** le cadre de transport (135, 142, 169, 171, 180, 196) présente un élément de base (136, 143, 159, 181, 202) qui peut être connecté de manière amovible par le biais d'un moyen de connexion (139), de préférence un verrou tournant, à un logement (166) d'un élément situé en dessous et/ou **en ce que** le logement (140) sur le cadre de transport (135, 142, 169, 171, 180, 196) peut être déplacé verticalement et/ou horizontalement (164) et/ou **en ce que** l'élément de base (136, 143, 159, 181, 200) peut être disposé de manière déplaçable (163, 172, 192) sur un élément de base (158) et/ou sur un élément situé en dessous de lui.

10. Cadre de transport selon l'une quelconque des revendications 6 à 9, **caractérisé en ce que** le cadre de transport (135, 142, 169, 171, 180, 196) présente un support (189) et/ou un élément de palier (188) pour recevoir de manière amovible un élément de rotor (168) et/ou **en ce que** le cadre de transport (171, 180) est construit au moins en deux parties (208, 209) , les parties pouvant être détachées l'une de l'autre et la connexion amovible pouvant être établie par le biais d'un moyen de connexion (139), de préférence un verrou tournant.

11. Système de transport pour le transport de composants (130, 168, 197, 200) d'une éolienne, comprenant un dispositif de connexion (100) selon l'une quelconque des revendications 1 à 3, une poutre de transport (121, 122) selon la revendication 4 ou 5 et/ou un cadre de transport (135, 142, 169, 171, 180, 196) selon l'une quelconque des revendications 6 à 10.

12. Système de montage pour le montage de composants (130, 168, 197, 200) d'une éolienne comprenant un dispositif de connexion (100) selon l'une quelconque des revendications 1 à 3 et/ou une poutre de transport (121, 122) selon la revendication 4 ou 5.

13. Procédé de transport et de montage de composants (130, 168, 197, 200) d'une éolienne, comprenant les étapes suivantes : prévoir un élément (101, 102) d'un dispositif de connexion (100) selon l'une quelconque des revendications 1 à 3 sur un composant (130, 168, 197, 200) d'une éolienne, connecter l'élément (101, 102) à une poutre porteuse correspondante (121, 122) selon la revendication 4 ou 5, et disposer la poutre porteuse (121, 122) un cadre porteur correspondant (135, 142, 169, 171, 180, 196) selon l'une quelconque des revendications 6 à 10 ou à un cadre porteur correspondant (135, 142, 169, 171, 180, 196) et charger le composant (130, 168, 197, 200) sur un moyen de transport (152, 155), transporter le composant (130, 168, 197, 200) ainsi chargé avec un moyen de transport (152, 155) jusqu'au lieu de construction (144), recevoir le composant (130, 168, 197, 200) avec une grue (151) par montage d'un moyen de levage (134) sur la poutre de transport (121, 122) et/ou sur un élément au niveau du composant (130, 168, 197, 200), disposer le composant (130, 168, 197, 200) par rapport à l'éolienne de telle sorte que l'élément (101, 102) du composant (130, 168, 197, 200) soit en regard sur un élément correspondant (101, 102) sur un composant déjà monté, centrer les éléments (101, 102) par introduction de la broche de guidage (108) de l'élément de guidage (107) dans le corps de réception (112), introduire la broche de guidage (108) dans le corps de réception (112) jusqu'à ce que les éléments (101, 102) viennent s'appliquer les uns contre les autres, et connecter les éléments (101, 102) à des moyens de connexion appropriés (105, 119, 120, 167).

14. Procédé selon la revendication 13, **caractérisé en ce qu'**un verrouillage (113) s'encliquète dans la broche de guidage (108), ce qui produit une connexion de retenue provisoire des composants à monter au composant déjà monté.

15. Procédé selon la revendication 14, **caractérisé en ce que** le moyen de levage (134) et/ou la poutre de transport (121, 122), après que la connexion de retenue provisoire a été réalisée par le verrouillage (113), est desserré(e) avant ou pendant que les composants sont connectés à des moyens de connexion (105, 119, 120, 167).
